(19) Europäisches Patentamt
European Patent Office
Office européen des brevets

(11) **EP 4 319 204 A1**

(12) **EUROPEAN PATENT APPLICATION**
published in accordance with Art. 153(4) EPC

(43) Date of publication:
**07.02.2024 Bulletin 2024/06**

(21) Application number: **22778434.5**

(22) Date of filing: **28.02.2022**

(51) International Patent Classification (IPC):
***H04W 4/02*** *(2018.01)*

(52) Cooperative Patent Classification (CPC):
**H04W 4/02**

(86) International application number:
**PCT/CN2022/078262**

(87) International publication number:
**WO 2022/206249 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.04.2021 CN 202110358440**

(71) Applicant: **Datang Mobile Communications Equipment Co., Ltd.**
**Beijing 100085 (CN)**

(72) Inventors:
• **REN, Xiaotao**
**Beijing 100085 (CN)**
• **REN, Bin**
**Beijing 100085 (CN)**
• **DA, Ren**
**Beijing 100085 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **INFORMATION PROCESSING METHOD AND APPARATUS, AND TERMINAL AND NETWORK-SIDE DEVICE**

(57)     An information processing method, an apparatus, a terminal, and a network-side device are provided. The information processing method includes: receiving at least one measured value instance which is fed back by a terminal and/or a second network-side device according to information of a measurement time window; determining position information of the terminal according to the at least one measured value instance; where the information of the measurement time window includes terminal measurement time window information and/or second network-side device measurement time window information; the first network-side device is a positioning server or other network element capable of determining the position information of the terminal except the positioning server; the second network-side device is a base station or a TRP.

receiving at least one measured value instance which is fed back by a terminal and/or a second network-side device according to information of a measurement time window — 21

determining position information of the terminal according to the at least one measured value instance; where the information of the measurement time window includes terminal measurement time window information and/or second network-side device measurement time window information; the first network-side device is a positioning server or other network element capable of determining the position information of the terminal except the positioning server; the second network-side device is a base station or a TRP — 22

**Fig. 2**

## Description

## CROSS REFERENCE OF RELATED APPLICATION

The present disclosure claims a priority of Chinese patent disclosure No. 202110358440.4 filed on April 1, 2021, which is incorporated herein by reference in its entirety.

## TECHNICAL FIELD

The present disclosure relates to the field of communication technologies, and in particular, to an information processing method, an apparatus, a terminal, and a network-side device.

## BACKGROUND

In the positioning methods in the related art, the Multi Round Trip Time (Multi-RTT) positioning method is an important positioning method, and the working principle of the Multi-RTT positioning method is: a User Equipment (UE) reports the obtained UE sending and receiving time difference to a Location Management Function (LMF), and each Transmit Receive Point (TRP), i.e., the transmission point, also provides the obtained 5th-Generation (5G) base station (gNB) sending and receiving time difference to the LMF, and then the LMF uses the UE's sending and receiving time difference and the gNB's sending and receiving time difference to obtain the distance between the UE and each TRP, and then other known information (such as the geographic coordinates of the TRP) is also used, to calculate the position of the UE.

As mentioned above, for the Multi-RTT positioning method, in order to perform the measurement of the UE sending and receiving time difference or the gNB sending and receiving time difference, it is necessary for the TRP to send the Downlink Positioning Reference Signals (DL-PRS) and the UE to send the Sounding Reference Signal for Positioning (SRS-Pos), and then the UE or gNB can complete the measurement of related measured values based on DL-PRS and SRS-Pos. At present, when calculating positioning time measurements such as the UE sending and receiving time difference or gNB sending and receiving time difference, it is assumed that the time measurement is performed at the antenna connector, but in fact, the time measurement location of the signal is at the baseband unit, so there may be time measurement errors, which exist for both signal transmission and signal reception, and are called sending and receiving timing errors. Due to the sending and receiving timing errors, the measurement results of all time-based positioning measurements including measurements of the UE sending and receiving time difference and gNB sending and receiving time difference may be inaccurate, thus affecting the final positioning accuracy. Moreover, the sending and receiving timing error is time-varying, that is, measured values at different times have different sending and receiving timing errors.

However, in related art, the time points when UE measures DL-PRS and gNB measures SRS-Pos may be far apart, resulting in a large difference in the sending and receiving timing errors of the two measured values, which is not conducive for the LMF or UE to estimate or eliminate the sending and receiving timing error when calculating the UE position, which affects the final UE positioning accuracy.

It can be seen from the above that there are problems such as poor precision in the positioning-related information processing methods in the related art.

## SUMMARY

The present disclosure is to provide an information processing method, an apparatus, a terminal, and a network-side device, so as to solve the problem of poor accuracy of positioning-related information processing methods in related art.

In order to solve the above technical issues, an embodiment of the present disclosure provides an information processing method, applied to a first network-side device, including:

receiving at least one measured value instance which is fed back by a terminal and/or a second network-side device according to information of a measurement time window;

determining position information of the terminal according to the at least one measured value instance;

where the information of the measurement time window includes terminal measurement time window information and/or second network-side device measurement time window information;

the first network-side device is a positioning server or other network element capable of determining the position information of the terminal except the positioning server; the second network-side device is a base station or a Transmit and Receive Point (TRP).

Optionally, the method further includes:
sending the information of the measurement time window to the terminal and/or the second network-side device.

Optionally, the terminal measurement time window information includes time window information for the terminal to measure a Downlink Positioning Reference Signal (DL-PRS) and/or time window information for the terminal to measure other downlink reference signals for positioning except the DL-PRS; and/or
the second network-side device measurement time window information includes time window information for the second network-side device to measure a Sounding Reference Signal for Positioning (SRS-Pos) and/or time window information for the second network-side device to measure other uplink reference signals for positioning except the SRS-Pos.

Optionally, the receiving the at least one measured value instance which is fed back by the terminal and/or the second network-side device according to the information of the measurement time window includes:

receiving the at least one measured value instance and a time stamp corresponding to the measured value instance which are fed back by the terminal and/or the second network-side device according to the information of the measurement time window;

the determining the position information of the terminal according to the at least one measured value instance includes:

obtaining the position information of the terminal according to the at least one measured value instance and the time stamp corresponding to the measured value instance.

Optionally, the at least one measured value instance includes: a terminal measured value instance and/or a second network-side device measured value instance;

where the terminal measured value instance includes: a Downlink Reference Signal Time Difference (DL-RSTD), a Downlink Reference Signal Received Power (DL-RSRP), and/or a terminal sending and receiving time difference; and/or,

the second network-side device measured value instance includes: an Uplink Time Difference Of Arrival (UL-RTOA), an Uplink Reference Signal Received Power (UL-RSRP), and/or a second network-side device sending and receiving time difference.

Optionally, the information of the measurement time window includes a duration of the measurement time window; or

the information of the measurement time window includes a duration and a start time of the measurement time window; or

the information of the measurement time window includes a start time and an end time of the measurement time window.

Optionally, the information of the measurement time window includes Universal Time Coordinated (UTC) information; and/or

the information of the measurement time window includes System Frame Number (SFN) information and slot number information.

Optionally, the information of the measurement time window includes a measurement time window index number;

where the measurement time window index number corresponds to a set of parameter information of the measurement time window;

the parameter information includes a duration of the measurement time window; or a duration and a start time of the measurement time window; or a start time and an end time of the measurement time window.

Optionally, the duration of the measurement time window corresponding to the terminal measurement time window information is the same as the duration of the measurement time window corresponding to the second network-side device measurement time window information; or

the measurement time window index number corresponding to the terminal measurement time window information is the same as the measurement time window index number corresponding to the second network-side device measurement time window information.

Optionally, the information of the measurement time window includes at least one of:

a parameter J, where the parameter J represents a quantity of terminal measured value instances within one terminal measurement time window, $J \geq 1$;

a parameter $N_i$, where the parameter $N_i$ represents a quantity of DL-PRS resource set instances or DL-PRS measurement occasions configured for an i-th terminal measured value instance, $N_i \geq 1$;

a parameter K, where the parameter K represents a quantity of second network-side device measured value instances within one second network-side device measurement time window, $K \geq 1$; and

a parameter $M_i$, where the parameter $M_i$ represents a quantity of SRS-Pos resource set instances or SRS-Pos measurement occasions configured for an i-th second network-side device measured value instance, $M_i \geq 1$.

Optionally, the terminal measurement time window information includes a measurement time window duration $MTW_{UE}$ for periodic or semi-persistent DL-PRS;

where

$$MTW_{UE} = PD_{DL-PRS} \times \sum_{i=1}^{J_P} N_{Pi};$$

$PD_{DL-PRS}$ represents a period of DL-PRS;

$J_P$ represents a quantity of terminal measured value instances within one terminal measurement time window, $J_P \geq 1$; and

$N_{Pi}$ represents a quantity of DL-PRS resource set instances or DL-PRS measurement occasions configured for an i-th terminal measured value instance, $N_{Pi} \geq 1$.

Optionally, the second network-side device measurement time window information includes a measurement time window duration $MTW_{TRP}$ for periodic or semi-persistent SRS-Pos;

where

$$MTW_{TRP} = PD_{SRS-Pos} \times \sum_{i=1}^{K_P} M_{Pi};$$

$PD_{SRS-Pos}$ represents a period of SRS-Pos;
$K_P$ represents a quantity of second network-side device measured value instances within one second network-side device measurement time window, $K_P \geq 1$; and
$M_{Pi}$ represents a quantity of SRS-Pos resource set instances or SRS-Pos measurement occasions configured for an i-th second network-side device measured value instance, $M_{Pi} \geq 1$.

Optionally, the terminal measurement time window information includes a measurement time window duration $MTW'_{UE}$ for aperiodic DL-PRS;
where

$$MTW'_{UE} = LH_{DL-PRS} \times \sum_{i=1}^{J_A} N_{Ai};$$

$LH_{DL-PRS}$ represents a duration or a quantity of time slots occupied by an aperiodic DL-PRS resource set or DL-PRS measurement occasion;
$J_A$ represents a quantity of UE measured value instances within one terminal measurement time window, $J_A \geq 1$; and
$N_{Ai}$ represents a quantity of DL-PRS resource set instances or DL-PRS measurement occasions configured for an i-th terminal measured value instance, $N_{Ai} \geq 1$.

Optionally, one aperiodic DL-PRS measurement occasion corresponds to one aperiodic DL-PRS resource set instance.

Optionally, the second network-side device measurement time window information includes a measurement time window duration $MTW'_{TRP}$ for aperiodic SRS-Pos;
where

$$MTW'_{TRP} = LH_{SRS-Pos} \times \sum_{i=1}^{K_A} M_{Ai};$$

$LH_{SRS-Pos}$ represents a duration or a quantity of time slots occupied by an aperiodic SRS-Pos resource set or SRS-Pos measurement occasion;
$K_A$ represents a quantity of second network-side device measured value instances within one second network-side device measurement time window, $K_A \geq 1$; and
$M_{Ai}$ represents a quantity of SRS-Pos resource set instances or SRS-Pos measurement occasions configured for an i-th second network-side device measured value instance, $M_{Ai} \geq 1$.

Optionally, the measurement time window corresponding to the terminal measurement time window information includes at least two DL-PRS resource set instances located in different frequency layers; and/or the measurement time window corresponding to the second network-side device measurement time window information includes at least two SRS-Pos resource set instances located in different Uplink Bandwidth Parts (UL BWP).

Optionally, the sending the information of the measurement time window to the terminal includes:

directly sending the information of the measurement time window to the terminal; or,
sending the information of the measurement time window to the terminal in response to a first request sent by the terminal; or,
sending the information of the measurement time window to the terminal according to the capability information of the terminal.

Optionally, the sending the information of the measurement time window to the second network-side device includes:

directly sending the information of the measurement time window to the second network-side device; or,
sending the information of the measurement time window to the second network-side device in response to a second request sent by the second network-side device.

Optionally, the sending the information of the measurement time window to the terminal and/or the second network-side device includes:

sending the information of the measurement time window to the terminal through a Long Term Evolution Positioning Protocol (LPP) signaling; and/or,
sending the information of the measurement time window to the second network-side device through a New Radio Positioning Protocol A (NRPPa) signaling.

Optionally, when the terminal measurement time window information includes measurement window information for aperiodic DL-PRS, prior to the sending the information of the measurement time window to the terminal and/or the second network-side device, the method further includes:

configuring the measurement window information for aperiodic DL-PRS according to first information;
where the first information includes aperiodic DL-PRS resource information, aperiodic DL-PRS resource set information and/or aperiodic DL-PRS resource set instance information.

Optionally, one aperiodic DL-PRS resource set includes at least one aperiodic DL-PRS resource; and/or

one aperiodic DL-PRS resource set instance includes at least one aperiodic DL-PRS resource set, and when a quantity of the aperiodic DL-PRS resource set is more than one, all of the aperiodic DL-PRS resource sets are the same, and the aperiodic DL-PRS resource sets are sent at different times.

An information processing method is further provided in an embodiment of the present disclosure, applied to a terminal, including:

> obtaining information of a measurement time window;
> measuring a first positioning signal within the corresponding measurement time window according to the information of the measurement time window, to obtain at least one measured value instance; and sending the at least one measured value instance to a first network-side device;
> where the information of the measurement time window includes terminal measurement time window information;
> the first network-side device is a positioning server or other network element capable of determining position information of the terminal except the positioning server.

Optionally, the sending the at least one measured value instance to the first network-side device includes:

> sending at least one measurement report to the first network-side device within a measurement time window corresponding to the terminal measurement time window information;
> where the measurement report carries at least one measured value instance.

Optionally, the obtaining the information of the measurement time window includes:

> receiving the information of the measurement time window sent by the first network-side device; or configuring the information of the measurement time window autonomously by the terminal.

Optionally, the obtaining the information of the measurement time window further includes:

> obtaining the information of the measurement time window of different second network-side devices;
> where the information of the measurement time window of different second network-side devices is the same or different.

Optionally, the terminal measurement time window information includes time window information for the terminal to measure a Downlink Positioning Reference Signal (DL-PRS) and/or time window information for the terminal to measure other downlink reference signals for positioning except the DL-PRS; the first positioning signal includes a DL-PRS and/or the other downlink reference signals for positioning.

Optionally, the sending the at least one measured value instance to the first network-side device includes:

sending the at least one measured value instance and a time stamp corresponding to the measured value instance to the first network-side device.

Optionally, the at least one measured value instance includes a terminal measured value instance; where the terminal measured value instance includes: a Downlink Reference Signal Time Difference (DL-RSTD), a Downlink Reference Signal Received Power (DL-RSRP), and/or a terminal sending and receiving time difference.

Optionally, the information of the measurement time window includes a duration of the measurement time window; or

> the information of the measurement time window includes a duration and a start time of the measurement time window; or
> the information of the measurement time window includes a start time and an end time of the measurement time window.

Optionally, the information of the measurement time window includes Universal Time Coordinated (UTC) information; and/or
the information of the measurement time window includes System Frame Number (SFN) information and slot number information.

Optionally, the information of the measurement time window includes a measurement time window index number;

> where the measurement time window index number corresponds to a set of parameter information of the measurement time window;
> the parameter information includes a duration of the measurement time window, or a duration and a start time of the measurement time window, or a start time and an end time of the measurement time window.

Optionally, the duration of the measurement time window corresponding to the terminal measurement time window information is the same as the duration of the measurement time window corresponding to the second network-side device measurement time window information; or
the measurement time window index number corresponding to the terminal measurement time window information is the same as the measurement time window index number corresponding to the second network-side device measurement time window information.

Optionally, the information of the measurement time window includes at least one of:

a parameter J, where the parameter J represents a quantity of terminal measured value instances within one terminal measurement time window, J≥1;
a parameter $N_i$, where the parameter $N_i$ represents a quantity of DL-PRS resource set instances or DL-PRS measurement occasions configured for an i-th terminal measured value instance, $N_i$≥1;
a parameter K, where the parameter K represents a quantity of second network-side device measured value instances within one second network-side device measurement time window, K≥1; and
a parameter $M_i$, where the parameter $M_i$ represents a quantity of SRS-Pos resource set instances or SRS-Pos measurement occasions configured for an i-th second network-side device measured value instance, $M_i$≥1.

Optionally, the terminal measurement time window information includes a measurement time window duration $MTW_{UE}$ for periodic or semi-persistent DL-PRS; where

$$MTW_{UE} = PD_{DL-PRS} \times \sum_{i=1}^{J_P} N_{Pi};$$

$PD_{DL-PRS}$ represents a period of DL-PRS;
$J_P$ represents a quantity of terminal measured value instances within one terminal measurement time window, $J_P$≥1; and
$N_{Pi}$ represents a quantity of DL-PRS resource set instances or DL-PRS measurement occasions configured for an i-th terminal measured value instance, $N_{Pi}$≥1.

Optionally, the terminal measurement time window information includes a measurement time window duration $MTW'_{UE}$ for aperiodic DL-PRS; where

$$MTW'_{UE} = LH_{DL-PRS} \times \sum_{i=1}^{J_A} N_{Ai};$$

$LH_{DL-PRS}$ represents a duration or a quantity of time slots occupied by an aperiodic DL-PRS resource set or DL-PRS measurement occasion;
$J_A$ represents a quantity of UE measured value instances within one terminal measurement time window, $J_A$≥1; and
$N_{Ai}$ represents a quantity of DL-PRS resource set instances or DL-PRS measurement occasions configured for an i-th terminal measured value instance, $N_{Ai}$≥1.

Optionally, one aperiodic DL-PRS measurement occasion corresponds to one aperiodic DL-PRS resource set instance.

Optionally, the measurement time window corresponding to the terminal measurement time window information includes at least two DL-PRS resource set instances located in different frequency layers.
Optionally, the receiving the information of the measurement time window sent by the first network-side device includes:

receiving the information of the measurement time window directly sent by the first network-side device; or,
sending a first request to the first network-side device; receiving the information of the measurement time window sent by the first network-side device in response to the first request; or,
sending capability information of the terminal to the first network-side device, and receiving the information of the measurement time window sent by the first network-side device in response to the capability information.

Optionally, the receiving the information of the measurement time window sent by the first network-side device includes:
receiving the information of the measurement time window sent by the first network-side device through a Long Term Evolution Positioning Protocol (LPP) signaling.
Optionally, when the terminal measurement time window information includes measurement window information for aperiodic DL-PRS, the configuring the information of the measurement time window autonomously by the terminal includes:

configuring the measurement window information for aperiodic DL-PRS according to first information;
where the first information includes aperiodic DL-PRS resource information, aperiodic DL-PRS resource set information and/or aperiodic DL-PRS resource set instance information.

Optionally, one aperiodic DL-PRS resource set includes at least one aperiodic DL-PRS resource; and/or one aperiodic DL-PRS resource set instance includes at least one aperiodic DL-PRS resource set, and when a quantity of the aperiodic DL-PRS resource set is more than one, all of the aperiodic DL-PRS resource sets are the same, and the aperiodic DL-PRS resource sets are sent at different times.
Optionally, whether the terminal is capable of being configured with a measurement time window corresponding to the terminal measurement time window information and measuring the first positioning signal within the measurement time window is a terminal capability.
An information processing method is further provided in an embodiment of the present disclosure, applied to a second network-side device, including:

receiving information of a measurement time window sent by a first network-side device;

measuring a second positioning signal within the corresponding measurement time window according to the information of the measurement time window, to obtain at least one measured value instance; and

sending the at least one measured value instance to a first network-side device;

where the information of the measurement time window includes second network-side device measurement time window information;

the first network-side device is a positioning server or other network element capable of determining position information of the terminal except the positioning server; the second network-side device is a base station or a Transmit and Receive Point (TRP).

Optionally, the sending the at least one measured value instance to the first network-side device includes:

sending at least one measurement report to the first network-side device within a measurement time window corresponding to the second network-side device measurement time window information;

where the measurement report carries at least one measured value instance.

Optionally, the receiving the information of the measurement time window sent by the first network-side device includes:

receiving the information of the measurement time window of different terminals sent by the first network-side device;

where the information of the measurement time window of different terminals is the same or different.

Optionally, the second network-side device measurement time window information includes time window information for the network-side device to measure a Sounding Reference Signal for Positioning (SRS-Pos) and/or time window information for the network-side device to measure other uplink reference signals for positioning except the SRS-Pos; the second positioning signal includes SRS-Pos and/or the other uplink reference signals for positioning.

Optionally, the sending the at least one measured value instance to the first network-side device includes:

sending the at least one measured value instance and a time stamp corresponding to the measured value instance to the first network-side device.

Optionally, the at least one measured value instance includes a second network-side device measured value instance;

where the second network-side device measured value instance includes: an Uplink Time Difference Of Arrival (UL-RTOA), an Uplink Reference Signal Received Power (UL-RSRP), and/or a second network-side device sending and receiving time difference.

Optionally, the information of the measurement time window includes a duration of the measurement time window; or

the information of the measurement time window includes a duration and a start time of the measurement time window; or

the information of the measurement time window includes a start time and an end time of the measurement time window.

Optionally, the information of the measurement time window includes Universal Time Coordinated (UTC) information; and/or

the information of the measurement time window includes System Frame Number (SFN) information and slot number information.

Optionally, the information of the measurement time window includes a measurement time window index number;

where the measurement time window index number corresponds to a set of parameter information of the measurement time window;

the parameter information includes a duration of the measurement time window; or a duration and a start time of the measurement time window; or a start time and an end time of the measurement time window.

Optionally, the duration of the measurement time window corresponding to the terminal measurement time window information is the same as the duration of the measurement time window corresponding to the second network-side device measurement time window information; or

the measurement time window index number corresponding to the terminal measurement time window information is the same as the measurement time window index number corresponding to the second network-side device measurement time window information.

Optionally, the information of the measurement time window includes at least one of:

a parameter J, where the parameter J represents a quantity of terminal measured value instances within one terminal measurement time window, $J \geq 1$;

a parameter $N_i$, where the parameter $N_i$ represents a quantity of DL-PRS resource set instances or DL-PRS measurement occasions configured for an i-th terminal measured value instance, $N_i \geq 1$;

a parameter K, where the parameter K represents a quantity of second network-side device measured value instances within one second network-side device measurement time window, $K \geq 1$; and

a parameter $M_i$, where the parameter $M_i$ represents

a quantity of SRS-Pos resource set instances or SRS-Pos measurement occasions configured for an i-th second network-side device measured value instance, $M_i \geq 1$.

Optionally, the second network-side device measurement time window information includes a measurement time window duration $MTW_{TRP}$ for periodic or semi-persistent SRS-Pos;
where

$$MTW_{TRP} = PD_{SRS-Pos} \times \sum_{i=1}^{K_P} M_{Pi};$$

$PD_{SRS-Pos}$ represents a period of SRS-Pos;
$K_P$ represents a quantity of second network-side device measured value instances within one second network-side device measurement time window, $K_P \geq 1$; and
$M_{Pi}$ represents a quantity of SRS-Pos resource set instances or SRS-Pos measurement occasions configured for an i-th second network-side device measured value instance, $M_{Pi} \geq 1$.

Optionally, the second network-side device measurement time window information includes a measurement time window duration $MTW'_{TRP}$ for aperiodic SRS-Pos;
where

$$MTW'_{TRP} = LH_{SRS-Pos} \times \sum_{i=1}^{K_A} M_{Ai};$$

$LH_{SRS-Pos}$ represents a duration or a quantity of time slots occupied by an aperiodic SRS-Pos resource set or SRS-Pos measurement occasion;
$K_A$ represents a quantity of second network-side device measured value instances within one second network-side device measurement time window, $K_A \geq 1$; and
$M_{Ai}$ represents a quantity of SRS-Pos resource set instances or SRS-Pos measurement occasions configured for an i-th second network-side device measured value instance, $M_{Ai} \geq 1$.

Optionally, the measurement time window corresponding to the second network-side device measurement time window information includes at least two SRS-Pos resource set instances located in different Uplink Bandwidth Parts (UL BWP).

Optionally, the receiving the information of the measurement time window sent by the first network-side device includes:

receiving the information of the measurement time window directly sent by the first network-side device;
or,
sending a second request to the first network-side device, receiving the information of the measurement time window sent by the first network-side device in response to the second request.

Optionally, the receiving the information of the measurement time window sent by the first network-side device includes:
receiving the information of the measurement time window sent by the first network-side device through a New Radio Positioning Protocol A (NRPPa) signaling.

A network-side device is further provided in an embodiment of the present disclosure, where the network-side device is a first network-side device, and includes a memory, a transceiver, and a processor;

where the memory is configured to store computer programs; the transceiver is configured to send and receive data under a control of the processor; the processor is configured to read the computer programs in the memory to perform the following operations:
receiving, through the transceiver, at least one measured value instance which is fed back by a terminal and/or a second network-side device according to information of a measurement time window;
determining position information of the terminal according to the at least one measured value instance;
where the information of the measurement time window includes terminal measurement time window information and/or second network-side device measurement time window information;
the first network-side device is a positioning server or other network element capable of determining the position information of the terminal except the positioning server; the second network-side device is a base station or a Transmit and Receive Point (TRP).

Optionally, the operations further include:
sending, through the transceiver, the information of the measurement time window to the terminal and/or the second network-side device.

Optionally, the terminal measurement time window information includes time window information for the terminal to measure a Downlink Positioning Reference Signal (DL-PRS) and/or time window information for the terminal to measure other downlink reference signals for positioning except the DL-PRS; and/or
the second network-side device measurement time window information includes time window information for the second network-side device to measure a Sounding Reference Signal for Positioning (SRS-Pos) and/or time window information for the second network-side device to measure other uplink reference signals for positioning except the SRS-Pos.

Optionally, the receiving the at least one measured value instance which is fed back by the terminal and/or the second network-side device according to the information of the measurement time window includes:

receiving the at least one measured value instance and a time stamp corresponding to the measured value instance which are fed back by the terminal and/or the second network-side device according to the information of the measurement time window;

the determining the position information of the terminal according to the at least one measured value instance includes:

obtaining the position information of the terminal according to the at least one measured value instance and the time stamp corresponding to the measured value instance.

Optionally, the at least one measured value instance includes: a terminal measured value instance and/or a second network-side device measured value instance;

where the terminal measured value instance includes: a Downlink Reference Signal Time Difference (DL-RSTD), a Downlink Reference Signal Received Power (DL-RSRP), and/or a terminal sending and receiving time difference; and/or,

the second network-side device measured value instance includes: an Uplink Time Difference Of Arrival (UL-RTOA), an Uplink Reference Signal Received Power (UL-RSRP), and/or a second network-side device sending and receiving time difference.

Optionally, the information of the measurement time window includes a duration of the measurement time window; or

the information of the measurement time window includes a duration and a start time of the measurement time window; or
the information of the measurement time window includes a start time and an end time of the measurement time window.

Optionally, the information of the measurement time window includes Universal Time Coordinated (UTC) information; and/or
the information of the measurement time window includes System Frame Number (SFN) information and slot number information.

Optionally, the information of the measurement time window includes a measurement time window index number;

where the measurement time window index number corresponds to a set of parameter information of the measurement time window;
the parameter information includes a duration of the measurement time window; or a duration and a start time of the measurement time window; or a start time and an end time of the measurement time window.

Optionally, the duration of the measurement time window corresponding to the terminal measurement time window information is the same as the duration of the measurement time window corresponding to the second network-side device measurement time window information; or

the measurement time window index number corresponding to the terminal measurement time window information is the same as the measurement time window index number corresponding to the second network-side device measurement time window information.

Optionally, the information of the measurement time window includes at least one of:

a parameter J, where the parameter J represents a quantity of terminal measured value instances within one terminal measurement time window, $J \geq 1$;
a parameter $N_i$, where the parameter $N_i$ represents a quantity of DL-PRS resource set instances or DL-PRS measurement occasions configured for an i-th terminal measured value instance, $N_i \geq 1$;
a parameter K, where the parameter K represents a quantity of second network-side device measured value instances within one second network-side device measurement time window, $K \geq 1$; and
a parameter $M_i$, where the parameter $M_i$ represents a quantity of SRS-Pos resource set instances or SRS-Pos measurement occasions configured for an i-th second network-side device measured value instance, $M_i \geq 1$.

Optionally, the terminal measurement time window information includes a measurement time window duration $MTW_{UE}$ for periodic or semi-persistent DL-PRS; where

$$MTW_{UE} = PD_{DL-PRS} \times \sum_{i=1}^{J_P} N_{Pi};$$

$PD_{DL-PRS}$ represents a period of DL-PRS;
$J_P$ represents a quantity of terminal measured value instances within one terminal measurement time window, $J_P \geq 1$; and
$N_{Pi}$ represents a quantity of DL-PRS resource set instances or DL-PRS measurement occasions configured for an i-th terminal measured value instance, $N_{Pi} \geq 1$.

Optionally, the second network-side device measurement time window information includes a measurement time window duration $MTW_{TRP}$ for periodic or semi-persistent SRS-Pos; where

$$MTW_{TRP} = PD_{SRS-Pos} \times \sum_{i=1}^{K_P} M_{Pi};$$

$PD_{SRS-Pos}$ represents a period of SRS-Pos;

$K_P$ represents a quantity of second network-side device measured value instances within one second network-side device measurement time window, $K_P \geq 1$; and

$M_{Pi}$ represents a quantity of SRS-Pos resource set instances or SRS-Pos measurement occasions configured for an i-th second network-side device measured value instance, $M_{Pi} \geq 1$.

Optionally, the terminal measurement time window information includes a measurement time window duration $MTW'_{UE}$ for aperiodic DL-PRS; where

$$MTW'_{UE} = LH_{DL-PRS} \times \textstyle\sum_{i=1}^{J_A} N_{Ai};$$

$LH_{DL-PRS}$ represents a duration or a quantity of time slots occupied by an aperiodic DL-PRS resource set or DL-PRS measurement occasion;

$J_A$ represents a quantity of UE measured value instances within one terminal measurement time window, $J_A \geq 1$; and

$N_{Ai}$ represents a quantity of DL-PRS resource set instances or DL-PRS measurement occasions configured for an i-th terminal measured value instance, $N_{Ai} \geq 1$.

Optionally, one aperiodic DL-PRS measurement occasion corresponds to one aperiodic DL-PRS resource set instance.

Optionally, the second network-side device measurement time window information includes a measurement time window duration $MTW'_{TRP}$ for aperiodic SRS-Pos; where

$$MTW'_{TRP} = LH_{SRS-Pos} \times \textstyle\sum_{i=1}^{K_A} M_{Ai};$$

$LH_{SRS-Pos}$ represents a duration or a quantity of time slots occupied by an aperiodic SRS-Pos resource set or SRS-Pos measurement occasion;

$K_A$ represents a quantity of second network-side device measured value instances within one second network-side device measurement time window, $K_A \geq 1$; and

$M_{Ai}$ represents a quantity of SRS-Pos resource set instances or SRS-Pos measurement occasions configured for an i-th second network-side device measured value instance, $M_{Ai} \geq 1$.

Optionally, the measurement time window corresponding to the terminal measurement time window information includes at least two DL-PRS resource set instances located in different frequency layers; and/or the measurement time window corresponding to the second network-side device measurement time window information includes at least two SRS-Pos resource set instances located in different Uplink Bandwidth Parts (UL BWP).

Optionally, the sending the information of the measurement time window to the terminal includes:

directly sending, through the transceiver, the information of the measurement time window to the terminal; or,

sending, through the transceiver, the information of the measurement time window to the terminal in response to a first request sent by the terminal; or,

sending, through the transceiver, the information of the measurement time window to the terminal according to the capability information of the terminal.

Optionally, the sending the information of the measurement time window to the second network-side device includes:

directly sending, through the transceiver, the information of the measurement time window to the second network-side device; or,

sending, through the transceiver, the information of the measurement time window to the second network-side device in response to a second request sent by the second network-side device.

Optionally, the sending the information of the measurement time window to the terminal and/or the second network-side device includes:

sending, through the transceiver, the information of the measurement time window to the terminal through a Long Term Evolution Positioning Protocol (LPP) signaling; and/or,

sending, through the transceiver, the information of the measurement time window to the second network-side device through a New Radio Positioning Protocol A (NRPPa) signaling.

Optionally, the operations further include:

when the terminal measurement time window information includes measurement window information for aperiodic DL-PRS, prior to the sending the information of the measurement time window to the terminal and/or the second network-side device, configuring the measurement window information for aperiodic DL-PRS according to first information; where the first information includes aperiodic DL-PRS resource information, aperiodic DL-PRS resource set information and/or aperiodic DL-PRS resource set instance information.

Optionally, one aperiodic DL-PRS resource set includes at least one aperiodic DL-PRS resource; and/or one aperiodic DL-PRS resource set instance includes at least one aperiodic DL-PRS resource set, and when a quantity of the aperiodic DL-PRS resource set is more than one, all of the aperiodic DL-PRS resource sets are the same, and the aperiodic DL-PRS resource sets are sent at different times.

A terminal is further provided in an embodiment of the present disclosure, including a memory, a transceiver, and a processor;

where the memory is configured to store computer programs; the transceiver is configured to send and receive data under a control of the processor; the processor is configured to read the computer programs in the memory to perform:
obtaining information of a measurement time window;
measuring a first positioning signal within the corresponding measurement time window according to the information of the measurement time window, to obtain at least one measured value instance; and
sending, through the transceiver, the at least one measured value instance to a first network-side device;
where the information of the measurement time window includes terminal measurement time window information;
the first network-side device is a positioning server or other network element capable of determining position information of the terminal except the positioning server.

Optionally, the sending the at least one measured value instance to the first network-side device includes:

sending at least one measurement report to the first network-side device within a measurement time window corresponding to the terminal measurement time window information;
where the measurement report carries at least one measured value instance.

Optionally, the obtaining the information of the measurement time window includes:

receiving, through the transceiver, the information of the measurement time window sent by the first network-side device; or
configuring the information of the measurement time window autonomously by the terminal.

Optionally, the obtaining the information of the measurement time window further includes:

obtaining the information of the measurement time window of different second network-side devices;
where the information of the measurement time window of different second network-side devices is the same or different.

Optionally, the terminal measurement time window information includes time window information for the terminal to measure a Downlink Positioning Reference Signal (DL-PRS) and/or time window information for the terminal to measure other downlink reference signals for positioning except the DL-PRS; the first positioning signal includes a DL-PRS and/or the other downlink reference signals for positioning.

Optionally, the sending the at least one measured value instance to the first network-side device includes:
sending, through the transceiver, the at least one measured value instance and a time stamp corresponding to the measured value instance to the first network-side device.

Optionally, the at least one measured value instance includes a terminal measured value instance;
where the terminal measured value instance includes: a Downlink Reference Signal Time Difference (DL-RSTD), a Downlink Reference Signal Received Power (DL-RSRP), and/or a terminal sending and receiving time difference.

Optionally, the information of the measurement time window includes a duration of the measurement time window; or

the information of the measurement time window includes a duration and a start time of the measurement time window; or
the information of the measurement time window includes a start time and an end time of the measurement time window.

Optionally, the information of the measurement time window includes Universal Time Coordinated (UTC) information; and/or
the information of the measurement time window includes System Frame Number (SFN) information and slot number information.

Optionally, the information of the measurement time window includes a measurement time window index number;

where the measurement time window index number corresponds to a set of parameter information of the measurement time window;
the parameter information includes a duration of the measurement time window, or a duration and a start time of the measurement time window, or a start time and an end time of the measurement time window.

Optionally, the duration of the measurement time window corresponding to the terminal measurement time window information is the same as the duration of the measurement time window corresponding to the second network-side device measurement time window information; or

the measurement time window index number corresponding to the terminal measurement time window information is the same as the measurement time window index number corresponding to the second network-side device measurement time window information.

Optionally, the information of the measurement time window includes at least one of:

a parameter J, where the parameter J represents a quantity of terminal measured value instances within one terminal measurement time window, $J \geq 1$;

a parameter $N_i$, where the parameter $N_i$ represents a quantity of DL-PRS resource set instances or DL-PRS measurement occasions configured for an i-th terminal measured value instance, $N_i \geq 1$;

a parameter K, where the parameter K represents a quantity of second network-side device measured value instances within one second network-side device measurement time window, $K \geq 1$; and

a parameter $M_i$, where the parameter $M_i$ represents a quantity of SRS-Pos resource set instances or SRS-Pos measurement occasions configured for an i-th second network-side device measured value instance, $M_i \geq 1$.

Optionally, the terminal measurement time window information includes a measurement time window duration $MTW_{UE}$ for periodic or semi-persistent DL-PRS; where

$$MTW_{UE} = PD_{DL-PRS} \times \sum_{i=1}^{J_P} N_{Pi};$$

$PD_{DL-PRS}$ represents a period of DL-PRS;
$J_P$ represents a quantity of terminal measured value instances within one terminal measurement time window, $J_P \geq 1$; and
$N_{Pi}$ represents a quantity of DL-PRS resource set instances or DL-PRS measurement occasions configured for an i-th terminal measured value instance, $N_{Pi} \geq 1$.

Optionally, the terminal measurement time window information includes a measurement time window duration $MTW'_{UE}$ for aperiodic DL-PRS; where

$$MTW'_{UE} = LH_{DL-PRS} \times \sum_{i=1}^{J_A} N_{Ai};$$

$LH_{DL-PRS}$ represents a duration or a quantity of time slots occupied by an aperiodic DL-PRS resource set or DL-PRS measurement occasion;
$J_A$ represents a quantity of UE measured value instances within one terminal measurement time window, $J_A \geq 1$; and
$N_{Ai}$ represents a quantity of DL-PRS resource set instances or DL-PRS measurement occasions configured for an i-th terminal measured value instance, $N_{Ai} \geq 1$.

Optionally, one aperiodic DL-PRS measurement occasion corresponds to one aperiodic DL-PRS resource set instance.

Optionally, the measurement time window corresponding to the terminal measurement time window information includes at least two DL-PRS resource set instances located in different frequency layers.

Optionally, the receiving the information of the measurement time window sent by the first network-side device includes:

receiving, through the transceiver, the information of the measurement time window directly sent by the first network-side device; or,

sending, through the transceiver, a first request to the first network-side device; receiving the information of the measurement time window sent by the first network-side device in response to the first request; or,

sending, through the transceiver, capability information of the terminal to the first network-side device, and receiving the information of the measurement time window sent by the first network-side device in response to the capability information.

Optionally, the receiving the information of the measurement time window sent by the first network-side device includes:
receiving, through the transceiver, the information of the measurement time window sent by the first network-side device through a Long Term Evolution Positioning Protocol (LPP) signaling.

Optionally, when the terminal measurement time window information includes measurement window information for aperiodic DL-PRS, the configuring the information of the measurement time window autonomously by the terminal includes:

configuring the measurement window information for aperiodic DL-PRS according to first information;
where the first information includes aperiodic DL-PRS resource information, aperiodic DL-PRS resource set information and/or aperiodic DL-PRS resource set instance information.

Optionally, one aperiodic DL-PRS resource set includes at least one aperiodic DL-PRS resource; and/or one aperiodic DL-PRS resource set instance includes at least one aperiodic DL-PRS resource set, and when a quantity of the aperiodic DL-PRS resource set is more than one, all of the aperiodic DL-PRS resource sets are the same, and the aperiodic DL-PRS resource sets are sent at different times.

Optionally, whether the terminal is capable of being configured with a measurement time window corresponding to the terminal measurement time window information and measuring the first positioning signal within the measurement time window is a terminal capability.

A network-side device is further provided in an embodiment of the present disclosure, where the network-side device is a second network-side device, and includes a memory, a transceiver, and a processor:

where the memory is configured to store computer programs; the transceiver is configured to send and receive data under a control of the processor; the processor is configured to read the computer programs in the memory to perform:

receiving, through the transceiver, information of a measurement time window sent by a first network-side device;

measuring a second positioning signal within the corresponding measurement time window according to the information of the measurement time window, to obtain at least one measured value instance; and

sending, through the transceiver, the at least one measured value instance to a first network-side device;

where the information of the measurement time window includes second network-side device measurement time window information;

the first network-side device is a positioning server or other network element capable of determining position information of the terminal except the positioning server; the second network-side device is a base station or a Transmit and Receive Point (TRP).

Optionally, the sending the at least one measured value instance to the first network-side device includes:

sending at least one measurement report to the first network-side device within a measurement time window corresponding to the second network-side device measurement time window information;

where the measurement report carries at least one measured value instance.

Optionally, the receiving the information of the measurement time window sent by the first network-side device includes:

receiving the information of the measurement time window of different terminals sent by the first network-side device;

where the information of the measurement time window of different terminals is the same or different.

Optionally, the second network-side device measurement time window information includes time window information for the network-side device to measure a Sounding Reference Signal for Positioning (SRS-Pos) and/or time window information for the network-side device to measure other uplink reference signals for positioning except the SRS-Pos; the second positioning signal includes SRS-Pos and/or the other uplink reference signals for positioning.

Optionally, the sending the at least one measured value instance to the first network-side device includes:

sending the at least one measured value instance and a time stamp corresponding to the measured value instance to the first network-side device.

Optionally, the at least one measured value instance includes a second network-side device measured value instance;

where the second network-side device measured value instance includes: an Uplink Time Difference Of Arrival (UL-RTOA), an Uplink Reference Signal Received Power (UL-RSRP), and/or a second network-side device sending and receiving time difference.

Optionally, the information of the measurement time window includes a duration of the measurement time window; or

the information of the measurement time window includes a duration and a start time of the measurement time window; or
the information of the measurement time window includes a start time and an end time of the measurement time window.

Optionally, the information of the measurement time window includes Universal Time Coordinated (UTC) information; and/or
the information of the measurement time window includes System Frame Number (SFN) information and slot number information.

Optionally, the information of the measurement time window includes a measurement time window index number;

where the measurement time window index number corresponds to a set of parameter information of the measurement time window;
the parameter information includes a duration of the measurement time window; or a duration and a start time of the measurement time window; or a start time and an end time of the measurement time window.

Optionally, the duration of the measurement time window corresponding to the terminal measurement time window information is the same as the duration of the measurement time window corresponding to the second network-side device measurement time window information; or
the measurement time window index number corresponding to the terminal measurement time window information is the same as the measurement time window index number corresponding to the second network-side device measurement time window information.

Optionally, the information of the measurement time window includes at least one of:

a parameter J, where the parameter J represents a quantity of terminal measured value instances within one terminal measurement time window, $J \geq 1$;
a parameter $N_i$, where the parameter $N_i$ represents a quantity of DL-PRS resource set instances or DL-PRS measurement occasions configured for an i-th terminal measured value instance, $N_i \geq 1$;
a parameter K, where the parameter K represents a quantity of second network-side device measured value instances within one second network-side device measurement time window, $K \geq 1$; and
a parameter $M_i$, where the parameter $M_i$ represents a quantity of SRS-Pos resource set instances or SRS-Pos measurement occasions configured for an i-th second network-side device measured value instance, $M_i \geq 1$.

Optionally, the second network-side device measurement time window information includes a measurement time window duration $MTW_{TRP}$ for periodic or semi-persistent SRS-Pos;
where

$$MTW_{TRP} = PD_{SRS-Pos} \times \sum_{i=1}^{K_P} M_{Pi};$$

$PD_{SRS-Pos}$ represents a period of SRS-Pos;
$K_P$ represents a quantity of second network-side device measured value instances within one second network-side device measurement time window, $K_P \geq 1$; and
$M_{Pi}$ represents a quantity of SRS-Pos resource set instances or SRS-Pos measurement occasions configured for an i-th second network-side device measured value instance, $M_{Pi} \geq 1$.

Optionally, the second network-side device measurement time window information includes a measurement time window duration $MTW'_{TRP}$ for aperiodic SRS-Pos;
where

$$MTW'_{TRP} = LH_{SRS-Pos} \times \sum_{i=1}^{K_A} M_{Ai};$$

$LH_{SRS-Pos}$ represents a duration or a quantity of time slots occupied by an aperiodic SRS-Pos resource set or SRS-Pos measurement occasion;
$K_A$ represents a quantity of second network-side device measured value instances within one second network-side device measurement time window, $K_A \geq 1$; and
$M_{Ai}$ represents a quantity of SRS-Pos resource set instances or SRS-Pos measurement occasions configured for an i-th second network-side device measured value instance, $M_{Ai} \geq 1$.

Optionally, the measurement time window corresponding to the second network-side device measurement time window information includes at least two SRS-Pos resource set instances located in different Uplink Bandwidth Parts (UL BWP).

Optionally, the receiving the information of the measurement time window sent by the first network-side device includes:

receiving, through the transceiver, the information of the measurement time window directly sent by the first network-side device; or,
sending, through the transceiver, a second request to the first network-side device, receiving the information of the measurement time window sent by the first network-side device in response to the second request.

Optionally, the receiving the information of the measurement time window sent by the first network-side device includes:
receiving, through the transceiver, the information of the measurement time window sent by the first network-side device through a New Radio Positioning Protocol A (NRPPa) signaling.

An information processing apparatus is further provided in an embodiment of the present disclosure, applied to a first network-side device, including:

a first receiving unit, configured to receive at least one measured value instance which is fed back by a terminal and/or a second network-side device according to information of a measurement time window;
a first determining unit, configured to determine position information of the terminal according to the at least one measured value instance;
where the information of the measurement time window includes terminal measurement time window information and/or second network-side device measurement time window information;
the first network-side device is a positioning server or other network element capable of determining the position information of the terminal except the positioning server; the second network-side device is a base station or a Transmit and Receive Point (TRP).

Optionally, the apparatus further includes:
a first sending module, configured to send the information of the measurement time window to the terminal and/or the second network-side device.

Optionally, the terminal measurement time window information includes time window information for the terminal to measure a Downlink Positioning Reference Signal (DL-PRS) and/or time window information for the terminal to measure other downlink reference signals for positioning except the DL-PRS; and/or

the second network-side device measurement time window information includes time window information for the second network-side device to measure a Sounding Reference Signal for Positioning (SRS-Pos) and/or time window information for the second network-side device to measure other uplink reference signals for positioning except the SRS-Pos.

Optionally, the receiving the at least one measured value instance which is fed back by the terminal and/or the second network-side device according to the information of the measurement time window includes:

receiving the at least one measured value instance and a time stamp corresponding to the measured value instance which are fed back by the terminal and/or the second network-side device according to the information of the measurement time window; the determining the position information of the terminal according to the at least one measured value instance includes: obtaining the position information of the terminal according to the at least one measured value instance and the time stamp corresponding to the measured value instance.

Optionally, the at least one measured value instance includes: a terminal measured value instance and/or a second network-side device measured value instance;

where the terminal measured value instance includes: a Downlink Reference Signal Time Difference (DL-RSTD), a Downlink Reference Signal Received Power (DL-RSRP), and/or a terminal sending and receiving time difference; and/or, the second network-side device measured value instance includes: an Uplink Time Difference Of Arrival (UL-RTOA), an Uplink Reference Signal Received Power (UL-RSRP), and/or a second network-side device sending and receiving time difference.

Optionally, the information of the measurement time window includes a duration of the measurement time window; or

the information of the measurement time window includes a duration and a start time of the measurement time window; or the information of the measurement time window includes a start time and an end time of the measurement time window.

Optionally, the information of the measurement time window includes Universal Time Coordinated (UTC) information; and/or

the information of the measurement time window includes System Frame Number (SFN) information and slot number information.

Optionally, the information of the measurement time window includes a measurement time window index number;

where the measurement time window index number corresponds to a set of parameter information of the measurement time window; the parameter information includes a duration of the measurement time window; or a duration and a start time of the measurement time window; or a start time and an end time of the measurement time window.

Optionally, the duration of the measurement time window corresponding to the terminal measurement time window information is the same as the duration of the measurement time window corresponding to the second network-side device measurement time window information; or

the measurement time window index number corresponding to the terminal measurement time window information is the same as the measurement time window index number corresponding to the second network-side device measurement time window information.

Optionally, the information of the measurement time window includes at least one of:

a parameter J, where the parameter J represents a quantity of terminal measured value instances within one terminal measurement time window, $J \geq 1$; a parameter $N_i$, where the parameter $N_i$ represents a quantity of DL-PRS resource set instances or DL-PRS measurement occasions configured for an i-th terminal measured value instance, $N_i \geq 1$; a parameter K, where the parameter K represents a quantity of second network-side device measured value instances within one second network-side device measurement time window, $K \geq 1$; and a parameter $M_i$, where the parameter $M_i$ represents a quantity of SRS-Pos resource set instances or SRS-Pos measurement occasions configured for an i-th second network-side device measured value instance, $M_i \geq 1$.

Optionally, the terminal measurement time window information includes a measurement time window duration $MTW_{UE}$ for periodic or semi-persistent DL-PRS; where

$$MTW_{UE} = PD_{DL-PRS} \times \sum_{i=1}^{J_P} N_{Pi};$$

$PD_{DL-PRS}$ represents a period of DL-PRS; $J_P$ represents a quantity of terminal measured value instances within one terminal measurement time window, $J_P \geq 1$; and

$N_{Pi}$ represents a quantity of DL-PRS resource set instances or DL-PRS measurement occasions configured for an i-th terminal measured value instance, $N_{Pi} \geq 1$.

Optionally, the second network-side device measurement time window information includes a measurement time window duration $MTW_{TRP}$ for periodic or semi-persistent SRS-Pos; where

$$MTW_{TRP} = PD_{SRS-Pos} \times \sum_{i=1}^{K_P} M_{Pi};$$

$PD_{SRS-Pos}$ represents a period of SRS-Pos;
$K_P$ represents a quantity of second network-side device measured value instances within one second network-side device measurement time window, $K_P \geq 1$; and
$M_{Pi}$ represents a quantity of SRS-Pos resource set instances or SRS-Pos measurement occasions configured for an i-th second network-side device measured value instance, $M_{Pi} \geq 1$.

Optionally, the terminal measurement time window information includes a measurement time window duration $MTW'_{UE}$ for aperiodic DL-PRS; where

$$MTW'_{UE} = LH_{DL-PRS} \times \sum_{i=1}^{J_A} N_{Ai};$$

$LH_{DL-PRS}$ represents a duration or a quantity of time slots occupied by an aperiodic DL-PRS resource set or DL-PRS measurement occasion;
$J_A$ represents a quantity of UE measured value instances within one terminal measurement time window, $J_A \geq 1$; and
$N_{Ai}$ represents a quantity of DL-PRS resource set instances or DL-PRS measurement occasions configured for an i-th terminal measured value instance, $N_{Ai} \geq 1$.

Optionally, one aperiodic DL-PRS measurement occasion corresponds to one aperiodic DL-PRS resource set instance.
Optionally, the second network-side device measurement time window information includes a measurement time window duration $MTW'_{TRP}$ for aperiodic SRS-Pos; where

$$MTW'_{TRP} = LH_{SRS-Pos} \times \sum_{i=1}^{K_A} M_{Ai};$$

$LH_{SRS-Pos}$ represents a duration or a quantity of time slots occupied by an aperiodic SRS-Pos resource set or SRS-Pos measurement occasion;

$K_A$ represents a quantity of second network-side device measured value instances within one second network-side device measurement time window, $K_A \geq 1$; and
$M_{Ai}$ represents a quantity of SRS-Pos resource set instances or SRS-Pos measurement occasions configured for an i-th second network-side device measured value instance, $M_{Ai} \geq 1$

Optionally, the measurement time window corresponding to the terminal measurement time window information includes at least two DL-PRS resource set instances located in different frequency layers; and/or the measurement time window corresponding to the second network-side device measurement time window information includes at least two SRS-Pos resource set instances located in different Uplink Bandwidth Parts (UL BWP).
Optionally, the sending the information of the measurement time window to the terminal includes:

directly sending the information of the measurement time window to the terminal; or,
sending the information of the measurement time window to the terminal in response to a first request sent by the terminal; or,
sending the information of the measurement time window to the terminal according to the capability information of the terminal.

Optionally, the sending the information of the measurement time window to the second network-side device includes:

directly sending the information of the measurement time window to the second network-side device; or,
sending the information of the measurement time window to the second network-side device in response to a second request sent by the second network-side device.

Optionally, the sending the information of the measurement time window to the terminal and/or the second network-side device includes:

sending the information of the measurement time window to the terminal through a Long Term Evolution Positioning Protocol (LPP) signaling; and/or,
sending the information of the measurement time window to the second network-side device through a New Radio Positioning Protocol A (NRPPa) signaling.

Optionally, the apparatus further includes:

a first configuration unit, configured to, when the terminal measurement time window information includes measurement window information for aperiodic DL-PRS, prior to the sending the information of the measurement time window to the terminal and/or the second network-side device, configure the measurement window information for aperiodic DL-PRS according to first information;

where the first information includes aperiodic DL-PRS resource information, aperiodic DL-PRS resource set information and/or aperiodic DL-PRS resource set instance information.

Optionally, one aperiodic DL-PRS resource set includes at least one aperiodic DL-PRS resource; and/or one aperiodic DL-PRS resource set instance includes at least one aperiodic DL-PRS resource set, and when a quantity of the aperiodic DL-PRS resource set is more than one, all of the aperiodic DL-PRS resource sets are the same, and the aperiodic DL-PRS resource sets are sent at different times.

An information processing apparatus is further provided in an embodiment of the present disclosure, applied to a terminal, including:

a first obtaining unit, configured to obtain information of a measurement time window;

a first processing unit, configured to measure a first positioning signal within the corresponding measurement time window according to the information of the measurement time window, to obtain at least one measured value instance; and

a second sending unit, configured to send the at least one measured value instance to a first network-side device;

where the information of the measurement time window includes terminal measurement time window information;

the first network-side device is a positioning server or other network element capable of determining position information of the terminal except the positioning server.

Optionally, the sending the at least one measured value instance to the first network-side device includes:

sending at least one measurement report to the first network-side device within a measurement time window corresponding to the terminal measurement time window information;

where the measurement report carries at least one measured value instance.

Optionally, the obtaining the information of the measurement time window includes:

receiving the information of the measurement time window sent by the first network-side device; or configuring the information of the measurement time window autonomously by the terminal.

Optionally, the obtaining the information of the measurement time window further includes:

obtaining the information of the measurement time window of different second network-side devices;
where the information of the measurement time window of different second network-side devices is the same or different.

Optionally, the terminal measurement time window information includes time window information for the terminal to measure a Downlink Positioning Reference Signal (DL-PRS) and/or time window information for the terminal to measure other downlink reference signals for positioning except the DL-PRS; the first positioning signal includes a DL-PRS and/or the other downlink reference signals for positioning.

Optionally, the sending the at least one measured value instance to the first network-side device includes:
sending the at least one measured value instance and a time stamp corresponding to the measured value instance to the first network-side device.

Optionally, the at least one measured value instance includes a terminal measured value instance;
where the terminal measured value instance includes: a Downlink Reference Signal Time Difference (DL-RSTD), a Downlink Reference Signal Received Power (DL-RSRP), and/or a terminal sending and receiving time difference.

Optionally, the information of the measurement time window includes a duration of the measurement time window; or

the information of the measurement time window includes a duration and a start time of the measurement time window; or
the information of the measurement time window includes a start time and an end time of the measurement time window.

Optionally, the information of the measurement time window includes Universal Time Coordinated (UTC) information; and/or
the information of the measurement time window includes System Frame Number (SFN) information and slot number information.

Optionally, the information of the measurement time window includes a measurement time window index number;

where the measurement time window index number corresponds to a set of parameter information of the measurement time window;
the parameter information includes a duration of the measurement time window, or a duration and a start time of the measurement time window, or a start time and an end time of the measurement time window.

Optionally, the duration of the measurement time window corresponding to the terminal measurement time window information is the same as the duration of the measurement time window corresponding to the second network-side device measurement time window information; or the measurement time window index number corresponding to the terminal measurement time window information is the same as the measurement time window index number corresponding to the second network-side device measurement time window information.

Optionally, the information of the measurement time window includes at least one of:

a parameter J, where the parameter J represents a quantity of terminal measured value instances within one terminal measurement time window, $J \geq 1$;
a parameter $N_i$, where the parameter $N_i$ represents a quantity of DL-PRS resource set instances or DL-PRS measurement occasions configured for an i-th terminal measured value instance, $N_i \geq 1$;
a parameter K, where the parameter K represents a quantity of second network-side device measured value instances within one second network-side device measurement time window, $K \geq 1$; and
a parameter $M_i$, where the parameter $M_i$ represents a quantity of SRS-Pos resource set instances or SRS-Pos measurement occasions configured for an i-th second network-side device measured value instance, $M_i \geq 1$.

Optionally, the terminal measurement time window information includes a measurement time window duration $MTW_{UE}$ for periodic or semi-persistent DL-PRS; where

$$MTW_{UE} = PD_{DL-PRS} \times \sum_{i=1}^{J_P} N_{Pi};$$

$PD_{DL-PRS}$ represents a period of DL-PRS;
$J_P$ represents a quantity of terminal measured value instances within one terminal measurement time window, $J_P \geq 1$; and
$N_{Pi}$ represents a quantity of DL-PRS resource set instances or DL-PRS measurement occasions configured for an i-th terminal measured value instance, $N_{Pi} \geq 1$.

Optionally, the terminal measurement time window information includes a measurement time window duration $MTW'_{UE}$ for aperiodic DL-PRS; where

$$MTW'_{UE} = LH_{DL-PRS} \times \sum_{i=1}^{J_A} N_{Ai};$$

$LH_{DL-PRS}$ represents a duration or a quantity of time slots occupied by an aperiodic DL-PRS resource set or DL-PRS measurement occasion;
$J_A$ represents a quantity of UE measured value instances within one terminal measurement time window, $J_A \geq 1$; and
$N_{Ai}$ represents a quantity of DL-PRS resource set instances or DL-PRS measurement occasions configured for an i-th terminal measured value instance, $N_{Ai} \geq 1$.

Optionally, one aperiodic DL-PRS measurement occasion corresponds to one aperiodic DL-PRS resource set instance.

Optionally, the measurement time window corresponding to the terminal measurement time window information includes at least two DL-PRS resource set instances located in different frequency layers.

Optionally, the receiving the information of the measurement time window sent by the first network-side device includes:

receiving the information of the measurement time window directly sent by the first network-side device; or,
sending a first request to the first network-side device; receiving the information of the measurement time window sent by the first network-side device in response to the first request; or,
sending capability information of the terminal to the first network-side device, and receiving the information of the measurement time window sent by the first network-side device in response to the capability information.

Optionally, the receiving the information of the measurement time window sent by the first network-side device includes:
receiving the information of the measurement time window sent by the first network-side device through a Long Term Evolution Positioning Protocol (LPP) signaling.

Optionally, when the terminal measurement time window information includes measurement window information for aperiodic DL-PRS, the configuring the information of the measurement time window autonomously by the terminal includes:

configuring the measurement window information for aperiodic DL-PRS according to first information;
where the first information includes aperiodic DL-PRS resource information, aperiodic DL-PRS resource set information and/or aperiodic DL-PRS resource set instance information.

Optionally, one aperiodic DL-PRS resource set includes at least one aperiodic DL-PRS resource; and/or one aperiodic DL-PRS resource set instance includes at least one aperiodic DL-PRS resource set, and when a quantity of the aperiodic DL-PRS resource set is more than one, all of the aperiodic DL-PRS resource sets are the same, and the aperiodic DL-PRS resource sets are sent at different times.

Optionally, whether the terminal is capable of being configured with a measurement time window corresponding to the terminal measurement time window information and measuring the first positioning signal within the measurement time window is a terminal capability.

An information processing apparatus is further provided in an embodiment of the present disclosure, applied to a second network-side device, including:

a second receiving unit, configured to receive information of a measurement time window sent by a first network-side device;
a second processing unit, configured to measure a second positioning signal within the corresponding measurement time window according to the information of the measurement time window, to obtain at least one measured value instance; and
a third sending unit, configured to send the at least one measured value instance to a first network-side device;
where the information of the measurement time window includes second network-side device measurement time window information;
the first network-side device is a positioning server or other network element capable of determining position information of the terminal except the positioning server; the second network-side device is a base station or a Transmit and Receive Point (TRP).

Optionally, the sending the at least one measured value instance to the first network-side device includes:

sending at least one measurement report to the first network-side device within a measurement time window corresponding to the second network-side device measurement time window information;
where the measurement report carries at least one measured value instance.

Optionally, the receiving the information of the measurement time window sent by the first network-side device includes:

receiving the information of the measurement time window of different terminals sent by the first network-side device;
where the information of the measurement time window of different terminals is the same or different.

Optionally, the second network-side device measurement time window information includes time window information for the network-side device to measure a Sounding Reference Signal for Positioning (SRS-Pos) and/or time window information for the network-side device to measure other uplink reference signals for positioning except the SRS-Pos; the second positioning signal includes SRS-Pos and/or the other uplink reference signals for positioning.

Optionally, the sending the at least one measured value instance to the first network-side device includes:

sending the at least one measured value instance and a time stamp corresponding to the measured value instance to the first network-side device.

Optionally, the at least one measured value instance includes a second network-side device measured value instance;

where the second network-side device measured value instance includes: an Uplink Time Difference Of Arrival (UL-RTOA), an Uplink Reference Signal Received Power (UL-RSRP), and/or a second network-side device sending and receiving time difference.

Optionally, the information of the measurement time window includes a duration of the measurement time window; or

the information of the measurement time window includes a duration and a start time of the measurement time window; or
the information of the measurement time window includes a start time and an end time of the measurement time window.

Optionally, the information of the measurement time window includes Universal Time Coordinated (UTC) information; and/or

the information of the measurement time window includes System Frame Number (SFN) information and slot number information.

Optionally, the information of the measurement time window includes a measurement time window index number;

where the measurement time window index number corresponds to a set of parameter information of the measurement time window;
the parameter information includes a duration of the measurement time window; or a duration and a start time of the measurement time window; or a start time and an end time of the measurement time window.

Optionally, the duration of the measurement time window corresponding to the terminal measurement time window information is the same as the duration of the measurement time window corresponding to the second network-side device measurement time window information; or

the measurement time window index number corresponding to the terminal measurement time window information is the same as the measurement time window index number corresponding to the second network-side device measurement time window information.

Optionally, the information of the measurement time window includes at least one of:

a parameter J, where the parameter J represents a quantity of terminal measured value instances within one terminal measurement time window, $J \geq 1$;
a parameter $N_i$, where the parameter $N_i$ represents a quantity of DL-PRS resource set instances or DL-PRS measurement occasions configured for an i-th terminal measured value instance, $N_i \geq 1$;
a parameter K, where the parameter K represents a quantity of second network-side device measured value instances within one second network-side device measurement time window, $K \geq 1$; and
a parameter $M_i$, where the parameter $M_i$ represents a quantity of SRS-Pos resource set instances or SRS-Pos measurement occasions configured for an i-th second network-side device measured value instance, $M_i \geq 1$.

Optionally, the second network-side device measurement time window information includes a measurement time window duration $MTW_{TRP}$ for periodic or semi-persistent SRS-Pos;
where

$$MTW_{TRP} = PD_{SRS-Pos} \times \sum_{i=1}^{K_P} M_{Pi};$$

$PD_{SRS-Pos}$ represents a period of SRS-Pos;
$K_P$ represents a quantity of second network-side device measured value instances within one second network-side device measurement time window, $K_P \geq 1$; and
$M_{Pi}$ represents a quantity of SRS-Pos resource set instances or SRS-Pos measurement occasions configured for an i-th second network-side device measured value instance, $M_{Pi} \geq 1$

Optionally, the second network-side device measurement time window information includes a measurement time window duration $MTW'_{TRP}$ for aperiodic SRS-Pos;
where

$$MTW'_{TRP} = LH_{SRS-Pos} \times \sum_{i=1}^{K_A} M_{Ai};$$

$LH_{SRS-Pos}$ represents a duration or a quantity of time slots occupied by an aperiodic SRS-Pos resource set or SRS-Pos measurement occasion;
$K_A$ represents a quantity of second network-side device measured value instances within one second network-side device measurement time window, $K_A \geq 1$; and
$M_{Ai}$ represents a quantity of SRS-Pos resource set instances or SRS-Pos measurement occasions configured for an i-th second network-side device meas-

ured value instance, $M_{Ai} \geq 1$.

Optionally, the measurement time window corresponding to the second network-side device measurement time window information includes at least two SRS-Pos resource set instances located in different Uplink Bandwidth Parts (UL BWP).
Optionally, the receiving the information of the measurement time window sent by the first network-side device includes:

receiving the information of the measurement time window directly sent by the first network-side device; or,
sending a second request to the first network-side device, receiving the information of the measurement time window sent by the first network-side device in response to the second request.

Optionally, the receiving the information of the measurement time window sent by the first network-side device includes:
receiving the information of the measurement time window sent by the first network-side device through a New Radio Positioning Protocol A (NRPPa) signaling.
A processor-readable storage medium is further provided in an embodiment of the present disclosure, where the processor-readable storage medium stores a computer program, and the computer program is configured to enable the processor to perform the information processing method at the first network-side device side; or,

the computer program is configured to enable the processor to perform the information processing method at the terminal side; or,
the computer program is configured to enable the processor to perform the information processing method at the second network-side device side.

The technical effects of the embodiments of the present disclosure are as follows:
according to the embodiments of the present disclosure, at least one measured value instance which is fed back by a terminal and/or a second network-side device according to information of a measurement time window is received, position information of the terminal is determined according to the at least one measured value instance, where the information of the measurement time window includes terminal measurement time window information and/or second network-side device measurement time window information, the first network-side device is a positioning server or other network element capable of determining the position information of the terminal except the positioning server, and the second network-side device is a base station or a TRP. Therefore, the terminal and the second network-side device may measure the measured value within a suitable measurement time window to obtain a measured value instance relatively matched in terms of time, so that the first network-side device may estimate the sending and receiving timing error more accurately when determining the position of the terminal based on the measured value instance, or eliminate the influence of sending and receiving timing error, and avoid the influence of time-varying sending and receiving timing error on the accuracy of terminal position calculation, thereby improving the positioning accuracy of the system, the problem of poor accuracy of the positioning-related information processing scheme in the related art is well solved.

**BRIEF DESCRIPTION OF THE DRAWINGS**

Fig. 1 is a schematic view of a wireless communication system architecture in an embodiment of the present disclosure;
Fig. 2 is a first flow chart of an information processing method in an embodiment of the present disclosure;
Fig. 3 is a second flow chart of an information processing method in an embodiment of the present disclosure;
Fig. 4 is a third flow chart of an information processing method in an embodiment of the present disclosure;
Fig. 5 is a schematic view of a UE measurement time window configuration in an embodiment of the present disclosure;
Fig. 6 is a schematic view of measurement time window parameters for periodic DL-PRS in an embodiment of the present disclosure;
Fig. 7 is a schematic view of measurement time window parameters for aperiodic DL-PRS in an embodiment of the present disclosure;
Fig. 8 is a first schematic view of a network-side device in an embodiment of the present disclosure;
Fig. 9 is a schematic structural diagram of a terminal in an embodiment of the present disclosure;
Fig. 10 is a second schematic view of a network-side device structure in an embodiment of the present disclosure;
Fig. 11 is a first structural schematic view of an information processing apparatus in an embodiment of the present disclosure;
Fig. 12 is a second structural schematic view of an information processing apparatus in an embodiment of the present disclosure; and
Fig. 13 is a third structural schematic view of an information processing apparatus in an embodiment of the present disclosure.

**DETAILED DESCRIPTION**

The technical solutions in the embodiments of the present disclosure will be clearly and completely described in the following with reference to the drawings in the embodiments of the present disclosure. Obviously, the described embodiments are only some of the embodiments of the present disclosure, not all of them. Based on the embodiments of the present disclosure, all other embodiments obtained by persons skilled in the art without making creative efforts belong to the scope of the present disclosure.

The term "and/or" in the embodiments of the present disclosure describes the association relationship of associated objects, indicating that there may be three relationships, for example, three situations including that A and/or B, which may mean: A exists alone, A and B exist simultaneously, and B exists alone. The character "/" generally indicates that the associated objects are in an "or" relationship.

The term "plurality" in the embodiments of the present disclosure refers to two or more, and other quantifiers are similar.

It is explained here that the technical solutions provided by the embodiments of the present disclosure may be applicable to various systems, especially 5G systems. For example, the applicable system may be global system of mobile communication (GSM) system, code division multiple access (CDMA) system, wideband code division multiple access (WCDMA) general packet radio service (GPRS) system, long term evolution (LTE) system, LTE frequency division duplex (FDD) system, LTE time division duplex (TDD) system, Long term evolution advanced (LTE-A) system, universal mobile telecommunications system (UMTS), worldwide interoperability for microwave access (WiMAX) system, 5G new air radio (NR) system, etc. These various systems include terminals and network-side devices. The system may also include a core network part, such as an evolved packet system (Evolved Packet System, EPS), a 5G system (5GS), and the like.

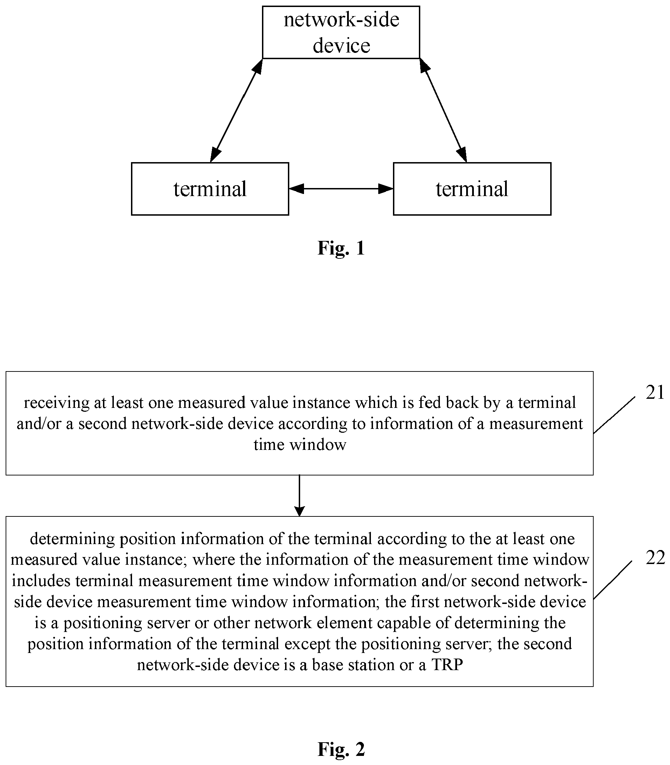

Fig. 1 shows a block diagram of a wireless communication system to which embodiments of the present disclosure are applicable. A wireless communication system includes a terminal and a network-side device.

The terminal involved in the embodiments of the present disclosure may be a device that provides voice and/or data connectivity to a user, a handheld device with a wireless connection function, or other processing devices connected to a wireless modem. In different systems, the name of the terminal may be different. For example, in a 5G system, the terminal may be called User Equipment (UE). The wireless terminal can communicate with one or more core networks (CN) via the radio access network (RAN), and the wireless terminal can be a mobile terminal, such as a mobile phone (or called a "cellular" phone) and computers with mobile terminals, such as portable, pocket, hand-held, built-in computer or vehicle-mounted mobile devices, which exchange speech and/or data with the radio access network. For example, Personal Communication Service (PCS) phones, cordless phones, Session Initiated Protocol (SIP) phones, Wireless Local Loop (WLL) stations, Personal Digital Assistant (PDA) and other devices. Wireless terminal may also be called system, subscriber unit, subscriber station, mobile station, mobile, remote station, access point, A remote terminal device (remote terminal), an access terminal, a user terminal, a user agent (user agent), and a user device, which are not limited in the embodiments of the present disclosure.

The network-side device involved in the embodiments of the present disclosure may be a base station, and the base station may include multiple cells that provide services for terminals. Depending on the specific application, the base station can also be called an access point, or it can be a device in the access network that communicates with wireless terminals through one or more sectors on the air interface, or other names. The network-side device can be configured to exchange received air frames with Internet Protocol (IP) packets, and act as a router between the wireless terminal and the rest of the access network, where the rest of the access network can include the Internet Protocol (IP) communication network. The network-side device can also coordinate attribute management of the air interface. For example, the network-side device involved in this embodiment of the present disclosure may be a network device (Base Transceiver Station, Base Transceiver Station, BTS), or a network device (NodeB) in Wide-band Code Division Multiple Access (WCDMA), or an evolved network in a long term evolution (LTE) system equipment (evolutional Node B, eNB or e-NodeB), 5G base station (gNB) in the 5G network architecture (next generation system), can also be a Home evolved Node B (HeNB), a relay node, a home base station (femto), a pico base station (pico), etc., are not limited in this embodiment of the present disclosure. In some network structures, the network-side device may include a centralized unit (centralized unit, CU) node and a distributed unit (distributed unit, DU) node, and the centralized unit and the distributed unit may also be arranged geographically separately.

One or more antennas can be used between the network-side device and the terminal for Multi Input Multi Output (MIMO) transmission, and MIMO transmission can be Single User MIMO (SU-MIMO) or Multiple User MIMO (MU-MIMO). According to the shape and number of root antenna combinations, MIMO transmission can be 2 Dimension MIMO (2D-MIMO), 3 Dimension MIMO (3D-MIMO), Full Dimension MIMO (FD-MIMO) or massive-MIMO), it can also be diversity transmission or precoding transmission or beamforming transmission, etc.

Based on the above, the embodiments of the present disclosure provide an information processing method, an apparatus, a terminal, and a network-side device, so as to solve the problem of poor accuracy of positioning-related information processing solutions in related art. The method, the apparatus, the terminal, and the network-side device are based on the same application-tion idea, and since the principles of solving problems of the method, apparatus, terminal, and network-side device are similar, the implementation of the method, apparatus, terminal, and network-side device can be referred to each other, the repeated parts will not be omitted.

The information processing method provided by the embodiment of the present disclosure is applied to the first network-side device, as shown in Fig. 2 , including:

Step 21: receiving at least one measured value instance which is fed back by a terminal and/or a second network-side device according to information of a measurement time window.

The measured value instances fed back by the terminal and the second network-side device match in terms of time.

Step 22: determining position information of the terminal according to the at least one measured value instance; where the information of the measurement time window includes terminal measurement time window information and/or second network-side device measurement time window information; the first network-side device is a positioning server or other network element capable of determining the position information of the terminal except the positioning server; the second network-side device is a base station or a Transmit and Receive Point (TRP).

According to the embodiments of the information processing method, at least one measured value instance which is fed back by a terminal and/or a second network-side device according to information of a measurement time window is received, position information of the terminal is determined according to the at least one measured value instance, where the information of the measurement time window includes terminal measurement time window information and/or second network-side device measurement time window information, the first network-side device is a positioning server or other network element capable of determining the position information of the terminal except the positioning server, and the second network-side device is a base station or a TRP. Therefore, the terminal and the second network-side device may measure the measured value within a suitable (i.e., matched) measurement time window to obtain a measured value instance relatively matched in terms of time, so that the first network-side device may estimate the sending and receiving timing error more accurately when determining the position of the terminal (based on the measured value instance), or eliminate the influence of sending and receiving timing error, and avoid the influence of time-varying sending and receiving timing error on the accuracy of terminal position calculation, thereby improving the positioning accuracy of the system, the problem of poor accuracy of the positioning-related information processing scheme in the related art is well solved.

Regarding the situation where the information of the measurement time window is configured by the first network-side device, in the embodiment of the present disclosure, the information processing method further includes: sending the information of the measurement time window to the terminal and/or the second network-side device.

In the embodiment of the present disclosure, the terminal measurement time window information includes time window information for the terminal to measure a Downlink Positioning Reference Signal (DL-PRS) and/or time window information for the terminal to measure other downlink reference signals for positioning except the DL-PRS; and/or the second network-side device measurement time window information includes time window information for the second network-side device to measure a Sounding Reference Signal for Positioning (SRS-Pos) and/or time window information for the second network-side device to measure other uplink reference signals for positioning except the SRS-Pos.

The receiving the at least one measured value instance which is fed back by the terminal and/or the second network-side device according to the information of the measurement time window includes: receiving the at least one measured value instance and a time stamp corresponding to the measured value instance which are fed back by the terminal and/or the second network-side device according to the information of the measurement time window; the determining the position information of the terminal according to the at least one measured value instance includes: obtaining the position information of the terminal according to the at least one measured value instance and the time stamp corresponding to the measured value instance.

Therefore, the measured value instances may be much matched in terms of time.

In the embodiment of the present disclosure, the at least one measured value instance includes: a terminal measured value instance and/or a second network-side device measured value instance; where the terminal measured value instance includes: a Downlink Reference Signal Time Difference (DL-RSTD), a Downlink Reference Signal Received Power (DL-RSRP), and/or a terminal sending and receiving time difference; and/or, the second network-side device measured value instance includes: an Uplink Time Difference Of Arrival (UL-RTOA), an Uplink Reference Signal Received Power (UL-RSRP), and/or a second network-side device sending and receiving time difference.

The information of the measurement time window includes a duration of the measurement time window; or the information of the measurement time window includes a duration and a start time of the measurement time window; or the information of the measurement time window includes a start time and an end time of the measurement time window.

In the embodiment of the present disclosure, the information of the measurement time window includes Universal Time Coordinated (UTC) information; and/or the information of the measurement time window includes System Frame Number (SFN) information and slot number information.

In the embodiment of the present disclosure, the information of the measurement time window includes a measurement time window index number; where the measurement time window index number corresponds to a set of parameter information of the measurement time window; the parameter information includes a duration of the measurement time window; or a duration and a start time of the measurement time window; or a start time and an end time of the measurement time window.

The duration of the measurement time window corresponding to the terminal measurement time window information is the same as the duration of the measurement time window corresponding to the second network-side device measurement time window information; or the measurement time window index number corresponding to the terminal measurement time window information is the same as the measurement time window index number corresponding to the second network-side device measurement time window information.

In this way, it can be further ensured that the terminal and the second network-side device measure the measured value within a matched time, and feed back the measured value instance matched in terms of time.

In the embodiment of the present disclosure, the information of the measurement time window includes at least one of: a parameter J, where the parameter J represents a quantity of terminal measured value instances within one terminal measurement time window, $J \geq 1$; a parameter $N_i$, where the parameter $N_i$ represents a quantity of DL-PRS resource set instances or DL-PRS measurement occasions configured for an i-th terminal measured value instance, $N_i \geq 1$; a parameter K, where the parameter K represents a quantity of second network-side device measured value instances within one second network-side device measurement time window, $K \geq 1$; and a parameter $M_i$, where the parameter $M_i$ represents a quantity of SRS-Pos resource set instances or SRS-Pos measurement occasions configured for an i-th second network-side device measured value instance, $M_i \geq 1$.

In the embodiment of the present disclosure, the terminal measurement time window information includes a measurement time window duration $MTW_{UE}$ for periodic or semi-persistent DL-PRS; where

$$MTW_{UE} = PD_{DL-PRS} \times \sum_{i=1}^{J_P} N_{Pi}$$

; $PD_{DL-PRS}$ represents a period of DL-PRS; $J_P$ represents a quantity of terminal measured value instances within one terminal measurement time window, $J_P \geq 1$; and $N_{Pi}$ represents a quantity of DL-PRS resource set instances or DL-PRS measurement occasions configured for an i-th terminal measured value instance, $N_{Pi} \geq 1$.

Specifically, the semi-persistent DL-PRS also has a period, and uses the same set of period values with the periodic DL-PRS.

In the embodiment of the present disclosure, the second network-side device measurement time window information includes a measurement time window duration MTW$_{TRP}$ for periodic or semi-persistent SRS-Pos; where

$$MTW_{TRP} = PD_{SRS-Pos} \times \sum_{i=1}^{K_P} M_{Pi}$$

; PD$_{SRS-Pos}$ represents a period of SRS-Pos; K$_P$ represents a quantity of second network-side device measured value instances within one second network-side device measurement time window, K$_P \geq 1$; and M$_{Pi}$ represents a quantity of SRS-Pos resource set instances or SRS-Pos measurement occasions configured for an i-th second network-side device measured value instance, M$_{Pi} \geq 1$.

Specifically, the semi-persistent SRS-Pos also has a period, and uses the same set of period values as the periodic SRS-Pos.

In the embodiment of the present disclosure, the terminal measurement time window information includes a measurement time window duration MTW'$_{UE}$ for aperiodic DL-PRS; where

$$MTW'_{UE} = LH_{DL-PRS} \times \sum_{i=1}^{J_A} N_{Ai}$$

; LH$_{DL-PRS}$ represents a duration or a quantity of time slots occupied by an aperiodic DL-PRS resource set or DL-PRS measurement occasion; J$_A$ represents a quantity of UE measured value instances within one terminal measurement time window, J$_A \geq 1$; and N$_{Ai}$ represents a quantity of DL-PRS resource set instances or DL-PRS measurement occasions configured for an i-th terminal measured value instance, N$_{Ai} \geq 1$.

One aperiodic DL-PRS measurement occasion corresponds to one aperiodic DL-PRS resource set instance.

In the embodiment of the present disclosure, the second network-side device measurement time window information includes a measurement time window duration MTW'$_{TRP}$ for aperiodic SRS-Pos; where

$$MTW'_{TRP} = LH_{SRS-Pos} \times \sum_{i=1}^{K_A} M_{Ai}$$

; LH$_{SRS-Pos}$ represents a duration or a quantity of time slots occupied by an aperiodic SRS-Pos resource set or SRS-Pos measurement occasion; K$_A$ represents a quantity of second network-side device measured value instances within one second network-side device measurement time window, K$_A \geq 1$; and M$_{Ai}$ represents a quantity of SRS-Pos resource set instances or SRS-Pos measurement occasions configured for an i-th second network-side device measured value instance, M$_{Ai} \geq 1$.

The measurement time window corresponding to the terminal measurement time window information includes at least two DL-PRS resource set instances located in different frequency layers; and/or the measurement time window corresponding to the second network-side device measurement time window information includes at least two SRS-Pos resource set instances located in different Uplink Bandwidth Parts (UL BWP).

In the embodiment of the present disclosure, the sending the information of the measurement time window to the terminal includes: directly sending the information of the measurement time window to the terminal; or, sending the information of the measurement time window to the terminal in response to a first request sent by the terminal; or, sending the information of the measurement time window to the terminal according to the capability information of the terminal.

In the embodiment of the present disclosure, the sending the information of the measurement time window to the second network-side device includes: directly sending the information of the measurement time window to the second network-side device; or, sending the information of the measurement time window to the second network-side device in response to a second request sent by the second network-side device.

The sending the information of the measurement time window to the terminal and/or the second network-side device includes: sending the information of the measurement time window to the terminal through a Long Term Evolution Positioning Protocol (LPP) signaling; and/or, sending the information of the measurement time window to the second network-side device through a New Radio Positioning Protocol A (NRPPa) signaling.

Further, when the terminal measurement time window information includes measurement window information for aperiodic DL-PRS, prior to the sending the information of the measurement time window to the terminal and/or the second network-side device, the method further includes: configuring the measurement window information for aperiodic DL-PRS according to first information; the first information includes aperiodic DL-PRS resource information, aperiodic DL-PRS resource set information and/or aperiodic DL-PRS resource set instance information.

In the embodiment of the present disclosure, one aperiodic DL-PRS resource set includes at least one aperiodic DL-PRS resource; and/or one aperiodic DL-PRS resource set instance includes at least one aperiodic DL-PRS resource set, and when a quantity of the aperiodic DL-PRS resource set is more than one, all of the aperiodic DL-PRS resource sets are the same, and the aperiodic DL-PRS resource sets are sent at different times.

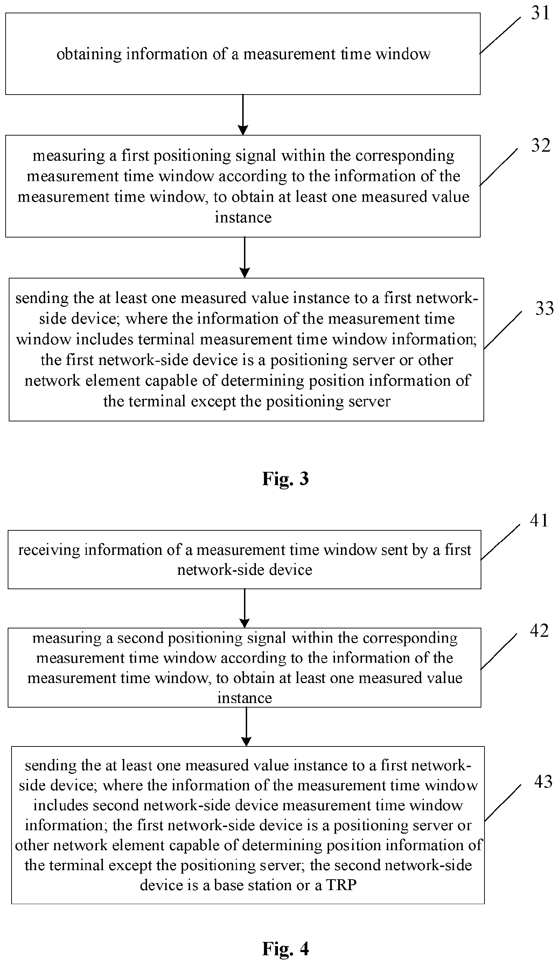

An embodiment of the present disclosure also provides an information processing method, which is applied to a terminal, as shown in Fig. 3, including:

Step 31: obtaining information of a measurement time window.

The obtaining of the information of the measurement time window may be that the terminal self-configures the information of the measurement time window or receives the information of the measurement time window.

Step 32: measuring a first positioning signal within the corresponding measurement time window according to the information of the measurement time window, to obtain at least one measured value instance.

Step 33: sending the at least one measured value instance to a first network-side device; where the information of the measurement time window includes terminal measurement time window information; the first network-side device is a positioning server or other network element capable of determining position information of the terminal except the positioning server.

In the embodiment of the present disclosure, the information of the measurement time window may further include the second network-side device time window information, and the second positioning signal (such as SRS-Pos) is sent according to the second network-side device time window information.

According to the embodiments of the information processing method, information of a measurement time window is obtained, a first positioning signal is measured within the corresponding measurement time window according to the information of the measurement time window, to obtain at least one measured value instance, and the at least one measured value instance is sent to a first network-side device, where the information of the measurement time window includes terminal measurement time window information, the first network-side device is a positioning server or other network element capable of determining position information of the terminal except the positioning server. Therefore, the terminal and the second network-side device may measure the measured value within a suitable (i.e., matched) measurement time window to obtain a measured value instance relatively matched in terms of time, so that the first network-side device may estimate the sending and receiving timing error more accurately when determining the position of the terminal (based on the measured value instance), or eliminate the influence of sending and receiving timing error, and avoid the influence of time-varying sending and receiving timing error on the accuracy of terminal position calculation, thereby improving the positioning accuracy of the system, the problem of poor accuracy of the positioning-related information processing scheme in the related art is well solved.

In the embodiment of the present disclosure, the sending the at least one measured value instance to the first network-side device includes: sending at least one measurement report to the first network-side device within a measurement time window corresponding to the terminal measurement time window information; where the measurement report carries at least one measured value instance.

The obtaining the information of the measurement time window includes: receiving the information of the measurement time window sent by the first network-side device; or configuring the information of the measurement time window autonomously by the terminal.

Further, the obtaining the information of the measurement time window further includes: obtaining the information of the measurement time window of different second network-side devices; where the information of the measurement time window of different second network-side devices is the same or different.

In the embodiment of the present disclosure, the terminal measurement time window information includes time window information for the terminal to measure a Downlink Positioning Reference Signal (DL-PRS) and/or time window information for the terminal to measure other downlink reference signals for positioning except the DL-PRS; the first positioning signal includes a DL-PRS and/or the other downlink reference signals for positioning.

The sending the at least one measured value instance to the first network-side device includes: sending the at least one measured value instance and a time stamp corresponding to the measured value instance to the first network-side device.

Therefore, the measured value instances may be much matched in terms of time.

In the embodiment of the present disclosure, the at least one measured value instance includes a terminal measured value instance; where the terminal measured value instance includes: a Downlink Reference Signal Time Difference (DL-RSTD), a Downlink Reference Signal Received Power (DL-RSRP), and/or a terminal sending and receiving time difference.

The information of the measurement time window includes a duration of the measurement time window; or the information of the measurement time window includes a duration and a start time of the measurement time window; or the information of the measurement time window includes a start time and an end time of the measurement time window.

In the embodiment of the present disclosure, the information of the measurement time window includes a measurement time window index number; where the measurement time window index number corresponds to a set of parameter information of the measurement time window; the parameter information includes a duration of the measurement time window, or a duration and a start time of the measurement time window, or a start time and an end time of the measurement time window.

The duration of the measurement time window corresponding to the terminal measurement time window information is the same as the duration of the measurement time window corresponding to the second network-side device measurement time window information; or the measurement time window index number corresponding to the terminal measurement time window information is the same as the measurement time window index number corresponding to the second network-side device measurement time window information.

In the embodiment of the present disclosure, the information of the measurement time window includes at least one of: a parameter J, where the parameter J represents a quantity of terminal measured value instances within one terminal measurement time window, $J \geq 1$; a parameter $N_i$, where the parameter $N_i$ represents a quantity of DL-PRS resource set instances or DL-PRS measurement occasions configured for an i-th terminal measured value instance, $N_i \geq 1$; a parameter K, where the parameter K represents a quantity of second network-side device measured value instances within one second network-side device measurement time window, $K \geq 1$; and a parameter $M_i$, where the parameter $M_i$ represents a quantity of SRS-Pos resource set instances or SRS-Pos measurement occasions configured for an i-th second network-side device measured value instance, $M_i \geq 1$.

In the embodiment of the present disclosure, the terminal measurement time window information includes a measurement time window duration $MTW_{UE}$ for periodic or semi-persistent DL-PRS; where

$$MTW_{UE} = PD_{DL-PRS} \times \sum_{i=1}^{J_P} N_{Pi}$$

; $PD_{DL-PRS}$ represents a period of DL-PRS; $J_P$ represents a quantity of terminal measured value instances within one terminal measurement time window, $J_P \geq 1$; and $N_{Pi}$ represents a quantity of DL-PRS resource set instances or DL-PRS measurement occasions configured for an i-th terminal measured value instance, $N_{P1} \geq 1$.

Specifically, the semi-persistent DL-PRS also has a period, and uses the same set of period values as the periodic DL-PRS.

In the embodiment of the present disclosure, the terminal measurement time window information includes a measurement time window duration $MTW'_{UE}$ for aperiodic DL-PRS; where

$$MTW'_{UE} = LH_{DL-PRS} \times \sum_{i=1}^{J_A} N_{Ai}$$

; $LH_{DL-PRS}$ represents a duration or a quantity of time slots occupied by an aperiodic DL-PRS resource set or DL-PRS measurement occasion; $J_A$ represents a quantity of UE measured value instances within one terminal measurement time window, $J_A \geq 1$; and $N_{Ai}$ represents a quantity of DL-PRS resource set instances or DL-PRS measurement occasions configured for an i-th terminal measured value instance, $N_{Ai} \geq 1$.

One aperiodic DL-PRS measurement occasion corresponds to one aperiodic DL-PRS resource set instance.

In the embodiment of the present disclosure, the measurement time window corresponding to the terminal measurement time window information includes at least two DL-PRS resource set instances located in different frequency layers.

The receiving the information of the measurement time window sent by the first network-side device includes: receiving the information of the measurement time window directly sent by the first network-side device; or, sending a first request to the first network-side device; receiving the information of the measurement time window sent by the first network-side device in response to the first request; or, sending capability information of the terminal to the first network-side device, and receiving the information of the measurement time window sent by the first network-side device in response to the capability information.

In the embodiment of the present disclosure, the receiving the information of the measurement time window sent by the first network-side device includes: receiving the information of the measurement time window sent by the first network-side device through a Long Term Evolution Positioning Protocol (LPP) signaling.

When the terminal measurement time window information includes measurement window information for aperiodic DL-PRS, the configuring the information of the measurement time window autonomously by the terminal includes: configuring the measurement window information for aperiodic DL-PRS according to first information; where the first information includes aperiodic DL-PRS resource information, aperiodic DL-PRS resource set information and/or aperiodic DL-PRS resource set instance information.

In the embodiment of the present disclosure, one aperiodic DL-PRS resource set includes at least one aperiodic DL-PRS resource; and/or one aperiodic DL-PRS resource set instance includes at least one aperiodic DL-PRS resource set, and when a quantity of the aperiodic DL-PRS resource set is more than one, all of the aperiodic DL-PRS resource sets are the same, and the aperiodic DL-PRS resource sets are sent at different times.

In the embodiment of the present disclosure, whether the terminal is capable of being configured with a measurement time window corresponding to the terminal measurement time window information and measuring the first positioning signal within the measurement time window is a terminal capability.

An embodiment of the present disclosure also provides an information processing method, which is applied to a second network-side device, as shown in Fig. 4 , including:

Step 41: receiving information of a measurement time window sent by a first network-side device;

Step 42: measuring a second positioning signal within the corresponding measurement time window according to the information of the measurement time window, to obtain at least one measured value instance;

Step 43: sending the at least one measured value instance to a first network-side device; where the information of the measurement time window includes second network-side device measurement time window information; the first network-side device is a positioning server or other network element capable of determining position information of the terminal except the positioning server; the second network-side device is a base station or a Transmit and Receive Point (TRP).

In the embodiment of the present disclosure, the information of the measurement time window may also include terminal time window information, and the first positioning signal (such as DL-PRS) is sent according to the terminal time window information.

According to the embodiments of the information processing method, information of a measurement time window sent by a first network-side device is received; a second positioning signal is measured within the corresponding measurement time window according to the information of the measurement time window, to obtain at least one measured value instance; and the at least one measured value instance is sent to a first network-side device; where the information of the measurement time window includes second network-side device measurement time window information; the first network-side device is a positioning server or other network element capable of determining position information of the terminal except the positioning server; the second network-side device is a base station or a Transmit and Receive Point (TRP). Therefore, the terminal and the second network-side device may measure the measured value within a suitable (i.e., matched) measurement time window to obtain a measured value instance relatively matched in terms of time, so that the first network-side device may estimate the sending and receiving timing error more accurately when determining the position of the terminal (based on the measured value instance), or eliminate the influence of sending and receiving timing error, and avoid the influence of time-varying sending and receiving timing error on the accuracy of terminal position calculation, thereby improving the positioning accuracy of the system, the problem of poor accuracy of the positioning-related information processing scheme in the related art is well solved.

The sending the at least one measured value instance to the first network-side device includes: sending at least one measurement report to the first network-side device within a measurement time window corresponding to the second network-side device measurement time window information; where the measurement report carries at least one measured value instance.

In the embodiment of the present disclosure, the receiving the information of the measurement time window sent by the first network-side device includes: receiving the information of the measurement time window of different terminals sent by the first network-side device; where the information of the measurement time window of different terminals is the same or different.

In the embodiment of the present disclosure, the second network-side device measurement time window information includes time window information for the network-side device to measure a Sounding Reference Signal for Positioning (SRS-Pos) and/or time window information for the network-side device to measure other uplink reference signals for positioning except the SRS-Pos; the second positioning signal includes SRS-Pos and/or the other uplink reference signals for positioning.

The sending the at least one measured value instance to the first network-side device includes: sending the at least one measured value instance and a time stamp corresponding to the measured value instance to the first network-side device.

The measured value instances may be much matched in terms of time.

In the embodiment of the present disclosure, the at least one measured value instance includes a second network-side device measured value instance; where the second network-side device measured value instance includes: an Uplink Time Difference Of Arrival (UL-RTOA), an Uplink Reference Signal Received Power (UL-RSRP), and/or a second network-side device sending and receiving time difference.

The information of the measurement time window includes a duration of the measurement time window; or the information of the measurement time window includes a duration and a start time of the measurement time window; or the information of the measurement time window includes a start time and an end time of the measurement time window.

In the embodiment of the present disclosure, the information of the measurement time window includes Universal Time Coordinated (UTC) information; and/or the information of the measurement time window includes System Frame Number (SFN) information and slot number information.

In the embodiment of the present disclosure, the information of the measurement time window includes a measurement time window index number; where the measurement time window index number corresponds to a set of parameter information of the measurement time window; the parameter information includes a duration of the measurement time window; or a duration and a start time of the measurement time window; or a start time and an end time of the measurement time window.

The duration of the measurement time window corresponding to the terminal measurement time window information is the same as the duration of the measurement time window corresponding to the second network-side device measurement time window information; or the measurement time window index number corresponding to the terminal measurement time window information is the same as the measurement time window index number corresponding to the second network-side device measurement time window information.

In the embodiment of the present disclosure, the information of the measurement time window includes at least one of: a parameter J, where the parameter J represents a quantity of terminal measured value instances within one terminal measurement time window, $J \geq 1$; a parameter $N_i$, where the parameter $N_i$ represents a quantity of DL-PRS resource set instances or DL-PRS measurement occasions configured for an i-th terminal measured value instance, $N_i \geq 1$; a parameter K, where the parameter K represents a quantity of second network-side device measured value instances within one second network-side device measurement time window, $K \geq 1$; and a parameter $M_i$, where the parameter $M_i$ represents a quantity of SRS-Pos resource set instances or SRS-Pos measurement occasions configured for an i-th second network-side device measured value instance, $M_i \geq 1$.

Optionally, the second network-side device measurement time window information includes a measurement time window duration $MTW_{TRP}$ for periodic or semi-persistent SRS-Pos; where $MTW_{TRP} = $

$$PD_{SRS-Pos} \times \sum_{i=1}^{K_P} M_{Pi}$$ ; $PD_{SRS-Pos}$ represents a period of SRS-Pos; $K_P$ represents a quantity of second network-side device measured value instances within one second network-side device measurement time window, $K_P \geq 1$; and $M_{Pi}$ represents a quantity of SRS-Pos resource set instances or SRS-Pos measurement occasions configured for an i-th second network-side device measured value instance, $M_{Pi} \geq 1$.

Specifically, the semi-persistent SRS-Pos also has a period, and uses the same set of period values as the periodic SRS-Pos.

In the embodiment of the present disclosure, the second network-side device measurement time window information includes a measurement time window duration $MTW'_{TRP}$ for aperiodic SRS-Pos; where

$$MTW'_{TRP} = LH_{SRS-Pos} \times \sum_{i=1}^{K_A} M_{Ai}$$ ; $LH_{SRS-Pos}$ represents a duration or a quantity of time slots occupied by an aperiodic SRS-Pos resource set or SRS-Pos measurement occasion; $K_A$ represents a quantity of second network-side device measured value instances within one second network-side device measurement time window, $K_A \geq 1$; and $M_{Ai}$ represents a quantity of SRS-Pos resource set instances or SRS-Pos measurement occasions configured for an i-th second network-side device measured value instance, $M_{Ai} \geq 1$.

The measurement time window corresponding to the second network-side device measurement time window information includes at least two SRS-Pos resource set instances located in different Uplink Bandwidth Parts (UL BWP).

In the embodiment of the present disclosure, the receiving the information of the measurement time window sent by the first network-side device includes: receiving the information of the measurement time window directly sent by the first network-side device; or, sending a second request to the first network-side device, receiving the information of the measurement time window sent by the first network-side device in response to the second request.

The receiving the information of the measurement time window sent by the first network-side device includes: receiving the information of the measurement time window sent by the first network-side device through a New Radio Positioning Protocol A (NRPPa) signaling.

It should be noted here that in the embodiments of the present disclosure, the terminal may determine the position information of the terminal according to at least one measured value instance above. The relevant content of the information of the measurement time window may refer to the above, and details thereof will not be repeated here.

The information processing method provided by the embodiments of the present disclosure is further described below. The first network-side device may be a LMF as an example, the second network-side device may be a TRP as an example, the first positioning signal may be a DL-PRS as an example, and the second positioning signal may be an SRS-Pos as an example.

In view of the above technical problems, the embodiments of the present disclosure provide an information processing method, and specifically relate to a method for configuring information of measurement time window, where the information of the measurement time window may be configured and sent by the LMF or the UE; the TRP may feed back the measured value instance to the LMF or the UE according to the information of the measurement time window; the LMF or the UE may complete UE positioning according to the measured value instance; after the UE positioning is completed by the LMF In some cases, the UE needs to feed back the measured value instance according to the information of the measurement time window; when the UE completes UE positioning, the UE obtains the measured value instance according to the information of the measurement time window, and completes UE positioning accordingly.

It can also be understood as: according to the configured information of measurement time window, the UE or TRP measures DL-PRS or SRS-Pos within the measurement time window to obtain at least one measured value instance (i.e., measurement result), and the UE or TRP reports the measurement amount For instance, the UE or LMF completes the UE positioning process according to the reported measured value instance. This solution provides a means capable of solving the above-mentioned technical problems; this solution can also realize the purpose of UE reporting a unilateral measurement result.

This program mainly involves the following parts:

Part 1, the configuration of the measurement time window;

(1) The measurement time window includes UE measurement time window and TRP measurement time window.

(2) The UE measurement time window refers to the time window for the UE to measure DL-PRS. In this time window, the UE obtains at least one UE measured value instance by measuring the DL-PRS.

(3) TRP measurement time window refers to the time window for TRP to measure SRS-Pos. In this time window, TRP obtains at least one TRP measured value instance by measuring SRS-Pos.

(4) UE or TRP does not measure DL-PRS or SRS-Pos outside the measurement time window.

(5) When the UE or TRP reports the measured value instance, it also reports the time stamp corresponding to the measured value instance.

(6) Examples of UE measured values include DL-RSTD, DL-RSRP, UE sending and receiving time difference, etc.;

(7) Examples of TRP measured values include UL-RTOA, UL-RSRP, gNB sending and receiving time difference, etc.

Part 2, the parameters of the measurement time window;

(8) The method of measuring time window configuration includes at least one of the following:

Mode 1: only the duration of measurement time window is configured; the information corresponding to the measurement time window includes the duration of measurement time window;

Mode 2: The start time of the measurement time window and the duration of measurement time window are configured at the same time; the information corresponding to the measurement time window includes the duration and start time of the measurement time window;

Mode 3: The start time of the measurement time window and the end time of the measurement time window are configured at the same time. The information corresponding to the measurement time window includes a start time and an end time of the measurement time window.

(9) The configuration of the time in the configuration of the measurement time window includes at least one of the following:

Mode 1: Configure in the form of Coordinated Universal Time (UTC); correspondingly, the information of the measurement time window includes UTC information of Coordinated Universal Time;

Method 2: Configure in the form of system radio frame number (SFN) and slot number (Slot number). Information corresponding to the measurement time window includes System Frame Number (SFN) information and slot number information.

(10) Newly introduced measurement time window index number:

A combination of various parameters of a measurement time window, including parameters such as its duration, is determined by the measurement time index number. The information corresponding to the measurement time window includes a measurement time window index number; where, the measurement time window index number corresponds to a set of parameter information of the measurement time window; the parameter information includes the duration of measurement time window; or, duration and start time thereof; or, start time and end time thereof.

(11) For periodic or semi-persistent DL-PRS and SRS-Pos:

1) DL-PRS: The duration of the UE measurement time window $MTW_{UE}$ is:

$$MTW_{UE} = PD_{DL-PRS} \times \sum_{i=1}^{J_P} N_{Pi};$$

$PD_{DL-PRS}$ is the period of DL-PRS;
$J_P$ represents a quantity of terminal measured value instances within one terminal measurement time window, $J_P \geq 1$;
$N_{Pi}$ represents a quantity of DL-PRS resource set instances or DL-PRS measurement occasions configured for an i-th terminal measured value instance, $N_{Pi} \geq 1$.

2) SRS-Pos: The duration of the TRP measurement time window $MTW_{TRP}$ is:

$$MTW_{TRP} = PD_{SRS-Pos} \times \sum_{i=1}^{K_P} M_{Pi};$$

$PD_{SRS-Pos}$ is the period of SRS-Pos;
$K_P$ represents a quantity of second network-side device measured value instances within one second network-side device measurement time window, $K_P \geq 1$;

$M_{Pi}$ represents a quantity of SRS-Pos resource set instances or SRS-Pos measurement occasions configured for an i-th second network-side device measured value instance, $M_{Pi} \geq 1$.

(12) For aperiodic DL-PRS and SRS-Pos:

1) DL-PRS: The duration of the UE measurement time window $MTW'_{UE}$ is:

$$MTW'_{UE} = LH_{DL-PRS} \times \sum_{i=1}^{J_A} N_{Ai};$$

$LH_{DL-PRS}$ is the duration or the quantity of time slots occupied by an aperiodic DL-PRS resource set or DL-PRS measurement occasion ;

$J_A$ represents a quantity of UE measured value instances within one terminal measurement time window, $J_A \geq 1$;

$N_{Ai}$ represents a quantity of DL-PRS resource set instances or DL-PRS measurement occasions configured for an i-th terminal measured value instance, $N_{Ai} \geq 1$.

2) SRS-Pos: The duration of the TRP measurement time window $MTW'_{TRP}$ is:

$$MTW'_{TRP} = LH_{SRS-Pos} \times \sum_{i=1}^{K_A} M_{Ai};$$

$LH_{SRS-Pos}$ represents a duration or a quantity of time slots occupied by an aperiodic SRS-Pos resource set or SRS-Pos measurement occasion;

$K_A$ represents a quantity of second network-side device measured value instances within one second network-side device measurement time window, $K_A \geq 1$; and

$M_{Ai}$ represents a quantity of SRS-Pos resource set instances or SRS-Pos measurement occasions configured for an i-th second network-side device measured value instance, $M_{Ai} \geq 1$.

(13) For the Multi-RTT positioning scheme, the duration of the UE measurement time window configured to measure DL-PRS should be the same as the duration of the TRP measurement time window configured to measure SRS-Pos; or the UE measurement time window and the TRP measurement time window have the same index number. The measurement time window duration corresponding to the terminal measurement time window information is the same as the measurement time window duration corresponding to the second network-side device measurement time window information; or, the measurement time window index corresponding to the terminal measurement time window information The number is the same as the measurement time window index number corresponding to the second network-side device measurement time window information.

(14) A UE measurement time window may contain multiple DL-PRS resource set instances located in different frequency layers.

(15) A TRP measurement time window may contain multiple SRS-Pos resource set instances located in different UL BWPs.

(16) Whether the UE can be configured with a UE measurement time window and measure DL-PRS within the measurement time window is a UE capability. Correspondly, whether the terminal can be configured with a measurement time window corresponding to the terminal measurement time window information and measure the first positioning signal within the measurement time window is a terminal capability.

Part 3, the configuration method and signaling of the measurement time window;

(17) The UE measurement time window configuration method includes at least one of the following:

Method 1: LMF directly configures the UE measurement time window:

Mode 2: According to the request of the UE, the LMF configures the UE measurement time window; corresponding to the first request sent by the terminal, sending the information of the measurement time window to the terminal;

Mode 3: The UE reports the UE capabilities (value ranges of various parameters J, K, N, and M), and the LMF configures the UE measurement time window for the above parameter ranges that the UE can support. Corresponding to the capability information of the terminal, sending the information of the measurement time window to the terminal.

(18) Configuration method of TRP measurement time window:

Method 1: LMF directly configures the TRP measurement time window:

Mode 2: According to the request of the TRP, the LMF configures the TRP measurement time window. Corresponding to the second request sent by the second network-side device, sending the information of the measurement time window to the second network-side device.

(19) Configuration signaling of UE measurement time window and TRP measurement time window:

1) For UE measurement time window: LMF can be configured to UE through LPP signaling.
2) For the TRP measurement time window: LMF can be configured to TRP through NRPPa signaling.

Part 4, the configuration scheme of aperiodic DL-PRS;

(20) Aperiodic DL-PRS is configured in the form of aperiodic DL-PRS resources, aperiodic DL-PRS resource sets, and aperiodic DL-PRS resource set instances (corresponding to DL-PRS measurement window information):

1) An aperiodic DL-PRS resource set includes at least one aperiodic DL-PRS resource;
2) An aperiodic DL-PRS resource set instance includes at least one aperiodic DL-PRS resource set. The aperiodic DL-PRS resource sets are repeatedly sent (corresponding to the fact that each of the aperiodic DL-PRS resource sets is the same, and each of the aperiodic DL-PRS resource sets is sent at different times).

(21) An aperiodic DL-PRS measurement occasion refers to an aperiodic DL-PRS resource set instance. One aperiodic DL-PRS measurement occasion corresponds to one aperiodic DL-PRS resource set instance.

(22) The TRP mentioned above can also be gNB.

The solutions provided by the embodiments of the present disclosure are illustrated below.

Example 1 (configuration of the measurement time window):

The solution in this example involves: according to the configured information of measurement time window, the UE or TRP measures DL-PRS or SRS-Pos within the measurement time window to obtain at least one measured value instance, and the UE or TRP reports the measured value instance.

Specifically, this example provides a method for configuring the measurement time window. The characteristic of the measurement time window is that the UE or TRP can only complete the measurement process of DL-PRS and SRS-Pos within the specified measurement time window. In fact, due to introducing a measurement time window, the measurement behavior of UE or TRP is limited. One possible configuration scheme is to configure the same measurement time window for UE and TRP in the Multi-RTT positioning method, so that the measurement time range of each measured values is the same, the time stamps of these measured values are also located in a short time interval, and the sending and receiving timing errors of these measured values are also similar, which better ensures that the LMF or UE passes through when calculating the terminal position. The difference method eliminates the influence of the sending and receiving timing error, and avoids the influence of time-varying sending and receiving timing error on the calculation accuracy of the terminal position, thus improving the positioning accuracy of the system.

The measurement time window includes a UE measurement time window and a TRP measurement time window.

The UE measurement time window refers to a time window for the UE to measure DL-PRS. In this time window, the UE obtains at least one UE measured value instance by measuring the DL-PRS.

The TRP measurement time window refers to a time window for the TRP to measure the SRS-Pos. In this time window, the TRP obtains at least one TRP measured value instance by measuring the SRS-Pos.

The UE or TRP does not measure DL-PRS or SRS-Pos outside the measurement time window. Moreover, when reporting the measured value instance, the UE or the TRP simultaneously reports the time stamp corresponding to the measured value instance.

Examples of UE measured values mentioned above include DL-RSTD, DL-RSRP, and UE sending and receiving time difference; examples of TRP measured values include UL-RTOA, UL-RSRP, and gNB sending and receiving time difference.

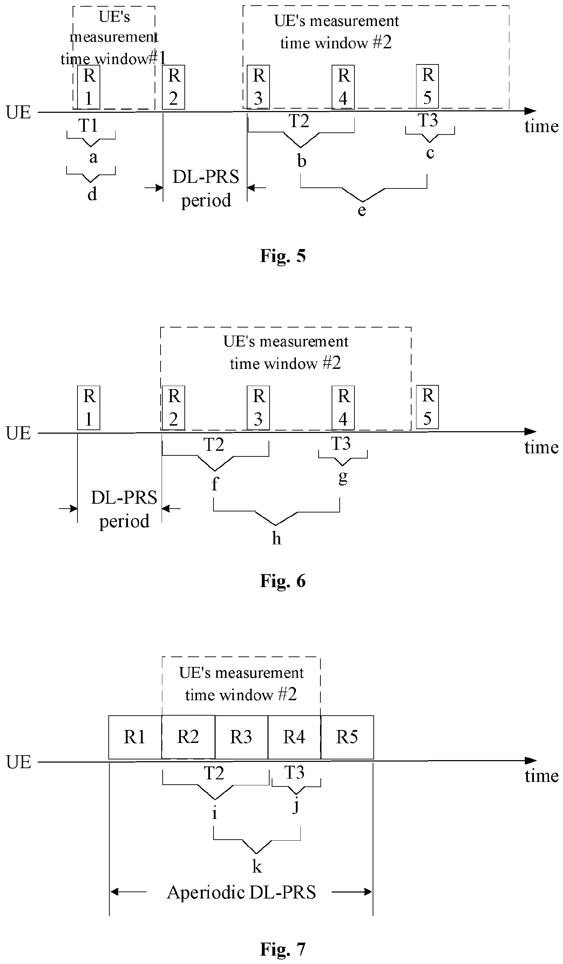

Taking DL-RSTD as an example, as shown in Fig.5, the UE's measurement time window is shown in the dotted rectangular box in the figure. In the figure, a represents the measured value instance #1, b represents the measured value instance #2, and c represents the measured value instance #3, d indicates measurement report #1, and e indicates measurement report #2. The UE in the figure is configured with one DL-PRS resource set instance or DL-PRS measurement occasion in one DL-PRS cycle. In the figure, R1-R5 represent each DL-PRS in five DL-PRS cycles. PRS resource set instance or DL-PRS measurement occasion. The measurement time window may not include some measurement occasions, such as R2. The UE reported 1 measured value instance in the first measurement report (that is, measurement report #1), which is measured value instance #1, and the UE reported 2 in the second measurement report (that is, measurement report #2). The measured value instances are measured value instance #2 and measured value instance 3 respectively. Each of the three measured value instances has its own time stamp. The measured value instance #1 is obtained by using R1, and its timestamp is T1; the measured value instance #2 is obtained by using R3-R4, and its timestamp is T2; the measured value instance #3 is obtained by using R5, and its The timestamp is T3. In this way, when the UE reports the three measured value instances in the two measurement reports, it not only has timestamp information, but also the timestamp can correspond to a small range according to the configuration of the measurement time window, thus facilitating various measurements time stamp matching between quantities. Since the sending and receiving timing error is time-varying, the same or similar measurements in time will have the same or similar sending and receiving timing error. In this way, the timestamp matching based on the measurement time window becomes particularly important. This matching is beneficial for the UE or LMF to estimate or eliminate the sending and receiving timing error when performing positioning calculation.

Using the method in this example, the measurement time range of each measured value can be limited by configuring an appropriate measurement time window for the UE or TRP, so as to facilitate timestamp matching between various measured values, so that the LMF or UE When calculating the terminal position, it is possible to more accurately estimate the sending and receiving timing error, or eliminate the influence of sending and receiving timing error, and avoid the influence of time-varying sending and receiving timing error on the calculation accuracy of the terminal position, thereby improving the positioning accuracy of the system.

Example 2 (parameters of the measurement time window):

The solution in this example involves: according to the configured information of measurement time window, the UE or TRP measures DL-PRS or SRS-Pos within the measurement time window to obtain at least one measured value instance, and the UE or TRP reports the measured value instance.

  1. The method of measuring time window configuration includes at least one of the following:

    Method 1: Only the duration of measurement time window is configured;
    Mode 2: The start time of the measurement time window and the duration of measurement time window are configured at the same time.

    Mode 3: The start time of the measurement time window and the end time of the measurement time window are configured at the same time.

  2. The configuration of the time in the configuration of the measurement time window includes at least one of the following:

    Method 1: Configure in the form of Universal Time Coordinated (UTC);
    Method 2: Configure in the form of system radio frame number (SFN) and slot number (Slot number).

  3. Newly introduced measurement time window index number:

A combination of various parameters of a measurement time window, including parameters such as its duration, is determined by the measurement time index number.

It should be pointed out that, for method 1 of the measurement time window configuration methods, if only the duration of measurement time window is configured, then the start time of the measurement time window can default to the UE or TRP expected DL-PRS or SRS-Pos moment of arrival. For DL-PRS, the moment can be indicated by the parameters DL (downlink)-PRS (positioning reference signal)-expectedRSTD (expected reference signal time difference) and DL-PRS-expectedRSTD-uncertainty.

Using the method in this example, the measurement time window and the reference time of the measurement time window can be configured in different ways, so that the UE or TRP can determine the specific time position of the measurement time window according to the above configuration, and in the measurement time window, the measurement of DL-PRS or SRS-Pos can be completed within a period of time, so that the LMF or UE can estimate the sending and receiving timing error more accurately when calculating the terminal position, or eliminate the influence of sending and receiving timing error, and avoid the influence of time-varying sending and receiving timing error on the accuracy of terminal position calculation, thereby improving the positioning accuracy of the system.

Example 3 (measurement time window parameters for periodic or semi-persistent DL-PRS and SRS-Pos):

The solution in this example involves: according to the configured information of measurement time window, the UE or TRP measures DL-PRS or SRS-Pos within the measurement time window to obtain at least one measured value instance, and the UE or TRP reports the measured value instance.
where for periodic or semi-persistent DL-PRS and SRS-Pos:

1. DL-PRS: The duration of the UE measurement time window $MTW_{UE}$ is:

$$MTW_{UE} = PD_{DL-PRS} \times \sum_{i=1}^{J_P} N_{Pi};$$

$PD_{DL-PRS}$ is the period of DL-PRS;
$J_P$ is the quantity of UE measured value instances within one UE measurement time window, $J_P \geq 1$;
$N_{Pi}$ is the quantity of DL-PRS resource set instances or DL-PRS measurement occasions configured for the i-th UE measured value instance, $N_{Pi} \geq 1$.

2. SRS-Pos: the duration of the TRP measurement time window $MTW_{TRP}$ is:

$$MTW_{TRP} = PD_{SRS-Pos} \times \sum_{i=1}^{K_P} M_{Pi};$$

$PD_{SRS-Pos}$ is the period of SRS-Pos;
$K_P$ is the quantity of TRP measured value instances within one TRP measurement time window, $K_P \geq 1$;
$M_{Pi}$ is the quantity of SRS-Pos resource set instances or SRS-Pos measurement occasions configured for the i-th TRP measured value instance, $M_{Pi} \geq 1$.

As shown in Fig. 6, f in the figure represents measured value instance #2, g represents measured value instance #3, and h represents measurement report #2. The UE in the figure is configured with one DL-PRS resource set instance or DL-PRS measurement occasion in one DL-PRS cycle. In the figure, R1-R5 represent each DL-PRS in five DL-PRS cycles. PRS resource set instance or DL-PRS measurement occasion. The measurement time window may not include some measurement occasions, such as R2 and R5. In UE measurement time window #2, measurement report #2 includes two measured value instance #2 and measured value instance #3, and measured value instance #2 is configured with 2 DL-PRS resources set instance or DL-PRS measurement occasion (corresponding to R2 and R3), and measured value instance #3 is configured with a DL-PRS resource set instance or DL-PRS measurement occasion (corresponding to R4), so the duration of UE measurement time window #2 is 3 DL-PRS cycles.

Using the method in this example, the measurement time range of each periodic or semi-persistent measurement can be limited by configuring an appropriate measurement time window for the UE or TRP, which facilitates the measurement of various periodic or semi-persistent measurements. Timestamp matching is performed between time stamps, so that LMF or UE can more accurately estimate the sending and receiving timing error when calculating the terminal position, or eliminate the influence of sending and receiving timing error, and avoid the influence of time-varying sending and receiving timing error on the accuracy of terminal position calculation, thereby improving the positioning accuracy of the system.

Example 4 (measurement time window parameters for aperiodic DL-PRS and SRS-Pos):

The solution in this example involves: according to the configured information of measurement time window, the UE or TRP measures DL-PRS or SRS-Pos within the measurement time window to obtain at least one measured value instance, and the UE or TRP reports the measured value instance.
where for aperiodic DL-PRS and SRS-Pos:

1. DL-PRS: The duration of the UE measurement time window $MTW'_{UE}$ is:

$$MTW'_{UE} = LH_{DL-PRS} \times \sum_{i=1}^{J_A} N_{Ai};$$

$LH_{DL-PRS}$ is the duration or the quantity of time slots occupied by an aperiodic DL-PRS resource set or DL-PRS measurement occasion;
$J_A$ is the quantity of UE measured value instances within one UE measurement time window, $J_A \geq 1$;
$N_{Ai}$ is the quantity of DL-PRS resource set instances or DL-PRS measurement occasions configured for the i-th UE measured value instance, $N_{Ai} \geq 1$.

2. SRS-Pos: the duration of the TRP measurement time window $MTW'_{TRP}$ is:

$$MTW'_{TRP} = LH_{SRS-Pos} \times \sum_{i=1}^{K_A} M_{Ai};$$

$LH_{SRS-Pos}$ is the duration or quantity of time slots occupied by an aperiodic SRS-Pos resource set or SRS-Pos measurement occasion;
$K_A$ is the quantity of TRP measured value instances within one TRP measurement time window, $K_A \geq 1$;
$M_{Ai}$ is the quantity of SRS-Pos resource set instances or SRS-Pos measurement occasions configured for the i-th TRP measured value instance, $M_{Ai} \geq 1$.

As shown in Fig. 7, i in the figure represents measured value instance #2, j represents measured value instance #3, and k represents measurement report

---

#2. R1-R5 respectively represent 5 DL-PRS resource set instances or DL-PRS measurement occasions. In UE measurement time window #2, measurement report #2 includes two measured value instances, and measured value instance #2 is configured with two DL-PRS resource set instances or DL-PRS measurement occasions (corresponding to R2 and R3) , and measured value instance #3 is configured with one DL-PRS resource set instance or DL-PRS measurement occasion (corresponding to R4), assuming that the duration of each DL-PRS resource set instance or DL-PRS measurement occasion is 1ms, then the duration of UE measurement time window #2 is 3ms.

Using the method in this example, the measurement time range of each aperiodic measurement can be limited by configuring an appropriate measurement time window for the UE or TRP, so as to facilitate timestamp matching between various aperiodic measurements. This enables the LMF or UE to more accurately estimate the sending and receiving timing error when calculating the location of the terminal, or eliminate the impact of the sending and receiving timing error, avoiding the influence of time-varying sending and receiving timing error on the accuracy of terminal location calculation, thereby improving the positioning accuracy of the system.

Example 5 (configuration and signaling of the measurement time window):

The solution in this example involves: according to the configured information of measurement time window, the UE or TRP measures DL-PRS or SRS-Pos within the measurement time window to obtain at least one measured value instance, and the UE or TRP reports the measured value instance.

1. The UE measurement time window configuration method includes at least one of the following three possible methods:

Solution 1: LMF directly configures the UE measurement time window:
Scheme 2: According to the request of the UE, the LMF configures the UE measurement time window;
Solution 3: The UE reports the UE capability (value ranges of various parameters J, K, N, and M), and the LMF configures the UE measurement time window for the above parameter ranges that the UE can support.

2. The configuration method of the TRP measurement time window includes at least one of the following two possible methods:

Solution 1: LMF directly configures the TRP measurement time window:

Scheme 2: According to the request of the TRP, the LMF configures the TRP measurement time window.

3. Configuration signaling of UE measurement time window and TRP measurement time window:

1) For UE measurement time window:
LMF can be configured to UE through LPP signaling.
2) for the TRP measurement time window:
LMF can be configured to TRP through NRPPa signaling.

Using the method in this example, the measurement time range of each measured value can be limited by configuring an appropriate measurement time window for the UE or TRP, so as to facilitate timestamp matching between various measured values, so that when the LMF or UE calculates the terminal position, it is possible to more accurately estimate the sending and receiving timing error, or eliminate the influence of sending and receiving timing error, and avoid the influence of time-varying sending and receiving timing error on the calculation accuracy of the terminal position, thereby improving the positioning accuracy of the system.

Example 6 (aperiodic DL-PRS configuration scheme):

The solution in this example involves: aperiodic DL-PRS is configured in the form of aperiodic DL-PRS resources, aperiodic DL-PRS resource sets, and aperiodic DL-PRS resource set instances:

1) An aperiodic DL-PRS resource set includes at least one aperiodic DL-PRS resource;
2) A DL-PRS resource set instance includes at least one DL-PRS resource set, and when there is more than one DL-PRS resource set, multiple aperiodic DL-PRS resource sets are sent repeatedly.

In addition, an aperiodic DL-PRS measurement occasion refers to an aperiodic DL-PRS resource set instance.

Using the method in this example, the aperiodic DL-PRS can be configured in the form of resources, resource sets, and resource set instances, so that the measurement time window of the aperiodic DL-PRS can be configured in this configuration mode, and then It can make the LMF or UE more accurately estimate the sending and receiving timing error when calculating the position of the terminal, or eliminate the influence of the sending and receiving timing error.

As can be seen from the above, the embodiments of the present disclosure provide a method for configuring a measurement time window. Compared with related art, the present disclosure configures a suitable measurement time window (also understood as a matching measurement time window, For example, the same time window, or the difference between the two time windows is within the threshold range), so that the measurement time range of each measured value is limited, which is convenient to match the timestamps among various measured values, so that when the LMF or UE calculates the terminal position, it is possible to more accurately estimate the sending and receiving timing error, or eliminate the influence of sending and receiving timing error, and avoid the influence of time-varying sending and receiving timing error on the calculation accuracy of the terminal position, thereby improving the positioning accuracy of the system.

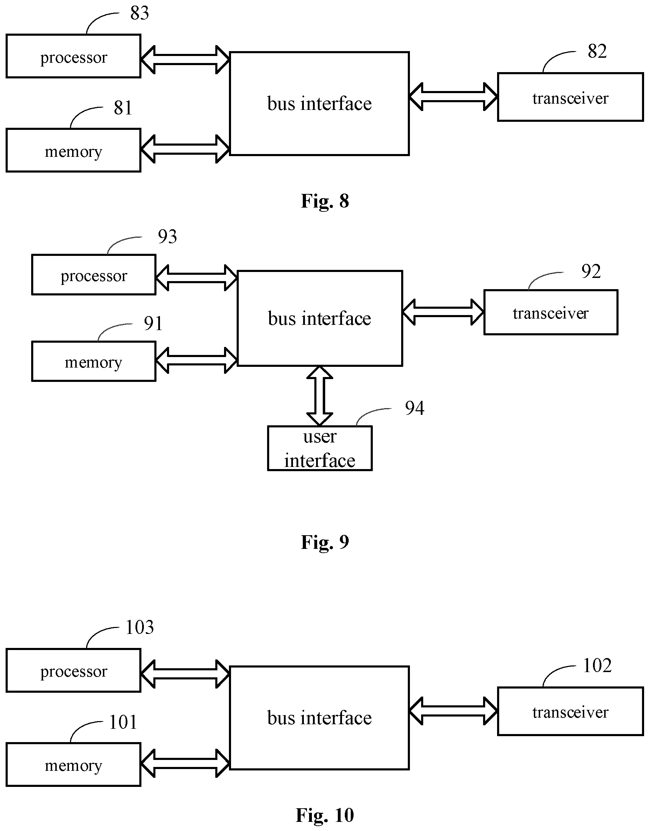

An embodiment of the present disclosure also provides a network-side device, the network-side device is a first network-side device, as shown in Fig. 8 , including a memory 81, a transceiver 82, and a processor 83: The memory 81 is configured to store computer programs; the transceiver 82 is configured to send and receive data under the control of the processor 83; the processor 83 is configured to read the computer programs in the memory 81 to perform:

receiving, through the transceiver 82, at least one measured value instance which is fed back by a terminal and/or a second network-side device according to information of a measurement time window; determining position information of the terminal according to the at least one measured value instance; where the information of the measurement time window includes terminal measurement time window information and/or second network-side device measurement time window information; the first network-side device is a positioning server or other network element capable of determining the position information of the terminal except the positioning server; the second network-side device is a base station or a Transmit and Receive Point (TRP).

According to the embodiments of the network-side device, at least one measured value instance which is fed back by a terminal and/or a second network-side device according to information of a measurement time window is received, position information of the terminal is determined according to the at least one measured value instance, where the information of the measurement time window includes terminal measurement time window information and/or second network-side device measurement time window information, the first network-side device is a positioning server or other network element capable of determining the position information of the terminal except the positioning server, and the second network-side device is a base station or a TRP. Therefore, the terminal and the second network-side device may measure the measured value within a suitable (i.e., matched) measurement time window to obtain a measured value instance relatively matched in terms of time, so that the first network-side device may estimate the sending and receiving timing error more accurately when determining the position of the terminal (based on the measured value instance), or eliminate the influence of sending and receiving timing error, and avoid the influence of time-varying sending and receiving timing error on the accuracy of terminal position calculation, thereby improving the positioning accuracy of the system, the problem of poor accuracy of the positioning-related information processing scheme in the related art is well solved.

Specifically, the transceiver 82 is configured to receive and send data under the control of the processor 83.

In Fig. 8 , the bus architecture may include any number of interconnected buses and bridges, specifically, one or more processors represented by the processor 83 and various circuits of the memory represented by the memory 81 are linked together. The bus architecture can also link together various other circuits such as peripherals, voltage regulators, and power management circuits, etc., which are well known in the art and therefore will not be further described herein. The bus interface provides the interface. Transceiver 82 may be a plurality of elements, including a transmitter and a receiver, providing means for communicating with various other devices over transmission media, including wireless channels, wired channels, fiber optic cables, and the like. The processor 83 is responsible for managing the bus architecture and general processing, and the memory 81 can store data used by the processor 83 when performing operations.

The processor 83 may be a central processor (CPU), an Application Specific Integrated Circuit (ASIC), a Field-Programmable Gate Array (FPGA) or a Complex Programmable Logic Device (CPLD), the processor can also adopt a multi-core architecture.

The processor is configured to execute any one of the methods provided by the embodiments of the present disclosure according to the obtained executable instructions by calling the computer program stored in the memory. The processor and memory may also be physically separated.

Further, Optionally, the operations further include:

sending, through the transceiver, the information of the measurement time window to the terminal and/or the second network-side device.

The terminal measurement time window information includes time window information for the terminal to measure a Downlink Positioning Reference Signal (DL-PRS) and/or time window information for the terminal to measure other downlink reference signals for positioning except the DL-PRS; and/or

the second network-side device measurement time window information includes time window information for the second network-side device to measure a Sounding Reference Signal for Positioning (SRS-Pos) and/or time window information for the second network-side device to measure other uplink reference signals for positioning except the SRS-Pos.

In the embodiment of the present disclosure, the receiving the at least one measured value instance which is fed back by the terminal and/or the second network-side device according to the information of the measurement time window includes: receiving the at least one measured value instance and a time stamp corresponding to the measured value instance which are fed back by the terminal and/or the second network-side device according to the information of the measurement time window; the determining the position information of the terminal according to the at least one measured value instance includes: obtaining the position information of the terminal according to the at least one measured value instance and the time stamp corresponding to the measured value instance.

In the embodiment of the present disclosure, the at least one measured value instance includes: a terminal measured value instance and/or a second network-side device measured value instance;

where the terminal measured value instance includes: a Downlink Reference Signal Time Difference (DL-RSTD), a Downlink Reference Signal Received Power (DL-RSRP), and/or a terminal sending and receiving time difference; and/or, the second network-side device measured value instance includes: an Uplink Time Difference Of Arrival (UL-RTOA), an Uplink Reference Signal Received Power (UL-RSRP), and/or a second network-side device sending and receiving time difference.

The information of the measurement time window includes a duration of the measurement time window; or the information of the measurement time window includes a duration and a start time of the measurement time window; or the information of the measurement time window includes a start time and an end time of the measurement time window.

In the embodiment of the present disclosure, the information of the measurement time window includes Universal Time Coordinated (UTC) information; and/or the information of the measurement time window includes System Frame Number (SFN) information and slot number information.

In the embodiment of the present disclosure, the information of the measurement time window includes a measurement time window index number; where the measurement time window index number corresponds to a set of parameter information of the measurement time window; the parameter information includes a duration of the measurement time window; or a duration and a start time of the measurement time window; or a start time and an end time of the measurement time window.

The duration of the measurement time window corresponding to the terminal measurement time window information is the same as the duration of the measurement time window corresponding to the second network-side device measurement time window information; or

the measurement time window index number corresponding to the terminal measurement time window information is the same as the measurement time window index number corresponding to the second network-side device measurement time window information.

Optionally, the information of the measurement time window includes at least one of: a parameter J, where the parameter J represents a quantity of terminal measured value instances within one terminal measurement time window, $J \geq 1$; a parameter $N_i$, where the parameter $N_i$ represents a quantity of DL-PRS resource set instances or DL-PRS measurement occasions configured for an i-th terminal measured value instance, $N_i \geq 1$; a parameter K, where the parameter K represents a quantity of second network-side device measured value instances within one second network-side device measurement time window, $K \geq 1$; and a parameter $M_i$, where the parameter $M_i$ represents a quantity of SRS-Pos resource set instances or SRS-Pos measurement occasions configured for an i-th second network-side device measured value instance, $M_i \geq 1$.

In the embodiment of the present disclosure, the terminal measurement time window information includes a measurement time window duration $MTW_{UE}$ for periodic or semi-persistent DL-PRS; where

$$MTW_{UE} = PD_{DL-PRS} \times \sum_{i=1}^{J_P} N_{Pi}$$

; $PD_{DL-PRS}$ represents a period of DL-PRS; $J_P$ represents a quantity of terminal measured value instances within one terminal measurement time window, $J_P \geq 1$; and $N_{Pi}$ represents a quantity of DL-PRS resource set instances or DL-PRS measurement occasions configured for an i-th terminal measured value instance, $N_{Pi} \geq 1$.

In the embodiment of the present disclosure, the second network-side device measurement time window information includes a measurement time window duration $MTW_{TRP}$ for periodic or semi-persistent SRS-Pos; where

$$MTW_{TRP} = PD_{SRS-Pos} \times \sum_{i=1}^{K_P} M_{Pi}$$

; $PD_{SRS-Pos}$ represents a period of SRS-Pos; $K_P$ represents a quantity of second network-side device measured value instances within one second network-side device measurement time window, $K_P \geq 1$; and $M_{Pi}$ represents a quantity of SRS-Pos resource set instances or SRS-Pos measurement occasions configured for an i-th second network-side device measured value instance, $M_{Pi} \geq 1$.

In the embodiment of the present disclosure, the terminal measurement time window information includes a measurement time window duration $MTW'_{UE}$ for aperiodic DL-PRS; where

$$MTW'_{UE} = LH_{DL-PRS} \times \sum_{i=1}^{J_A} N_{Ai}$$

; $LH_{DL-PRS}$ represents a duration or a quantity of time slots occupied by an aperiodic DL-PRS resource set or DL-PRS measurement occasion; $J_A$ represents a quantity of UE measured value instances within one terminal measurement time window, $J_A \geq 1$; and $N_{Ai}$ represents a quantity of DL-PRS resource set instances or DL-PRS measurement occasions configured for an i-th terminal measured value instance, $N_{Ai} \geq 1$.

One aperiodic DL-PRS measurement occasion corresponds to one aperiodic DL-PRS resource set instance.

In the embodiment of the present disclosure, the second network-side device measurement time window information includes a measurement time window duration $MTW'_{TRP}$ for aperiodic SRS-Pos; where

$$MTW'_{TRP} = LH_{SRS-Pos} \times \sum_{i=1}^{K_A} M_{Ai} \;\; ; \;\; LH_{SRS-Pos}$$

represents a duration or a quantity of time slots occupied by an aperiodic SRS-Pos resource set or SRS-Pos measurement occasion; $K_A$ represents a quantity of second network-side device measured value instances within one second network-side device measurement time window, $K_A \geq 1$; and $M_{Ai}$ represents a quantity of SRS-Pos resource set instances or SRS-Pos measurement occasions configured for an i-th second network-side device measured value instance, $M_{Ai} \geq 1$.

Optionally, the measurement time window corresponding to the terminal measurement time window information includes at least two DL-PRS resource set instances located in different frequency layers; and/or the measurement time window corresponding to the second network-side device measurement time window information includes at least two SRS-Pos resource set instances located in different Uplink Bandwidth Parts (UL BWP).

In the embodiment of the present disclosure, the sending the information of the measurement time window to the terminal includes: directly sending, through the transceiver, the information of the measurement time window to the terminal; or, sending, through the transceiver, the information of the measurement time window to the terminal in response to a first request sent by the terminal; or, sending, through the transceiver, the information of the measurement time window to the terminal according to the capability information of the terminal.

The sending the information of the measurement time window to the second network-side device includes: directly sending, through the transceiver, the information of the measurement time window to the second network-side device; or, sending, through the transceiver, the information of the measurement time window to the second network-side device in response to a second request sent by the second network-side device.

In the embodiment of the present disclosure, the sending the information of the measurement time window to the terminal and/or the second network-side device includes: sending, through the transceiver, the information of the measurement time window to the terminal through a Long Term Evolution Positioning Protocol (LPP) signaling; and/or, sending, through the transceiver, the information of the measurement time window to the second network-side device through a New Radio Positioning Protocol A (NRPPa) signaling.

Further, the operations further include: when the terminal measurement time window information includes measurement window information for aperiodic DL-PRS, prior to the sending the information of the measurement time window to the terminal and/or the second network-side device, configuring the measurement window information for aperiodic DL-PRS according to first information; where the first information includes aperiodic DL-PRS resource information, aperiodic DL-PRS resource set information and/or aperiodic DL-PRS resource set instance information.

One aperiodic DL-PRS resource set includes at least one aperiodic DL-PRS resource; and/or one aperiodic DL-PRS resource set instance includes at least one aperiodic DL-PRS resource set, and when a quantity of the aperiodic DL-PRS resource set is more than one, all of the aperiodic DL-PRS resource sets are the same, and the aperiodic DL-PRS resource sets are sent at different times.

It should be noted here that the above-mentioned network-side device provided by the embodiment of the present disclosure can implement all the method steps implemented by the above-mentioned embodiment of the information processing method on the first network-side device side, and can achieve the same technical effect. Here, parts and beneficial effects in this embodiment that are the same as those in the method embodiment will not be described in detail again.

An embodiment of the present disclosure also provides a terminal, as shown in Fig. 9 , including a memory 91, a transceiver 92, and a processor 93:

The memory 91 is configured to store computer programs; the transceiver 92 is configured to send and receive data under the control of the processor 93; the processor 93 is configured to read the computer programs in the memory 91 to perform:

     obtaining information of a measurement time window;

     measuring a first positioning signal within the corresponding measurement time window according to the information of the measurement time window, to obtain at least one measured value instance; and

     sending, through the transceiver 92, the at least one measured value instance to a first network-side device;

     where the information of the measurement time window includes terminal measurement time window information;

     the first network-side device is a positioning server or other network element capable of determining position information of the terminal except the positioning server.

According to the embodiments of the terminal in the present disclosure, information of a measurement time window is obtained, a first positioning signal is measured within the corresponding measurement time window according to the information of the measurement time window, to obtain at least one measured value instance, and the at least one measured value instance is sent to a first network-side device, where the information of the measurement time window includes terminal measurement time window information, the first network-side device is a positioning server or other network element capable of determining position information of the terminal except the positioning server. Therefore, the terminal and the second network-side device may measure the measured value within a suitable (i.e., matched) measurement time window to obtain a measured value instance relatively matched in terms of time, so that the first network-side device may estimate the sending and receiving timing error more accurately when determining the position of the terminal (based on the measured value instance), or eliminate the influence of sending and receiving timing error, and avoid the influence of time-varying sending and receiving timing error on the accuracy of terminal position calculation, thereby improving the positioning accuracy of the system, the problem of poor accuracy of the positioning-related information processing scheme in the related art is well solved.

Specifically, the transceiver 92 is configured to receive and send data under the control of the processor 93.

In Fig. 9, the bus architecture may include any number of interconnected buses and bridges, specifically one or more processors represented by the processor 93 and various circuits of the memory represented by the memory 91 are linked together. The bus architecture can also link together various other circuits such as peripherals, voltage regulators, and power management circuits, etc., which are well known in the art and therefore will not be further described herein. The bus interface provides the interface. Transceiver 92 may be a plurality of elements, including a transmitter and a receiver, providing a unit for communicating with various other devices over transmission media, including wireless channels, wired channels, fiber optic cables. For different user equipments, the user interface 94 may also be an interface capable of connecting externally and internally to required equipment, and the connected equipment includes but not limited to a keypad, a display, a speaker, a microphone, a joystick, and the like.

The processor 93 is responsible for managing the bus architecture and general processing, and the memory 91 can store data used by the processor 93 when performing operations.

Optionally, the processor 93 may be a CPU (Central Processor), ASIC (Application Specific Integrated Circuit), FPGA (Field-Programmable Gate Array) or CPLD (Complex Programmable Logic Device), the processor can also adopt a multi-core architecture.

The processor is configured to execute any one of the methods provided by the embodiments of the present disclosure according to the obtained executable instructions by calling the computer program stored in the memory. The processor and memory may also be physically separated.

In the embodiment of the present disclosure, the sending the at least one measured value instance to the first network-side device includes: sending at least one measurement report to the first network-side device within a measurement time window corresponding to the terminal measurement time window information; where the measurement report carries at least one measured value instance.

The obtaining the information of the measurement time window includes: receiving, through the transceiver, the information of the measurement time window sent by the first network-side device; or configuring the information of the measurement time window autonomously by the terminal.

In the embodiment of the present disclosure, the obtaining the information of the measurement time window further includes: obtaining the information of the measurement time window of different second network-side devices; where the information of the measurement time window of different second network-side devices is the same or different.

In the embodiment of the present disclosure, the terminal measurement time window information includes time window information for the terminal to measure a Downlink Positioning Reference Signal (DL-PRS) and/or time window information for the terminal to measure other downlink reference signals for positioning except the DL-PRS; the first positioning signal includes a DL-PRS and/or the other downlink reference signals for positioning.

The sending the at least one measured value instance to the first network-side device includes: sending, through the transceiver, the at least one measured value instance and a time stamp corresponding to the measured value instance to the first network-side device.

In the embodiment of the present disclosure, the at least one measured value instance includes a terminal measured value instance; where the terminal measured value instance includes: a Downlink Reference Signal Time Difference (DL-RSTD), a Downlink Reference Signal Received Power (DL-RSRP), and/or a terminal sending and receiving time difference.

In the embodiment of the present disclosure, the information of the measurement time window includes a duration of the measurement time window; or the information of the measurement time window includes a duration and a start time of the measurement time window; or the information of the measurement time window includes a start time and an end time of the measurement time window.

In the embodiment of the present disclosure, the information of the measurement time window includes Universal Time Coordinated (UTC) information; and/or the information of the measurement time window includes System Frame Number (SFN) information and slot number information.

In the embodiment of the present disclosure, the information of the measurement time window includes a measurement time window index number; where the measurement time window index number corresponds to a set of parameter information of the measurement time window; the parameter information includes a duration of the measurement time window, or a duration and a start time of the measurement time window, or a start time and an end time of the measurement time window.

The duration of the measurement time window corresponding to the terminal measurement time window information is the same as the duration of the measurement time window corresponding to the second network-side device measurement time window information; or the measurement time window index number corresponding to the terminal measurement time window information is the same as the measurement time window index number corresponding to the second network-side device measurement time window information.

In the embodiment of the present disclosure, the information of the measurement time window includes at least one of: a parameter J, where the parameter J represents a quantity of terminal measured value instances within one terminal measurement time window, $J \geq 1$; a parameter $N_i$, where the parameter $N_i$ represents a quantity of DL-PRS resource set instances or DL-PRS measurement occasions configured for an i-th terminal measured value instance, $N_i \geq 1$; a parameter K, where the parameter K represents a quantity of second network-side device measured value instances within one second network-side device measurement time window, $K \geq 1$; and a parameter $M_i$, where the parameter $M_i$ represents a quantity of SRS-Pos resource set instances or SRS-Pos measurement occasions configured for an i-th second network-side device measured value instance, $M_i \geq 1$.

In the embodiment of the present disclosure, the terminal measurement time window information includes a measurement time window duration $MTW_{UE}$ for periodic or semi-persistent DL-PRS; where

$$MTW_{UE} = PD_{DL-PRS} \times \sum_{i=1}^{J_P} N_{Pi}$$

; $PD_{DL-PRS}$ represents a period of DL-PRS; $J_P$ represents a quantity of terminal measured value instances within one terminal measurement time window, $J_P \geq 1$; and $N_{Pi}$ represents a quantity of DL-PRS resource set instances or DL-PRS measurement occasions configured for an i-th terminal measured value instance, $N_{Pi} \geq 1$.

In the embodiment of the present disclosure, the terminal measurement time window information includes a measurement time window duration $MTW'_{UE}$

for aperiodic DL-PRS; where

$$MTW'_{UE} = LH_{DL-PRS} \times \sum_{i=1}^{J_A} N_{Ai}$$

; $LH_{DL-PRS}$ represents a duration or a quantity of time slots occupied by an aperiodic DL-PRS resource set or DL-PRS measurement occasion; $J_A$ represents a quantity of UE measured value instances within one terminal measurement time window, $J_A \geq 1$; and $N_{Ai}$ represents a quantity of DL-PRS resource set instances or DL-PRS measurement occasions configured for an i-th terminal measured value instance, $N_{Ai} \geq 1$.

One aperiodic DL-PRS measurement occasion corresponds to one aperiodic DL-PRS resource set instance.

In the embodiment of the present disclosure, the measurement time window corresponding to the terminal measurement time window information includes at least two DL-PRS resource set instances located in different frequency layers.

In the embodiment of the present disclosure, the receiving the information of the measurement time window sent by the first network-side device includes: receiving, through the transceiver, the information of the measurement time window directly sent by the first network-side device; or, sending, through the transceiver, a first request to the first network-side device; receiving the information of the measurement time window sent by the first network-side device in response to the first request; or, sending, through the transceiver, capability information of the terminal to the first network-side device, and receiving the information of the measurement time window sent by the first network-side device in response to the capability information.

In the embodiment of the present disclosure, the receiving the information of the measurement time window sent by the first network-side device includes: receiving, through the transceiver, the information of the measurement time window sent by the first network-side device through a Long Term Evolution Positioning Protocol (LPP) signaling.

In the embodiment of the present disclosure, when the terminal measurement time window information includes measurement window information for aperiodic DL-PRS, the configuring the information of the measurement time window autonomously by the terminal includes: configuring the measurement window information for aperiodic DL-PRS according to first information; where the first information includes aperiodic DL-PRS resource information, aperiodic DL-PRS resource set information and/or aperiodic DL-PRS resource set instance information.

One aperiodic DL-PRS resource set includes at least one aperiodic DL-PRS resource; and/or one aperiodic DL-PRS resource set instance includes at least one aperiodic DL-PRS resource set, and when a quantity of the aperiodic DL-PRS resource set is more than one, all of the aperiodic DL-PRS resource sets are the same, and the aperiodic DL-PRS resource sets are sent at different times.

In the embodiment of the present disclosure, whether the terminal is capable of being configured with a measurement time window corresponding to the terminal measurement time window information and measuring the first positioning signal within the measurement time window is a terminal capability.

It should be noted here that the above-mentioned terminal provided by the embodiment of the present disclosure can implement all the method steps implemented by the above-mentioned embodiment of the information processing method on the terminal side, and can achieve the same technical effect. The same parts and beneficial effects as those of the method embodiment will be described in detail.

An embodiment of the present disclosure also provides a network-side device, the network-side device is a second network-side device, as shown in Fig. 10 , including a memory 101, a transceiver 102, and a processor 103:

The memory 101 is configured to store computer programs; the transceiver 102 is configured to send and receive data under the control of the processor 103; the processor 103 is configured to read the computer programs in the memory 101 and perform:

> receiving, through the transceiver 102, information of a measurement time window sent by a first network-side device;
> measuring a second positioning signal within the corresponding measurement time window according to the information of the measurement time window, to obtain at least one measured value instance; and
> sending, through the transceiver 102, the at least one measured value instance to a first network-side device;
> where the information of the measurement time window includes second network-side device measurement time window information;
> the first network-side device is a positioning server or other network element capable of determining position information of the terminal except the positioning server; the second network-side device is a base station or a Transmit and Receive Point (TRP).

According to the embodiments of the network-side device of the present disclosure, information of a measurement time window sent by a first network-side device is received; a second positioning signal is measured within the corresponding measurement time window according to the information of the measurement time window, to obtain at least one measured value instance; and the at least one measured value instance is sent to a first network-side device; where the information of the measurement time window includes second network-side device measurement time window information; the first network-side device is a positioning server or other network element capable of determining position information of the terminal except the positioning server; the second network-side device is a base station or a Transmit and Receive Point (TRP). Therefore, the terminal and the second network-side device may measure the measured value within a suitable (i.e., matched) measurement time window to obtain a measured value instance relatively matched in terms of time, so that the first network-side device may estimate the sending and receiving timing error more accurately when determining the position of the terminal (based on the measured value instance), or eliminate the influence of sending and receiving timing error, and avoid the influence of time-varying sending and receiving timing error on the accuracy of terminal position calculation, thereby improving the positioning accuracy of the system, the problem of poor accuracy of the positioning-related information processing scheme in the related art is well solved.

Specifically, the transceiver 102 is configured to receive and send data under the control of the processor 103.

In Fig. 10, the bus architecture may include any number of interconnected buses and bridges, specifically one or more processors represented by the processor 103 and various circuits of the memory represented by the memory 101 are linked together. The bus architecture can also link together various other circuits such as peripherals, voltage regulators, and power management circuits, etc., which are well known in the art and therefore will not be further described herein. The bus interface provides the interface. Transceiver 102 may be a plurality of elements, including a transmitter and a receiver, providing a unit for communicating with various other devices over transmission media, including wireless channels, wired channels, optical cables, and other transmission media. The processor 103 is responsible for managing the bus architecture and general processing, and the memory 101 can store data used by the processor 103 when performing operations.

The processor 103 may be a central processor (CPU), an Application Specific Integrated Circuit (ASIC), a Field-Programmable Gate Array (FPGA) or a Complex Programmable Logic Device (CPLD), the processor can also adopt a multi-core architecture.

The processor is configured to execute any one of the methods provided by the embodiments of the present disclosure according to the obtained executable instructions by calling the computer program stored in the memory. The processor and memory may also be physically separated.

In the embodiment of the present disclosure, the sending the at least one measured value instance to the first network-side device includes: sending, through the transceiver, at least one measurement report to the first network-side device within a measurement time window corresponding to the second network-side device measurement time window information; where the measurement report carries at least one measured value instance.

In the embodiment of the present disclosure, the receiving the information of the measurement time window sent by the first network-side device includes: receiving the information of the measurement time window of different terminals sent by the first network-side device; where the information of the measurement time window of different terminals is the same or different.

The second network-side device measurement time window information includes time window information for the network-side device to measure a Sounding Reference Signal for Positioning (SRS-Pos) and/or time window information for the network-side device to measure other uplink reference signals for positioning except the SRS-Pos; the second positioning signal includes SRS-Pos and/or the other uplink reference signals for positioning.

In the embodiment of the present disclosure, the sending the at least one measured value instance to the first network-side device includes: sending the at least one measured value instance and a time stamp corresponding to the measured value instance to the first network-side device.

In the embodiment of the present disclosure, the at least one measured value instance includes a second network-side device measured value instance;

where the second network-side device measured value instance includes: an Uplink Time Difference Of Arrival (UL-RTOA), an Uplink Reference Signal Received Power (UL-RSRP), and/or a second network-side device sending and receiving time difference.

The information of the measurement time window includes a duration of the measurement time window; or the information of the measurement time window includes a duration and a start time of the measurement time window; or the information of the measurement time window includes a start time and an end time of the measurement time window.

In the embodiment of the present disclosure, the information of the measurement time window includes Universal Time Coordinated (UTC) information; and/or the information of the measurement time window includes System Frame Number (SFN) information and slot number information.

In the embodiment of the present disclosure, the information of the measurement time window includes a measurement time window index number; where the measurement time window index number corresponds to a set of parameter information of the measurement time window; the parameter information includes a duration of the measurement time window; or a duration and a start time of the measurement time window; or a start time and an end time of the measurement time window.

The duration of the measurement time window corresponding to the terminal measurement time window information is the same as the duration of the measurement time window corresponding to the second network-side device measurement time window information; or the measurement time window index number corresponding to the terminal measurement time window information is the same as the measurement time window index number corresponding to the second network-side device measurement time window information.

In the embodiment of the present disclosure, the information of the measurement time window includes at least one of: a parameter J, where the parameter J represents a quantity of terminal measured value instances within one terminal measurement time window, $J \geq 1$; a parameter $N_i$, where the parameter $N_i$ represents a quantity of DL-PRS resource set instances or DL-PRS measurement occasions configured for an i-th terminal measured value instance, $N_i \geq 1$; a parameter K, where the parameter K represents a quantity of second network-side device measured value instances within one second network-side device measurement time window, $K \geq 1$; and a parameter $M_i$, where the parameter $M_i$ represents a quantity of SRS-Pos resource set instances or SRS-Pos measurement occasions configured for an i-th second network-side device measured value instance, $M_i \geq 1$.

In the embodiment of the present disclosure, the second network-side device measurement time window information includes a measurement time window duration $MTW_{TRP}$ for periodic or semi-persistent SRS-Pos; where $MTW_{TRP} = PD_{SRS-Pos} \times \sum_{i=1}^{K_P} M_{Pi}$; $PD_{SRS-Pos}$ represents a period of SRS-Pos; $K_P$ represents a quantity of second network-side device measured value instances within one second network-side device measurement time window, $K_P \geq 1$; and $M_{Pi}$ represents a quantity of SRS-Pos resource set instances or SRS-Pos measurement occasions configured for an i-th second network-side device measured value instance, $M_{Pi} \geq 1$.

In the embodiment of the present disclosure, the second network-side device measurement time window information includes a measurement time window duration $MTW'_{TRP}$ for aperiodic SRS-Pos; where $MTW'_{TRP} = LH_{SRS-Pos} \times \sum_{i=1}^{K_A} M_{Ai}$; $LH_{SRS-Pos}$ represents a duration or a quantity of time slots occupied by an aperiodic SRS-Pos resource set or SRS-Pos measurement occasion; $K_A$ represents a quantity of second network-side device measured value instances within one second network-side device measurement time window, $K_A \geq 1$; and $M_{Ai}$ represents a quantity of SRS-Pos resource set instances or SRS-Pos measurement occasions configured for an i-th second network-side device measured value instance, $M_{Ai} \geq 1$.

Optionally, the measurement time window corresponding to the second network-side device measurement time window information includes at least two SRS-Pos resource set instances located in different Uplink Bandwidth Parts (UL BWP).

In the embodiment of the present disclosure, the receiving the information of the measurement time window sent by the first network-side device includes: receiving, through the transceiver, the information of the measurement time window directly sent by the first network-side device; or, sending, through the transceiver, a second request to the first network-side device, receiving the information of the measurement time window sent by the first network-side device in response to the second request.

In the embodiment of the present disclosure, the receiving the information of the measurement time window sent by the first network-side device includes: receiving, through the transceiver, the information of the measurement time window sent by the first network-side device through a New Radio Positioning Protocol A (NRPPa) signaling.

It should be noted here that the above-mentioned network-side device provided by the embodiments of the present disclosure can implement all the method steps implemented by the above-mentioned embodiment of the information processing method on the second network-side device side, and can achieve the same technical effect. Here, the parts and beneficial effects in this embodiment that are the same as those in the method embodiment will not be described in detail again.

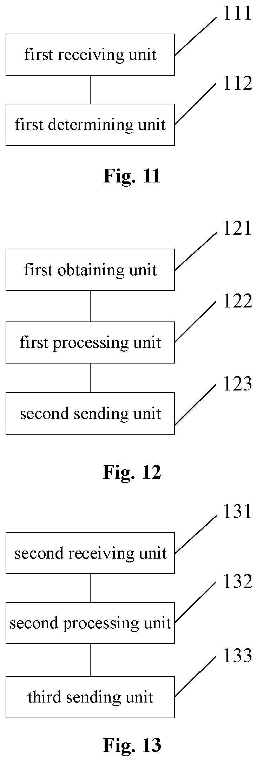

An embodiment of the present disclosure also provides an information processing apparatus, which is applied to a first network-side device, as shown in Fig. 11, including:

a first receiving unit 111, configured to receive at least one measured value instance which is fed back by a terminal and/or a second network-side device according to information of a measurement time window;

a first determining unit 112, configured to determine position information of the terminal according to the at least one measured value instance;

where the information of the measurement time window includes terminal measurement time window information and/or second network-side device measurement time window information;

the first network-side device is a positioning server or other network element capable of determining the position information of the terminal except the positioning server; the second network-side device is a base station or a Transmit and Receive Point (TRP).

According to the embodiments of the information processing apparatus of the present disclosure, at least one measured value instance which is fed back by a terminal and/or a second network-side device according to information of a measurement time window is received, position information of the terminal is determined according to the at least one measured value instance, where the information of the measurement time window includes terminal measurement time window information and/or second network-side device measurement time window information, the first network-side device is a positioning server or other network element capable of determining the position information of the terminal except the positioning server, and the second network-side device is a base station or a TRP. Therefore, the terminal and the second network-side device may measure the measured value within a suitable (i.e., matched) measurement time window to obtain a measured value instance relatively matched in terms of time, so that the first network-side device may estimate the sending and receiving timing error more accurately when determining the position of the terminal (based on the measured value instance), or eliminate the influence of sending and receiving timing error, and avoid the influence of time-varying sending and receiving timing error on the accuracy of terminal position calculation, thereby improving the positioning accuracy of the system, the problem of poor accuracy of the positioning-related information processing scheme in the related art is well solved.

In the embodiment of the present disclosure, the apparatus further includes:

a first sending module, configured to send the information of the measurement time window to the terminal and/or the second network-side device.

The terminal measurement time window information includes time window information for the terminal to measure a Downlink Positioning Reference Signal (DL-PRS) and/or time window information for the terminal to measure other downlink reference signals for positioning except the DL-PRS; and/or the second network-side device measurement time window information includes time window information for the second network-side device to measure a Sounding Reference Signal for Positioning (SRS-Pos) and/or time window information for the second network-side device to measure other uplink reference signals for positioning except the SRS-Pos.

The receiving the at least one measured value instance which is fed back by the terminal and/or the second network-side device according to the information of the measurement time window includes: receiving the at least one measured value instance and a time stamp corresponding to the measured value instance which are fed back by the terminal and/or the second network-side device according to the information of the measurement time window; the determining the position information of the terminal according to the at least one measured value instance includes: obtaining the position information of the terminal according to the at least one measured value instance and the time stamp corresponding to the measured value instance.

In the embodiment of the present disclosure, the at least one measured value instance includes: a terminal measured value instance and/or a second network-side device measured value instance; where the terminal measured value instance includes: a Downlink Reference Signal Time Difference (DL-RSTD), a Downlink Reference Signal Received Power (DL-RSRP), and/or a terminal sending and receiving time difference; and/or, the second network-side device measured value instance includes: an Uplink Time Difference Of Arrival (UL-RTOA), an Uplink Reference Signal Received Power (UL-RSRP), and/or a second network-side device sending and receiving time difference.

The information of the measurement time window includes a duration of the measurement time window; or the information of the measurement time window includes a duration and a start time of the measurement time window; or the information of the measurement time window includes a start time and an end time of the measurement time window.

In the embodiment of the present disclosure, the information of the measurement time window includes Universal Time Coordinated (UTC) information; and/or the information of the measurement time window includes System Frame Number (SFN) information and slot number information.

In the embodiment of the present disclosure, the information of the measurement time window includes a measurement time window index number; where the measurement time window index number corresponds to a set of parameter information of the measurement time window; the parameter information includes a duration of the measurement time window; or a duration and a start time of the measurement time window; or a start time and an end time of the measurement time window.

The duration of the measurement time window corresponding to the terminal measurement time window information is the same as the duration of the measurement time window corresponding to the second network-side device measurement time window information; or the measurement time window index number corresponding to the terminal measurement time window information is the same as the measurement time window index number corresponding to the second network-side device measurement time window information.

In the embodiment of the present disclosure, the information of the measurement time window includes at least one of: a parameter J, where the parameter J represents a quantity of terminal measured value instances within one terminal measurement time window, $J \geq 1$; a parameter $N_i$, where the parameter $N_i$ represents a quantity of DL-PRS resource set instances or DL-PRS measurement occasions configured for an i-th terminal measured value instance, $N_i \geq 1$; a parameter K, where the parameter K represents a quantity of second network-side device measured value instances within one second network-side device measurement time window, $K \geq 1$; and a parameter $M_i$, where the parameter $M_i$ represents a quantity of SRS-Pos resource set instances or SRS-Pos measurement occasions configured for an i-th second network-side device measured value instance, $M_i \geq 1$.

In the embodiment of the present disclosure, the terminal measurement time window information includes a measurement time window duration $MTW_{UE}$ for periodic or semi-persistent DL-PRS; where

$$MTW_{UE} = PD_{DL-PRS} \times \sum_{i=1}^{J_P} N_{Pi}$$

; $PD_{DL-PRS}$ represents a period of DL-PRS; $J_P$ represents a quantity of terminal measured value instances within one terminal measurement time window, $J_P \geq 1$; and $N_{Pi}$ represents a quantity of DL-PRS resource set instances or DL-PRS measurement occasions configured for an i-th terminal measured value instance, $N_{Pi} \geq 1$.

In the embodiment of the present disclosure, the second network-side device measurement time window information includes a measurement time window duration $MTW_{TRP}$ for periodic or semi-persistent SRS-Pos; where

$$MTW_{TRP} = PD_{SRS-Pos} \times \sum_{i=1}^{K_P} M_{Pi}$$

; $PD_{SRS-Pos}$ represents a period of SRS-Pos; $K_P$ represents a quantity of second network-side device measured value instances within one second network-side device measurement time window, $K_P \geq 1$; and $M_{Pi}$ represents a quantity of SRS-Pos resource set instances or SRS-Pos measurement occasions configured for an i-th second network-side device measured value instance, $M_{Pi} \geq 1$.

In the embodiment of the present disclosure, the terminal measurement time window information includes a measurement time window duration $MTW'_{UE}$ for aperiodic DL-PRS; where

$$MTW'_{UE} = LH_{DL-PRS} \times \sum_{i=1}^{J_A} N_{Ai}$$

; $LH_{DL-PRS}$ represents a duration or a quantity of time slots occupied by an aperiodic DL-PRS resource set or DL-PRS measurement occasion; $J_A$ represents a quantity of UE measured value instances within one terminal measurement time window, $J_A \geq 1$; and $N_{Ai}$ represents a quantity of DL-PRS resource set instances or DL-PRS measurement occasions configured for an i-th terminal measured value instance, $N_{Ai} \geq 1$.

One aperiodic DL-PRS measurement occasion corresponds to one aperiodic DL-PRS resource set instance.

In the embodiment of the present disclosure, the second network-side device measurement time window information includes a measurement time window duration $MTW'_{TRP}$ for aperiodic SRS-Pos; where

$$MTW'_{TRP} = LH_{SRS-Pos} \times \sum_{i=1}^{K_A} M_{Ai}$$

; $LH_{SRS-Pos}$ represents a duration or a quantity of time slots occupied by an aperiodic SRS-Pos resource set or SRS-Pos measurement occasion; $K_A$ represents a quantity of second network-side device measured value instances within one second network-side device measurement time window, $K_A \geq 1$; and $M_{Ai}$ represents a quantity of SRS-Pos resource set instances or SRS-Pos measurement occasions configured for an i-th second network-side device measured value instance, $M_{Ai} \geq 1$.

The measurement time window corresponding to the terminal measurement time window information includes at least two DL-PRS resource set instances located in different frequency layers; and/or the measurement time window corresponding to the second network-side device measurement time window information includes at least two SRS-Pos resource set instances located in different Uplink Bandwidth Parts (UL BWP).

In the embodiment of the present disclosure, the sending the information of the measurement time window to the terminal includes: directly sending the information of the measurement time window to the terminal; or, sending the information of the measurement time window to the terminal in response to a first request sent by the terminal; or, sending the information of the measurement time window to the terminal according to the capability information of the terminal.

The sending the information of the measurement time window to the second network-side device includes: directly sending the information of the measurement time window to the second network-side device; or, sending the information of the measurement time window to the second network-side device in response to a second request sent by the second network-side device.

In the embodiment of the present disclosure, the sending the information of the measurement time window to the terminal and/or the second network-side device includes: sending the information of the measurement time window to the terminal through a Long Term Evolution Positioning Protocol (LPP) signaling; and/or, sending the information of the measurement time window to the second network-side device through a New Radio Positioning Protocol A (NRPPa) signaling.

Further, the apparatus further includes: a first configuration unit, configured to, when the terminal measurement time window information includes measurement window information for aperiodic DL-PRS, prior to the sending the information of the measurement time window to the terminal and/or the second network-side device, configure the measurement window information for aperiodic DL-PRS according to first information; where the first information includes aperiodic DL-PRS resource information, aperiodic DL-PRS resource set information and/or aperiodic DL-PRS resource set instance information.

One aperiodic DL-PRS resource set includes at least one aperiodic DL-PRS resource; and/or one aperiodic DL-PRS resource set instance includes at least one aperiodic DL-PRS resource set, and when a quantity of the aperiodic DL-PRS resource set is more than one, all of the aperiodic DL-PRS resource sets are the same, and the aperiodic DL-PRS resource sets are sent at different times.

It is to be explained here that the above-mentioned information processing apparatus provided by the embodiments of the present disclosure can implement all the method steps implemented by the above-mentioned embodiment of the information processing method on the first network-side device side, and can achieve the same technical effect. Here, parts and beneficial effects in this embodiment that are the same as those in the method embodiment will not be described in detail again.

An embodiment of the present disclosure also provides an information processing apparatus, which is applied to a terminal, as shown in Fig. 12 , including:

> a first obtaining unit 121, configured to obtain information of a measurement time window;
> a first processing unit 122, configured to measure a first positioning signal within the corresponding measurement time window according to the information of the measurement time window, to obtain at least one measured value instance; and
> a second sending unit 123, configured to send the at least one measured value instance to a first network-side device;
> where the information of the measurement time window includes terminal measurement time window information;
> the first network-side device is a positioning server or other network element capable of determining position information of the terminal except the positioning server.

According to the embodiments of the information processing apparatus in the present disclosure, information of a measurement time window is obtained, a first positioning signal is measured within the corresponding measurement time window according to the information of the measurement time window, to obtain at least one measured value instance, and the at least one measured value instance is sent to a first network-side device, where the information of the measurement time window includes terminal measurement time window information, the first network-side device is a positioning server or other network element capable of determining position information of the terminal except the positioning server. Therefore, the terminal and the second network-side device may measure the measured value within a suitable (i.e., matched) measurement time window to obtain a measured value instance relatively matched in terms of time, so that the first network-side device may estimate the sending and receiving timing error more accurately when determining the position of the terminal (based on the measured value instance), or eliminate the influence of sending and receiving timing error, and avoid the influence of time-varying sending and receiving timing error on the accuracy of terminal position calculation, thereby improving the positioning accuracy of the system, the problem of poor accuracy of the positioning-related information processing scheme in the related art is well solved.

In the embodiment of the present disclosure, In the embodiment of the present disclosure, the sending the at least one measured value instance to the first network-side device includes: sending at least one measurement report to the first network-side device within a measurement time window corresponding to the terminal measurement time window information; where the measurement report carries at least one measured value instance.

The obtaining the information of the measurement time window includes: receiving the information of the measurement time window sent by the first network-side device; or configuring the information of the measurement time window autonomously by the terminal.

Further, the obtaining the information of the measurement time window further includes: obtaining the information of the measurement time window of different second network-side devices; where the information of the measurement time window of different second network-side devices is the same or different.

The terminal measurement time window information includes time window information for the terminal to measure a Downlink Positioning Reference Signal (DL-PRS) and/or time window information for the terminal to measure other downlink reference signals for positioning except the DL-PRS; the first positioning signal includes a DL-PRS and/or the other downlink reference signals for positioning.

The sending the at least one measured value instance to the first network-side device includes: sending, through the transceiver, the at least one measured value instance and a time stamp corresponding to the measured value instance to the first network-side device.

In the embodiment of the present disclosure, the at least one measured value instance includes a terminal measured value instance; where the terminal measured value instance includes: a Downlink Reference Signal Time Difference (DL-RSTD), a Downlink Reference Signal Received Power (DL-RSRP), and/or a terminal sending and receiving time difference.

In the embodiment of the present disclosure, the information of the measurement time window includes a duration of the measurement time window; or the information of the measurement time window includes a duration and a start time of the measurement time window; or the information of the measurement time window includes a start time and an end time of the measurement time window.

In the embodiment of the present disclosure, the information of the measurement time window includes Universal Time Coordinated (UTC) information; and/or the information of the measurement time window includes System Frame Number (SFN) information and slot number information.

In the embodiment of the present disclosure, the information of the measurement time window includes a measurement time window index number; where the measurement time window index number corresponds to a set of parameter information of the measurement time window; the parameter information includes a duration of the measurement time window, or a duration and a start time of the measurement time window, or a start time and an end time of the measurement time window.

The duration of the measurement time window corresponding to the terminal measurement time window information is the same as the duration of the measurement time window corresponding to the second network-side device measurement time window information; or the measurement time window index number corresponding to the terminal measurement time window information is the same as the measurement time window index number corresponding to the second network-side device measurement time window information.

In the embodiment of the present disclosure, the information of the measurement time window includes at least one of: a parameter J, where the parameter J represents a quantity of terminal measured value instances within one terminal measurement time window, $J \geq 1$; a parameter $N_i$, where the parameter $N_i$ represents a quantity of DL-PRS resource set instances or DL-PRS measurement occasions configured for an i-th terminal measured value instance, $N_i \geq 1$; a parameter K, where the parameter K represents a quantity of second network-side device measured value instances within one second network-side device measurement time window, $K \geq 1$; and a parameter $M_i$, where the parameter $M_i$ represents a quantity of SRS-Pos resource set instances or SRS-Pos measurement occasions configured for an i-th second network-side device measured value instance, $M_i \geq 1$.

In the embodiment of the present disclosure, the terminal measurement time window information includes a measurement time window duration $MTW_{UE}$ for periodic or semi-persistent DL-PRS; where

$$MTW_{UE} = PD_{DL-PRS} \times \sum_{i=1}^{J_P} N_{Pi}$$

; $PD_{DL-PRS}$ represents a period of DL-PRS; $J_P$ represents a quantity of terminal measured value instances within one terminal measurement time window, $J_P \geq 1$; and $N_{Pi}$ represents a quantity of DL-PRS resource set instances or DL-PRS measurement occasions configured for an i-th terminal measured value instance, $N_{Pi} \geq 1$.

In the embodiment of the present disclosure, the terminal measurement time window information includes a measurement time window duration $MTW'_{UE}$ for aperiodic DL-PRS; where

$$MTW'_{UE} = LH_{DL-PRS} \times \sum_{i=1}^{J_A} N_{Ai}$$

; $LH_{DL-PRS}$ represents a duration or a quantity of time slots occupied by an aperiodic DL-PRS resource set or DL-PRS measurement occasion; $J_A$ represents a quantity of UE measured value instances within one terminal measurement time

window, $J_A \geq 1$; and $N_{Ai}$ represents a quantity of DL-PRS resource set instances or DL-PRS measurement occasions configured for an i-th terminal measured value instance, $N_{Ai} \geq 1$.

One aperiodic DL-PRS measurement occasion corresponds to one aperiodic DL-PRS resource set instance.

In the embodiment of the present disclosure, the measurement time window corresponding to the terminal measurement time window information includes at least two DL-PRS resource set instances located in different frequency layers.

In the embodiment of the present disclosure, the receiving the information of the measurement time window sent by the first network-side device includes: receiving the information of the measurement time window directly sent by the first network-side device; or, sending a first request to the first network-side device; receiving the information of the measurement time window sent by the first network-side device in response to the first request; or, sending capability information of the terminal to the first network-side device, and receiving the information of the measurement time window sent by the first network-side device in response to the capability information.

In the embodiment of the present disclosure, the receiving the information of the measurement time window sent by the first network-side device includes: receiving the information of the measurement time window sent by the first network-side device through a Long Term Evolution Positioning Protocol (LPP) signaling.

In the embodiment of the present disclosure, when the terminal measurement time window information includes measurement window information for aperiodic DL-PRS, the configuring the information of the measurement time window autonomously by the terminal includes: configuring the measurement window information for aperiodic DL-PRS according to first information; where the first information includes aperiodic DL-PRS resource information, aperiodic DL-PRS resource set information and/or aperiodic DL-PRS resource set instance information.

One aperiodic DL-PRS resource set includes at least one aperiodic DL-PRS resource; and/or one aperiodic DL-PRS resource set instance includes at least one aperiodic DL-PRS resource set, and when a quantity of the aperiodic DL-PRS resource set is more than one, all of the aperiodic DL-PRS resource sets are the same, and the aperiodic DL-PRS resource sets are sent at different times.

In the embodiment of the present disclosure, whether the terminal is capable of being configured with a measurement time window corresponding to the terminal measurement time window information and measuring the first positioning signal within the measurement time window is a terminal capability.

What needs to be explained here is that the above-mentioned information processing apparatus provided by the embodiment of the present disclosure can realize all the method steps realized by the above-mentioned embodiment of the terminal-side information processing method, and can achieve the same technical effect. The parts and beneficial effects in the example that are the same as those in the method embodiment will be described in detail.

An embodiment of the present disclosure further provides an information processing apparatus, which is applied to a second network-side device, as shown in Fig. 13 , including:

a second receiving unit 131, configured to receive information of a measurement time window sent by a first network-side device;

a second processing unit 132, configured to measure a second positioning signal within the corresponding measurement time window according to the information of the measurement time window, to obtain at least one measured value instance; and

a third sending unit 133, configured to send the at least one measured value instance to a first network-side device;

where the information of the measurement time window includes second network-side device measurement time window information;

the first network-side device is a positioning server or other network element capable of determining position information of the terminal except the positioning server; the second network-side device is a base station or a Transmit and Receive Point (TRP).

According to the embodiments of the information processing apparatus of the present disclosure, information of a measurement time window sent by a first network-side device is received; a second positioning signal is measured within the corresponding measurement time window according to the information of the measurement time window, to obtain at least one measured value instance; and the at least one measured value instance is sent to a first network-side device; where the information of the measurement time window includes second network-side device measurement time window information; the first network-side device is a positioning server or other network element capable of determining position information of the terminal except the positioning server; the second network-side device is a base station or a Transmit and Receive Point (TRP). Therefore, the terminal and the second network-side device may measure the measured value within a suitable (i.e., matched) measurement time window to obtain a measured value instance relatively matched in terms of time, so that the first network-side device may estimate the sending and receiving timing error more accurately when determining the position of the terminal (based on the measured value instance), or eliminate the influence of sending and receiving timing error, and avoid the influence of time-varying sending and receiving timing error on the accuracy of terminal position calculation, thereby improving the positioning accuracy of the system, the problem of poor accuracy of the positioning-related information processing scheme in the related art is well solved.

In the embodiment of the present disclosure, the sending the at least one measured value instance to the first network-side device includes: sending, through the transceiver, at least one measurement report to the first network-side device within a measurement time window corresponding to the second network-side device measurement time window information; where the measurement report carries at least one measured value instance.

In the embodiment of the present disclosure, the receiving the information of the measurement time window sent by the first network-side device includes: receiving the information of the measurement time window of different terminals sent by the first network-side device; where the information of the measurement time window of different terminals is the same or different.

The second network-side device measurement time window information includes time window information for the network-side device to measure a Sounding Reference Signal for Positioning (SRS-Pos) and/or time window information for the network-side device to measure other uplink reference signals for positioning except the SRS-Pos; the second positioning signal includes SRS-Pos and/or the other uplink reference signals for positioning.

In the embodiment of the present disclosure, the sending the at least one measured value instance to the first network-side device includes: sending the at least one measured value instance and a time stamp corresponding to the measured value instance to the first network-side device.

In the embodiment of the present disclosure, the at least one measured value instance includes a second network-side device measured value instance; where the second network-side device measured value instance includes: an Uplink Time Difference Of Arrival (UL-RTOA), an Uplink Reference Signal Received Power (UL-RSRP), and/or a second network-side device sending and receiving time difference.

The information of the measurement time window includes a duration of the measurement time window; or the information of the measurement time window includes a duration and a start time of the measurement time window; or the information of the measurement time window includes a start time and an end time of the measurement time window.

In the embodiment of the present disclosure, the information of the measurement time window includes Universal Time Coordinated (UTC) information; and/or the information of the measurement time window includes System Frame Number (SFN) information and slot number information.

In the embodiment of the present disclosure, the information of the measurement time window includes a measurement time window index number; where the measurement time window index number corresponds to a set of parameter information of the measurement time window; the parameter information includes a duration of the measurement time window; or a duration and a start time of the measurement time window; or a start time and an end time of the measurement time window.

The duration of the measurement time window corresponding to the terminal measurement time window information is the same as the duration of the measurement time window corresponding to the second network-side device measurement time window information; or the measurement time window index number corresponding to the terminal measurement time window information is the same as the measurement time window index number corresponding to the second network-side device measurement time window information.

In the embodiment of the present disclosure, the information of the measurement time window includes at least one of: a parameter J, where the parameter J represents a quantity of terminal measured value instances within one terminal measurement time window, $J \geq 1$; a parameter $N_i$, where the parameter $N_i$ represents a quantity of DL-PRS resource set instances or DL-PRS measurement occasions configured for an i-th terminal measured value instance, $N_i \geq 1$; a parameter K, where the parameter K represents a quantity of second network-side device measured value instances within one second network-side device measurement time window, $K \geq 1$; and a parameter $M_i$, where the parameter $M_i$ represents a quantity of SRS-Pos resource set instances or SRS-Pos measurement occasions configured for an i-th second network-side device measured value instance, $M_i \geq 1$.

In the embodiment of the present disclosure, the second network-side device measurement time window information includes a measurement time window duration $MTW_{TRP}$ for periodic or semi-persistent SRS-Pos; where $MTW_{TRP} = PD_{SRS-Pos} \times \sum_{i=1}^{K_P} M_{Pi}$; $PD_{SRS-Pos}$ represents a period of SRS-Pos; $K_P$ represents a quantity of second network-side device measured value instances within one second network-side device measurement time window, $K_P \geq 1$; and $M_{Pi}$ represents a quantity of SRS-Pos resource set instances or SRS-Pos measurement occasions configured for an i-th second network-side device measured value instance, $M_{Pi} \geq 1$.

In the embodiment of the present disclosure, the second network-side device measurement time window information includes a measurement time window duration $MTW'_{TRP}$ for aperiodic SRS-Pos; where $MTW'_{TRP} = LH_{SRS-Pos} \times \sum_{i=1}^{K_A} M_{Ai}$; $LH_{SRS-Pos}$

represents a duration or a quantity of time slots occupied by an aperiodic SRS-Pos resource set or SRS-Pos measurement occasion; $K_A$ represents a quantity of second network-side device measured value instances within one second network-side device measurement time window, $K_A \geq 1$; and $M_{Ai}$ represents a quantity of SRS-Pos resource set instances or SRS-Pos measurement occasions configured for an i-th second network-side device measured value instance, $M_{Ai} \geq 1$.

Optionally, the measurement time window corresponding to the second network-side device measurement time window information includes at least two SRS-Pos resource set instances located in different Uplink Bandwidth Parts (UL BWP).

In the embodiment of the present disclosure, the receiving the information of the measurement time window sent by the first network-side device includes: receiving, through the transceiver, the information of the measurement time window directly sent by the first network-side device; or, sending, through the transceiver, a second request to the first network-side device, receiving the information of the measurement time window sent by the first network-side device in response to the second request.

In the embodiment of the present disclosure, the receiving the information of the measurement time window sent by the first network-side device includes: receiving, through the transceiver, the information of the measurement time window sent by the first network-side device through a New Radio Positioning Protocol A (NRPPa) signaling.

What needs to be explained here is that the above-mentioned information processing apparatus provided by the embodiments of the present disclosure can implement all the method steps implemented by the above-mentioned embodiment of the information processing method on the second network-side device side, and can achieve the same technical effect. Herein Parts and beneficial effects in this embodiment that are the same as those in the method embodiment will not be described in detail again.

It should be noted that the division of the units in the embodiment of the present disclosure is schematic, and is only a logical function division, and there may be another division manner in actual implementation. In addition, each functional unit in each embodiment of the present disclosure may be integrated into one processing unit, each unit may exist separately physically, or two or more units may be integrated into one unit. The above-mentioned integrated units can be implemented in the form of hardware or in the form of software functional units.

If the integrated unit is realized in the form of a software function unit and sold or used as an independent product, it can be stored in a processor-readable storage medium. Based on such an understanding, the essence of the technical solution of the present disclosure or the part that contributes to the related technology or all or part of the technical solution can be embodied in the form of a software product, and the computer software product is stored in a storage medium. Several instructions are included to make a computer device (which may be a personal computer, a server, or a network device, etc.) or a processor (processor) execute all or part of the steps of the methods described in various embodiments of the present disclosure. The aforementioned storage media include: U disk, mobile hard disk, read-only memory (Read-Only Memory, ROM), random access memory (Random Access Memory, RAM), magnetic disk or optical disk and other media that can store program codes..

A processor-readable storage medium is further provided in an embodiment of the present disclosure, where the processor-readable storage medium stores a computer program, and the computer program is configured to enable the processor to perform the information processing method at the first network-side device side; or,

the computer program is configured to enable the processor to perform the information processing method at the terminal side; or,
the computer program is configured to enable the processor to perform the information processing method at the second network-side device side.

The processor-readable storage medium can be any available medium or data storage device that can be accessed by a processor, including but not limited to magnetic storage (such as floppy disk, hard disk, magnetic tape, magneto-optical disk (MO), etc.), optical storage (such as CD, DVD, BD, HVD, etc.), and semiconductor memory (such as ROM, EPROM, EEPROM, non-volatile memory (NAND FLASH), solid-state drive (SSD)), etc.

The embodiments of the above-mentioned information processing method on the device side of the first network-side, the terminal side or the device side of the second network-side are all applicable to the embodiment of the processor-readable storage medium, and can also achieve the same technical effect.

Those skilled in the art should understand that the embodiments of the present disclosure may be provided as methods, systems, or computer program products. Accordingly, the present disclosure can take the form of an entirely hardware embodiment, an entirely software embodiment, or an embodiment combining software and hardware aspects. Furthermore, the present disclosure may take the form of a computer program product embodied on one or more computer-usable storage media (including but not limited to magnetic disk storage, optical storage, etc.) having computer-usable program code embodied therein.

The present disclosure is described with reference to flowchart illustrations and/or block diagrams of methods, apparatus (systems), and computer program products according to embodiments of the present disclosure. It should be understood that each procedure and/or block in the flowchart and/or block diagrams, and combinations of procedures and/or blocks in the flowchart and/or block diagrams can be implemented by computer-executable instructions. These computer-executable instructions can be provided to a general purpose computer, special purpose computer, embedded processor, or processor of other programmable data processing equipment to produce a machine, such that instructions executed by the processor of the computer or other programmable data processing equipment produce Means for realizing the functions specified in one or more procedures of a flowchart and/or one or more blocks of a block diagram.

These processor-executable instructions may also be stored in a processor-readable memory capable of directing a computer or other programmable data processing device to operate in a specific manner, such that the instructions stored in the processor-readable memory produce a manufacturing product, the instruction device realizes the function specified in one or more procedures of the flow chart and/or one or more blocks of the block diagram.

These processor-executable instructions can also be loaded onto a computer or other programmable data processing device, to enable a series of operational steps to be performed on the computer or other programmable device to produce a computer-implemented process, so the instructions executed on the computer or other programmable device provide steps for implementing the functions specified in the flowchart procedure or procedures and/or block diagram procedures or blocks.

It should be noted that it should be understood that the division of the above modules is only a division of logical functions, and may be fully or partially integrated into a physical entity or physically separated during actual implementation. And these modules can all be implemented in the form of calling software through processing elements; they can also be implemented in the form of hardware; some modules can also be implemented in the form of calling software through processing elements, and some modules can be implemented in the form of hardware. For example, a certain module can be a separate processing element, or it can be integrated into a chip of the above-mentioned device. In addition, it can also be stored in the memory of the above-mentioned device in the form of program code, and processed by one of the above-mentioned devices. The component invokes and executes the functions of the modules identified above. The implementation of other modules is similar. In addition, all or part of these modules can be integrated together, and can also be implemented independently. The processing element mentioned here may be an integrated circuit with signal processing capabilities. In the implementation process, each step of the above method or each module above can be completed by an integrated logic circuit of hardware in the processor element or an instruction in the form of software.

For example, each module, unit, subunit or submodule may be one or more integrated circuits configured to implement the above method, for example: one or more Application Specific Integrated Circuits (ASIC), or, one or multiple microprocessors (digital signal processor, DSP), or, one or more Field Programmable Gate Arrays, (FPGA), etc. For another example, when one of the above modules is implemented in the form of a processing element scheduling program code, the processing element may be a general-purpose processor, such as a Central Processing Unit (CPU) or other processors that can call program codes. For another example, these modules can be integrated together and implemented in the form of a system-on-a-chip (SOC).

The terms "first", "second" and the like in the specification and claims of the present disclosure are configured to distinguish similar objects, and are not necessarily configured to describe a specific order or sequence. It should be understood that the data so used may be interchanged under appropriate circumstances such that the embodiments of the disclosure described herein are practiced, for example, in sequences other than those illustrated or described herein. Furthermore, the terms "including" and "having", as well as any variations thereof, are intended to cover a non-exclusive inclusion, for example, a process, method, system, product or device including a sequence of steps or elements is not necessarily limited to the expressly listed instead, may include other steps or elements not explicitly listed or inherent to the process, method, product or apparatus. In addition, the use of "and/or" in the description and claims means at least one of the connected objects, such as A and/or B and/or C, means that it includes A alone, B alone, C alone, and both A and B Existence, both B and C exist, both A and C exist, and there are 7 situations where A, B, and C all exist. Similarly, the use of "at least one of A and B" in the present specification and claims should be understood as "A alone, B alone, or both A and B exist".

Obviously, those skilled in the art can make various changes and modifications to the present disclosure without departing from the scope of the present disclosure. Thus, if these modifications and variations of the present disclosure fall within the scope of the claims of the present disclosure and equivalent technologies thereof, the present disclosure also intends to include these modifications and variations.

**Claims**

1. An information processing method, applied to a first network-side device, comprising:

    receiving at least one measured value instance which is fed back by a terminal and/or a second network-side device according to information of a measurement time window;

determining position information of the terminal according to the at least one measured value instance;

wherein the information of the measurement time window comprises terminal measurement time window information and/or second network-side device measurement time window information;

the first network-side device is a positioning server or other network element capable of determining the position information of the terminal except the positioning server; the second network-side device is a base station or a Transmit and Receive Point (TRP).

2. The information processing method according to claim 1, further comprising:
sending the information of the measurement time window to the terminal and/or the second network-side device.

3. The information processing method according to claim 1, wherein the terminal measurement time window information comprises time window information for the terminal to measure a Downlink Positioning Reference Signal (DL-PRS) and/or time window information for the terminal to measure other downlink reference signals for positioning except the DL-PRS; and/or
the second network-side device measurement time window information comprises time window information for the second network-side device to measure a Sounding Reference Signal for Positioning (SRS-Pos) and/or time window information for the second network-side device to measure other uplink reference signals for positioning except the SRS-Pos.

4. The information processing method according to claim 1, wherein the receiving the at least one measured value instance which is fed back by the terminal and/or the second network-side device according to the information of the measurement time window comprises:

receiving the at least one measured value instance and a time stamp corresponding to the measured value instance which are fed back by the terminal and/or the second network-side device according to the information of the measurement time window;

the determining the position information of the terminal according to the at least one measured value instance comprises:

obtaining the position information of the terminal according to the at least one measured value instance and the time stamp corresponding to the measured value instance.

5. The information processing method according to claim 1, wherein the at least one measured value instance comprises: a terminal measured value instance and/or a second network-side device measured value instance;

wherein the terminal measured value instance comprises: a Downlink Reference Signal Time Difference (DL-RSTD), a Downlink Reference Signal Received Power (DL-RSRP), and/or a terminal sending and receiving time difference; and/or,

the second network-side device measured value instance comprises: an Uplink Time Difference Of Arrival (UL-RTOA), an Uplink Reference Signal Received Power (UL-RSRP), and/or a second network-side device sending and receiving time difference.

6. The information processing method according to claim 1, wherein

the information of the measurement time window comprises a duration of the measurement time window; or

the information of the measurement time window comprises a duration and a start time of the measurement time window; or

the information of the measurement time window comprises a start time and an end time of the measurement time window.

7. The information processing method according to claim 1, wherein

the information of the measurement time window comprises Universal Time Coordinated (UTC) information; and/or

the information of the measurement time window comprises System Frame Number (SFN) information and slot number information.

8. The information processing method according to claim 1, wherein the information of the measurement time window comprises a measurement time window index number;

wherein the measurement time window index number corresponds to a set of parameter information of the measurement time window;

the parameter information comprises a duration of the measurement time window; or a duration and a start time of the measurement time window; or a start time and an end time of the measurement time window.

9. The information processing method according to claim 1, wherein the information of the measurement time window comprises at least one of:

a parameter J, wherein the parameter J represents a quantity of terminal measured value instances within one terminal measurement time window, $J \geq 1$;

a parameter $N_i$, wherein the parameter $N_i$ represents a quantity of DL-PRS resource set instances or DL-PRS measurement occasions configured for an i-th terminal measured value instance, $N_i \geq 1$;

a parameter K, wherein the parameter K represents a quantity of second network-side device measured value instances within one second network-side device measurement time window, $K \geq 1$; and

a parameter $M_i$, wherein the parameter $M_i$ represents a quantity of SRS-Pos resource set instances or SRS-Pos measurement occasions configured for an i-th second network-side device measured value instance, $M_i \geq 1$.

10. The information processing method according to claim 1, 3 or 9, wherein the terminal measurement time window information comprises a measurement time window duration $MTW_{UE}$ for periodic or semi-persistent DL-PRS; wherein

$$MTW_{UE} = PD_{DL-PRS} \times \sum_{i=1}^{J_P} N_{Pi};$$

$PD_{DL-PRS}$ represents a period of DL-PRS;
$J_P$ represents a quantity of terminal measured value instances within one terminal measurement time window, $J_P \geq 1$; and
$N_{Pi}$ represents a quantity of DL-PRS resource set instances or DL-PRS measurement occasions configured for an i-th terminal measured value instance, $N_{Pi} \geq 1$.

11. The information processing method according to claim 1 or 3 or 9, wherein the second network-side device measurement time window information comprises a measurement time window duration $MTW_{TRP}$ for periodic or semi-persistent SRS-Pos; wherein

$$MTW_{TRP} = PD_{SRS-Pos} \times \sum_{i=1}^{K_P} M_{Pi};$$

$PD_{SRS-Pos}$ represents a period of SRS-Pos;
$K_P$ represents a quantity of second network-side device measured value instances within one second network-side device measurement time window, $K_P \geq 1$; and
$M_{Pi}$ represents a quantity of SRS-Pos resource set instances or SRS-Pos measurement occasions configured for an i-th second network-side device measured value instance, $M_{Pi} \geq 1$.

12. The information processing method according to claim 1 or 3 or 9, wherein the terminal measurement time window information comprises a measurement time window duration $MTW'_{UE}$ for aperiodic DL-PRS; wherein

$$MTW'_{UE} = LH_{DL-PRS} \times \sum_{i=1}^{J_A} N_{Ai};$$

$LH_{DL-PRS}$ represents a duration or a quantity of time slots occupied by an aperiodic DL-PRS resource set or DL-PRS measurement occasion;
$J_A$ represents a quantity of UE measured value instances within one terminal measurement time window, $J_A \geq 1$; and
$N_{Ai}$ represents a quantity of DL-PRS resource set instances or DL-PRS measurement occasions configured for an i-th terminal measured value instance, $N_{Ai} \geq 1$.

13. The information processing method according to claim 1 or 3 or 9, wherein the second network-side device measurement time window information comprises a measurement time window duration $MTW'_{TRP}$ for aperiodic SRS-Pos; wherein

$$MTW'_{TRP} = LH_{SRS-Pos} \times \sum_{i=1}^{K_A} M_{Ai};$$

$LH_{SRS-Pos}$ represents a duration or a quantity of time slots occupied by an aperiodic SRS-Pos resource set or SRS-Pos measurement occasion;
$K_A$ represents a quantity of second network-side device measured value instances within one second network-side device measurement time window, $K_A \geq 1$; and
$M_{Ai}$ represents a quantity of SRS-Pos resource set instances or SRS-Pos measurement occasions configured for an i-th second network-side device measured value instance, $M_{Ai} \geq 1$.

14. The information processing method according to claim 1 or 3, wherein the measurement time window corresponding to the terminal measurement time window information comprises at least two DL-PRS resource set instances located in different frequency layers; and/or
the measurement time window corresponding to the second network-side device measurement time window information comprises at least two SRS-Pos resource set instances located in different Uplink Bandwidth Parts (UL BWP).

**15.** The information processing method according to claim 2, wherein when the terminal measurement time window information comprises measurement window information for aperiodic DL-PRS, prior to the sending the information of the measurement time window to the terminal and/or the second network-side device, the method further comprises:

configuring the measurement window information for aperiodic DL-PRS according to first information;

wherein the first information comprises aperiodic DL-PRS resource information, aperiodic DL-PRS resource set information and/or aperiodic DL-PRS resource set instance information.

**16.** The information processing method according to claim 15, wherein one aperiodic DL-PRS resource set comprises at least one aperiodic DL-PRS resource; and/or one aperiodic DL-PRS resource set instance comprises at least one aperiodic DL-PRS resource set, and when a quantity of the aperiodic DL-PRS resource set is more than one, all of the aperiodic DL-PRS resource sets are the same, and the aperiodic DL-PRS resource sets are sent at different times.

**17.** An information processing method, applied to a terminal, comprising:

obtaining information of a measurement time window;

measuring a first positioning signal within the corresponding measurement time window according to the information of the measurement time window, to obtain at least one measured value instance; and

sending the at least one measured value instance to a first network-side device;

wherein the information of the measurement time window comprises terminal measurement time window information;

the first network-side device is a positioning server or other network element capable of determining position information of the terminal except the positioning server.

**18.** The information processing method according to claim 17, wherein the sending the at least one measured value instance to the first network-side device comprises:

sending at least one measurement report to the first network-side device within a measurement time window corresponding to the terminal measurement time window information;

wherein the measurement report carries at least one measured value instance.

**19.** The information processing method according to claim 17, wherein the obtaining the information of the measurement time window comprises:

receiving the information of the measurement time window sent by the first network-side device; or

configuring the information of the measurement time window autonomously by the terminal.

**20.** The information processing method according to claim 19, wherein the obtaining the information of the measurement time window further comprises:

obtaining the information of the measurement time window of different second network-side devices;

wherein the information of the measurement time window of different second network-side devices is the same or different.

**21.** The information processing method according to claim 17, wherein the terminal measurement time window information comprises time window information for the terminal to measure a Downlink Positioning Reference Signal (DL-PRS) and/or time window information for the terminal to measure other downlink reference signals for positioning except the DL-PRS; the first positioning signal comprises a DL-PRS and/or the other downlink reference signals for positioning.

**22.** The information processing method according to claim 17, wherein the sending the at least one measured value instance to the first network-side device comprises:

sending the at least one measured value instance and a time stamp corresponding to the measured value instance to the first network-side device.

**23.** The information processing method according to claim 17, wherein the at least one measured value instance comprises a terminal measured value instance;

wherein the terminal measured value instance comprises: a Downlink Reference Signal Time Difference (DL-RSTD), a Downlink Reference Signal Received Power (DL-RSRP), and/or a terminal sending and receiving time difference.

**24.** The information processing method according to claim 17, wherein the information of the measurement time window comprises a duration of the measurement time window; or

the information of the measurement time window comprises a duration and a start time of the measurement time window; or

the information of the measurement time window comprises a start time and an end time of the measurement time window.

25. The information processing method according to claim 17, wherein the information of the measurement time window comprises Universal Time Coordinated (UTC) information; and/or
the information of the measurement time window comprises System Frame Number (SFN) information and slot number information.

26. The information processing method according to claim 17, wherein the information of the measurement time window comprises a measurement time window index number;

wherein the measurement time window index number corresponds to a set of parameter information of the measurement time window;
the parameter information comprises a duration of the measurement time window, or a duration and a start time of the measurement time window, or a start time and an end time of the measurement time window.

27. The information processing method according to claim 17, wherein the information of the measurement time window comprises at least one of:

a parameter J, wherein the parameter J represents a quantity of terminal measured value instances within one terminal measurement time window, J≥1;
a parameter $N_i$, wherein the parameter $N_i$ represents a quantity of DL-PRS resource set instances or DL-PRS measurement occasions configured for an i-th terminal measured value instance, $N_i \geq 1$;
a parameter K, wherein the parameter K represents a quantity of second network-side device measured value instances within one second network-side device measurement time window, K≥1; and
a parameter $M_i$, wherein the parameter $M_i$ represents a quantity of SRS-Pos resource set instances or SRS-Pos measurement occasions configured for an i-th second network-side device measured value instance, $M_i \geq 1$.

28. The information processing method according to claim 17 or 21 or 27, wherein the terminal measurement time window information comprises a measurement time window duration $MTW_{UE}$ for periodic or semi-persistent DL-PRS;
wherein

$$MTW_{UE} = PD_{DL-PRS} \times \sum_{i=1}^{J_P} N_{Pi};$$

$PD_{DL\text{-}PRS}$ represents a period of DL-PRS;
$J_P$ represents a quantity of terminal measured value instances within one terminal measurement time window, $J_P \geq 1$; and
$N_{Pi}$ represents a quantity of DL-PRS resource set instances or DL-PRS measurement occasions configured for an i-th terminal measured value instance, $N_{Pi} \geq 1$.

29. The information processing method according to claim 17 or 21 or 27, wherein the terminal measurement time window information comprises a measurement time window duration $MTW'_{UE}$ for aperiodic DL-PRS;
wherein

$$MTW'_{UE} = LH_{DL-PRS} \times \sum_{i=1}^{J_A} N_{Ai};$$

$LH_{DL\text{-}PRS}$ represents a duration or a quantity of time slots occupied by an aperiodic DL-PRS resource set or DL-PRS measurement occasion;
$J_A$ represents a quantity of UE measured value instances within one terminal measurement time window, $J_A \geq 1$; and
$N_{Ai}$ represents a quantity of DL-PRS resource set instances or DL-PRS measurement occasions configured for an i-th terminal measured value instance, $N_{Ai} \geq 1$.

30. The information processing method according to claim 17 or 21, wherein the measurement time window corresponding to the terminal measurement time window information comprises at least two DL-PRS resource set instances located in different frequency layers.

31. The information processing method according to claim 19, wherein when the terminal measurement time window information comprises measurement window information for aperiodic DL-PRS, the configuring the information of the measurement time window autonomously by the terminal comprises:

configuring the measurement window information for aperiodic DL-PRS according to first information;
wherein the first information comprises aperiodic DL-PRS resource information, aperiodic DL-PRS resource set information and/or aperiodic DL-PRS resource set instance information.

32. The information processing method according to claim 31, wherein one aperiodic DL-PRS resource set comprises at least one aperiodic DL-PRS resource; and/or
one aperiodic DL-PRS resource set instance comprises at least one aperiodic DL-PRS resource set, and when a quantity of the aperiodic DL-PRS resource set is more than one, all of the aperiodic DL-PRS resource sets are the same, and the aperiodic DL-PRS resource sets are sent at different times.

33. An information processing method, applied to a second network-side device, comprising:

receiving information of a measurement time window sent by a first network-side device;
measuring a second positioning signal within the corresponding measurement time window according to the information of the measurement time window, to obtain at least one measured value instance; and
sending the at least one measured value instance to a first network-side device;
wherein the information of the measurement time window comprises second network-side device measurement time window information; the first network-side device is a positioning server or other network element capable of determining position information of the terminal except the positioning server; the second network-side device is a base station or a Transmit and Receive Point (TRP).

34. The information processing method according to claim 33, wherein the sending the at least one measured value instance to the first network-side device comprises:

sending at least one measurement report to the first network-side device within a measurement time window corresponding to the second network-side device measurement time window information;
wherein the measurement report carries at least one measured value instance.

35. The information processing method according to claim 33, wherein the receiving the information of the measurement time window sent by the first network-side device comprises:

receiving the information of the measurement time window of different terminals sent by the first network-side device;
wherein the information of the measurement time window of different terminals is the same or different.

36. The information processing method according to claim 33, wherein the second network-side device measurement time window information comprises time window information for the network-side device to measure a Sounding Reference Signal for Positioning (SRS-Pos) and/or time window information for the network-side device to measure other uplink reference signals for positioning except the SRS-Pos; the second positioning signal comprises SRS-Pos and/or the other uplink reference signals for positioning.

37. The information processing method according to claim 33, wherein the sending the at least one measured value instance to the first network-side device comprises:
sending the at least one measured value instance and a time stamp corresponding to the measured value instance to the first network-side device.

38. The information processing method according to claim 33, wherein the at least one measured value instance comprises a second network-side device measured value instance;
wherein the second network-side device measured value instance comprises: an Uplink Time Difference Of Arrival (UL-RTOA), an Uplink Reference Signal Received Power (UL-RSRP), and/or a second network-side device sending and receiving time difference.

39. The information processing method according to claim 33, wherein

the information of the measurement time window comprises a duration of the measurement time window; or
the information of the measurement time window comprises a duration and a start time of the measurement time window; or
the information of the measurement time window comprises a start time and an end time of the measurement time window.

40. The information processing method according to claim 33, wherein

the information of the measurement time window comprises Universal Time Coordinated (UTC) information; and/or
the information of the measurement time window comprises System Frame Number (SFN) information and slot number information.

41. The information processing method according to claim 33, wherein the information of the measurement time window comprises a measurement time window index number;

wherein the measurement time window index number corresponds to a set of parameter information of the measurement time window;
the parameter information comprises a duration of the measurement time window; or a duration and a start time of the measurement time window; or a start time and an end time of the measurement time window.

42. The information processing method according to claim 33, wherein the information of the measurement time window comprises at least one of:

a parameter J, wherein the parameter J represents a quantity of terminal measured value instances within one terminal measurement time window, $J\geq 1$;
a parameter $N_i$, wherein the parameter $N_i$ represents a quantity of DL-PRS resource set instances or DL-PRS measurement occasions configured for an i-th terminal measured value instance, $N_i\geq 1$;
a parameter K, wherein the parameter K represents a quantity of second network-side device measured value instances within one second network-side device measurement time window, $K\geq 1$; and
a parameter $M_i$, wherein the parameter $M_i$ represents a quantity of SRS-Pos resource set instances or SRS-Pos measurement occasions configured for an i-th second network-side device measured value instance, $M_i\geq 1$.

43. The information processing method according to claim 33 or 36 or 42, wherein the second network-side device measurement time window information comprises a measurement time window duration $MTW_{TRP}$ for periodic or semi-persistent SRS-Pos; wherein

$$MTW_{TRP} = PD_{SRS-Pos} \times \sum_{i=1}^{K_P} M_{Pi};$$

$PD_{SRS\text{-}Pos}$ represents a period of SRS-Pos;
$K_P$ represents a quantity of second network-side device measured value instances within one second network-side device measurement time window, $K_P\geq 1$; and
$M_{Pi}$ represents a quantity of SRS-Pos resource set instances or SRS-Pos measurement occasions configured for an i-th second network-side device measured value instance, $M_{Pi}\geq 1$.

44. The information processing method according to claim 33 or 36 or 42, wherein the second network-side device measurement time window information comprises a measurement time window duration $MTW'_{TRP}$ for aperiodic SRS-Pos; wherein

$$MTW'_{TRP} = LH_{SRS-Pos} \times \sum_{i=1}^{K_A} M_{Ai};$$

$LH_{SRS\text{-}Pos}$ represents a duration or a quantity of time slots occupied by an aperiodic SRS-Pos resource set or SRS-Pos measurement occasion;
$K_A$ represents a quantity of second network-side device measured value instances within one second network-side device measurement time window, $K_A\geq 1$; and
$M_{Ai}$ represents a quantity of SRS-Pos resource set instances or SRS-Pos measurement occasions configured for an i-th second network-side device measured value instance, $M_{Ai}\geq 1$.

45. The information processing method according to claim 33 or 36, wherein the measurement time window corresponding to the second network-side device measurement time window information comprises at least two SRS-Pos resource set instances located in different Uplink Bandwidth Parts (UL BWP).

46. A network-side device, wherein the network-side device is a first network-side device, and comprises a memory, a transceiver, and a processor;
wherein the memory is configured to store computer programs; the transceiver is configured to send and receive data under a control of the processor; the processor is configured to read the computer programs in the memory to perform:

receiving, through the transceiver, at least one measured value instance which is fed back by a terminal and/or a second network-side device according to information of a measurement time window;
determining position information of the terminal according to the at least one measured value instance;
wherein the information of the measurement time window comprises terminal measurement time window information and/or second network-side device measurement time window information;
the first network-side device is a positioning server or other network element capable of determining the position information of the terminal except the positioning server; the second network-side device is a base station or a Transmit and Receive Point (TRP).

47. A terminal, comprising a memory, a transceiver, and a processor;
wherein the memory is configured to store computer programs; the transceiver is configured to send and receive data under a control of the processor; the processor is configured to read the computer programs in the memory to perform:

obtaining information of a measurement time window;

measuring a first positioning signal within the corresponding measurement time window according to the information of the measurement time window, to obtain at least one measured value instance; and

sending, through the transceiver, the at least one measured value instance to a first network-side device;

wherein the information of the measurement time window comprises terminal measurement time window information;

the first network-side device is a positioning server or other network element capable of determining position information of the terminal except the positioning server.

48. A network-side device, wherein the network-side device is a second network-side device, and comprises a memory, a transceiver, and a processor:

wherein the memory is configured to store computer programs; the transceiver is configured to send and receive data under a control of the processor; the processor is configured to read the computer programs in the memory to perform:

receiving, through the transceiver, information of a measurement time window sent by a first network-side device;

measuring a second positioning signal within the corresponding measurement time window according to the information of the measurement time window, to obtain at least one measured value instance; and

sending, through the transceiver, the at least one measured value instance to a first network-side device;

wherein the information of the measurement time window comprises second network-side device measurement time window information;

the first network-side device is a positioning server or other network element capable of determining position information of the terminal except the positioning server; the second network-side device is a base station or a Transmit and Receive Point (TRP).

49. An information processing apparatus, applied to a first network-side device, comprising:

a first receiving unit, configured to receive at least one measured value instance which is fed back by a terminal and/or a second network-side device according to information of a measurement time window;

a first determining unit, configured to determine position information of the terminal according to the at least one measured value instance;

wherein the information of the measurement time window comprises terminal measurement time window information and/or second network-side device measurement time window information;

the first network-side device is a positioning server or other network element capable of determining the position information of the terminal except the positioning server; the second network-side device is a base station or a Transmit and Receive Point (TRP).

50. An information processing apparatus, applied to a terminal, comprising:

a first obtaining unit, configured to obtain information of a measurement time window;

a first processing unit, configured to measure a first positioning signal within the corresponding measurement time window according to the information of the measurement time window, to obtain at least one measured value instance; and

a second sending unit, configured to send the at least one measured value instance to a first network-side device;

wherein the information of the measurement time window comprises terminal measurement time window information;

the first network-side device is a positioning server or other network element capable of determining position information of the terminal except the positioning server.

51. An information processing apparatus, applied to a second network-side device, comprising:

a second receiving unit, configured to receive information of a measurement time window sent by a first network-side device;

a second processing unit, configured to measure a second positioning signal within the corresponding measurement time window according to the information of the measurement time window, to obtain at least one measured value instance; and

a third sending unit, configured to send the at least one measured value instance to a first network-side device;

wherein the information of the measurement time window comprises second network-side device measurement time window information;

the first network-side device is a positioning server or other network element capable of determining position information of the terminal except the positioning server; the second network-side device is a base station or a Transmit and Receive Point (TRP).

52. A processor-readable storage medium, wherein the processor-readable storage medium stores a computer program, and the computer program is configured to enable the processor to perform the information processing method according to any one of claims 1 to 16; or,

the computer program is configured to enable the processor to perform the information processing method according to any one of claims 17 to 32; or, the computer program is configured to enable the processor to perform the information processing method according to any one of claims 33 to 45.

network-side
device

terminal ↔ terminal

**Fig. 1**

receiving at least one measured value instance which is fed back by a terminal and/or a second network-side device according to information of a measurement time window _/ 21

↓

determining position information of the terminal according to the at least one measured value instance; where the information of the measurement time window includes terminal measurement time window information and/or second network-side device measurement time window information; the first network-side device is a positioning server or other network element capable of determining the position information of the terminal except the positioning server; the second network-side device is a base station or a TRP _/ 22

**Fig. 2**

obtaining information of a measurement time window — 31

measuring a first positioning signal within the corresponding measurement time window according to the information of the measurement time window, to obtain at least one measured value instance — 32

sending the at least one measured value instance to a first network-side device; where the information of the measurement time window includes terminal measurement time window information; the first network-side device is a positioning server or other network element capable of determining position information of the terminal except the positioning server — 33

**Fig. 3**

receiving information of a measurement time window sent by a first network-side device — 41

measuring a second positioning signal within the corresponding measurement time window according to the information of the measurement time window, to obtain at least one measured value instance — 42

sending the at least one measured value instance to a first network-side device; where the information of the measurement time window includes second network-side device measurement time window information; the first network-side device is a positioning server or other network element capable of determining position information of the terminal except the positioning server; the second network-side device is a base station or a TRP — 43

**Fig. 4**

Fig. 5

Fig. 6

Fig. 7

**Fig. 8**

**Fig. 9**

**Fig. 10**

first receiving unit — 111

first determining unit — 112

**Fig. 11**

first obtaining unit — 121

first processing unit — 122

second sending unit — 123

**Fig. 12**

second receiving unit — 131

second processing unit — 132

third sending unit — 133

**Fig. 13**

## INTERNATIONAL SEARCH REPORT

| International application No. |
|---|
| **PCT/CN2022/078262** |

**A. CLASSIFICATION OF SUBJECT MATTER**

H04W 4/02(2018.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNTXT; VCN; WPABSC; ENTXTC; VEN; 3GPP: 时间, 间隔, 时长, 窗, 周期, 测量, 实例, 定位, 上行, 下行, 报告, 时间戳, time, interval, duration, period, window, measurement, instance, positioning, uplink, downlink, report, timestamp, PRS, SRS

**C. DOCUMENTS CONSIDERED TO BE RELEVANT**

| Category* | Citation of document, with indication, where appropriate, of the relevant passages | Relevant to claim No. |
|---|---|---|
| PX | CATT. "Discussion on accuracy improvements by mitigating UE Rx/Tx and/or gNB Rx/Tx timing delays" *3GPP TSG RAN WG1 Meeting #104b-e R1-2102635*, 07 April 2021 (2021-04-07), section 2 | 1-52 |
| X | CATT. "FL Summary #5 for accuracy improvements by mitigating UE Rx/Tx and/or gNB Rx/Tx timing delays" *3GPP TSG RAN WG1 Meeting #104-e R1-2102204*, 08 February 2021 (2021-02-08), sections 2.1 and 4.1 | 1-52 |
| X | WO 2020191646 A1 (NOKIA SHANGHAI BELL CO., LTD. et al.) 01 October 2020 (2020-10-01) description, paragraphs [0038]-[0141] | 1-10, 12, 14-32, 46-47, 49-50, 52 |
| X | WO 2013141771 A1 (TELEFONAKTIEBOLAGET LM ERICSSON (PUBL)) 26 September 2013 (2013-09-26) description, page 10, line 34 to page 28, line 33 | 1-8, 14, 33-41, 45-46, 48-49, 51-52 |
| A | CN 111586831 A (HUAWEI TECHNOLOGIES CO., LTD.) 25 August 2020 (2020-08-25) entire document | 1-52 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 April 2022** | **25 April 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/078262**

| Patent document cited in search report | | | Publication date (day/month/year) | Patent family member(s) | | | Publication date (day/month/year) |
|---|---|---|---|---|---|---|---|
| WO | 2020191646 | A1 | 01 October 2020 | CN | 113632549 | A | 09 November 2021 |
| WO | 2013141771 | A1 | 26 September 2013 | EP | 2829134 | A1 | 28 January 2015 |
| CN | 111586831 | A | 25 August 2020 | WO | 2020164345 | A1 | 20 August 2020 |
| | | | | US | 2021377774 | A1 | 02 December 2021 |
| | | | | EP | 3923644 | A1 | 15 December 2021 |
| | | | | IN | 202117040538 | A | 24 December 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110358440